(19) Europäisches Patentamt
European Patent Office
Office européen des brevets

(11) EP 4 134 382 B1

(12) **EUROPEAN PATENT SPECIFICATION**

(45) Date of publication and mention of the grant of the patent:
**07.05.2025 Bulletin 2025/19**

(21) Application number: **21785487.6**

(22) Date of filing: **05.04.2021**

(51) International Patent Classification (IPC):
***C08C 19/00*** (2006.01) ***C08C 19/02*** (2006.01)
***C08C 19/22*** (2006.01) ***C08C 19/25*** (2006.01)
***C08C 19/28*** (2006.01) ***C08F 236/10*** (2006.01)
***C08L 15/00*** (2006.01) ***C08K 3/00*** (2018.01)

(52) Cooperative Patent Classification (CPC):
(C-Sets available)
**C08C 19/02; C08C 19/22; C08C 19/25; C08F 236/10; C08K 3/04; C08K 3/36;** Y02T 10/86
(Cont.)

(86) International application number:
**PCT/JP2021/014550**

(87) International publication number:
**WO 2021/206068 (14.10.2021 Gazette 2021/41)**

(54) **HYDROGENATED CONJUGATED DIENE-BASED POLYMER, HYDROGENATED CONJUGATED DIENE-BASED POLYMER COMPOSITION, RUBBER COMPOSITION, AND METHOD FOR PRODUCING HYDROGENATED CONJUGATED DIENE-BASED POLYMER**

HYDRIERTES KONJUGIERTES DIEN-BASIERTES POLYMER, HYDRIERTE KONJUGIERTE DIEN-BASIERTE POLYMERZUSAMMENSETZUNG UND KAUTSCHUKZUSAMMENSETZUNG SOWIE VERFAHREN ZUR HERSTELLUNG EINES HYDRIERTEM KONJUGIERTEN DIEN-BASIERTEN POLYMERS

POLYMÈRE HYDROGÉNÉ À BASE DE DIÈNE CONJUGUÉ, COMPOSITION DE POLYMÈRE HYDROGÉNÉ À BASE DE DIÈNE CONJUGUÉ, COMPOSITION DE CAOUTCHOUC ET MÉTHODE DE PRODUCTION DE POLYMÈRE HYDROGÉNÉ À BASE DE DIÈNE CONJUGUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2020 JP 2020068479**
**06.04.2020 JP 2020068489**

(43) Date of publication of application:
**15.02.2023 Bulletin 2023/07**

(73) Proprietor: **Asahi Kasei Kabushiki Kaisha**
**Tokyo 1000006 (JP)**

(72) Inventors:
- **YASUMOTO, Atsushi**
  **Tokyo 100-0006 (JP)**
- **HISAMURA, Kenta**
  **Tokyo 100-0006 (JP)**
- **KIKUCHI, Akitomo**
  **Tokyo 100-0006 (JP)**
- **KONDO, Tomohiro**
  **Tokyo 100-0006 (JP)**
- **ARAKI, Yoshifumi**
  **Tokyo 100-0006 (JP)**

(74) Representative: **Strehl & Partner mbB**
**Maximilianstrasse 54**
**80538 München (DE)**

(56) References cited:
**EP-A1- 2 134 784**
**EP-A1- 3 502 144**
**WO-A1-2009/060931**
**WO-A1-2018/034194**
**JP-A- 2011 089 086**
**JP-A- 2013 100 449**
**JP-A- 2019 183 101**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/04, C08L 15/00;**
**C08K 3/36, C08L 15/00**

**Description**

Technical Field

The present invention relates to a hydrogenated conjugated diene-based polymer, a hydrogenated conjugated diene-based polymer composition, a rubber composition, and a method for producing a hydrogenated conjugated diene-based polymer.

Background Art

In recent years, there have been increasing demands for reduction of fuel consumption in vehicles from the viewpoint of environmental load. In particular, it is required, in vehicle tires, to improve low fuel consumption performance of materials used in a tread portion in direct contact with the ground.

In recent years, development of a material having low rolling resistance, namely, having a low hysteresis loss property, has been required.

At the same time, there is a trend toward tire weight reduction, and for reducing the weight of a tire, it is necessary to reduce the thickness of a tread portion having a high material ratio and in contact with the ground, and hence, there is a demand for a rubber material more excellent in breaking strength, elongation at break, and abrasion resistance than before.

Besides, in order to reduce energy loss caused by a tire during vehicle driving, as a rubber material used in a tire tread, a material having low rolling resistance, namely, having a low hysteresis loss property, is demanded.

On the other hand, from the viewpoint of safety, a rubber material is required to be excellent in steering stability and wet skid resistance, and to have practically sufficient fracture strength.

A rubber material satisfying the above-described requirements can be, for example, a rubber composition containing a rubber-like polymer, and a reinforcing filler such as carbon black or silica.

When a rubber material containing silica is used, balance between a low hysteresis loss property (index of low fuel consumption performance) and wet skid resistance can be improved. Besides, when a functional group having affinity or reactivity with silica is introduced into a molecular end of a rubber-like polymer having high mobility, dispersibility of silica in a rubber material can be improved, and furthermore, the mobility of the molecular end of the rubber-like polymer can be reduced through a bond to a silica particle, and thus a hysteresis loss can be reduced.

On the other hand, as a method for improving breaking strength, elongation at break, and abrasion resistance, a method in which a molecular weight is increased can be employed. When the molecular weight is increased, however, processability in kneading a rubber-like polymer and a reinforcing filler tends to be degraded.

In consideration of these circumstances, attempts to introduce a branch structure into a rubber-like polymer for increasing the molecular weight, or to introduce hydrogenation technology are being made for improving breaking strength, elongation at break, and abrasion resistance without impairing processability.

For example, Patent Documents 1 to 3 propose a composition of a modified conjugated diene-based polymer obtained by reacting an alkoxysilane having an amino group with a conjugated diene-based polymer active end, and silica.

List of Prior Art Documents

Patent Document

Patent Document 1: Japanese Patent Laid-Open No. 2005-290355
Patent Document 2: Japanese Patent Laid-Open No. 11-189616
Patent Document 3: Japanese Patent Laid-Open No. 2003-171418

EP 3 502 144 A1 discloses a modified conjugated diene-based polymer having a nitrogen atom, a modification ratio of 75% by mass or more based on a total amount of a conjugated diene-based polymer, a weight average molecular weight of 200,000 or more and 3,000,000 or less and a branching degree of 8 or more. The modified conjugated diene-based polymer can be hydrogenated.

WO 2018/034194 A1 (EP 3 502 145 A1) discloses a modified conjugated diene-based polymer having a modification ratio of 30% by mass or more and less than 70% by mass, a weight average molecular weight of 200,000 or more and 2,000,000 or less and a branching degree of 8 or more. The modified conjugated diene-based polymer can be hydrogenated.

JP 2011 089086 A discloses a modified copolymer obtained by copolymerizing styrene and/or 1,3-butadiene with

an alkoxysilylstyrene and further modifying at least one end with a modifying agent having a functional group containing at least one atom selected from nitrogen, oxygen, and silicon, and having a weight average molecular weight Mw of 100.000 to 2.500.000. The modified copolymer can be hydrogenated.

## Summary of Invention

### Problems to be Solved by Invention

Silica has, however, a disadvantage of being inferior in dispersibility in a composition to carbon black because it has a hydrophilic surface and hence has low affinity with a conjugated diene-based polymer while carbon black has a hydrophobic surface. Therefore, a composition containing silica needs to additionally contain a silane modifier or the like to impart a bond between the silica and the conjugated diene-based polymer for improving the dispersibility in the composition.

Besides, when a functional group having high reactivity with silica is introduced into a molecular end of the conjugated diene-based polymer, processability tends to be degraded, for example, it becomes difficult to knead because a reaction with a silica particle proceeds during kneading process to increase the viscosity of a resultant composition, or surface coarseness or sheet breakage is easily caused when formed into a sheet after the kneading.

In addition, when such a composition is used to obtain a vulcanizate, in particular, used to obtain a vulcanizate containing an inorganic filler such as silica, abrasion resistance, and the balance between a low hysteresis loss property and wet skid resistance are not sufficient.

Also when the hydrogenation technology is introduced, the viscosity of the conjugated diene-based polymer is increased through the hydrogenation, and the viscosity of the resultant composition is largely increased depending on the molecular weight, branch structure, and modification of a hydrogenated conjugated diene-based polymer, and as a result, processability tends to be degraded, for example, it becomes difficult to knead, or surface coarseness or sheet breakage is easily caused when formed into a sheet after the kneading.

Besides, when polymer chains are less entangled in the conjugated diene-based polymer or the hydrogenated conjugated diene-based polymer, a phenomenon designated as cold flow that a rubber bale flows during storage at room temperature to lose the shape occurs, which degrades handleability in use.

Therefore, an object of the present invention is to provide a hydrogenated conjugated diene-based polymer, a hydrogenated conjugated diene-based polymer composition, and a rubber composition that are extremely excellent in processability obtained when used for obtaining a vulcanizate with cold flow of a rubber bale suppressed, and when in the form of a vulcanizate, are excellent in breaking strength, elongation at break, and fracture performance.

### Means for Solving Problems

The present inventors have made earnest studies to solve the above-described problems of the related arts, and as a result, it has been found that a hydrogenated conjugated diene-based polymer having a branch number (Bn) and a hydrogenation rate respectively falling in specific ranges is extremely excellent in processability obtained when used for obtaining a vulcanizate with cold flow of a rubber bale suppressed, and when in the form of a vulcanizate, are excellent in breaking strength, elongation at break, and fracture performance, and thus, the present invention has been accomplished.

Specifically, the present invention is set out in the appended claims.

### Advantages of Invention

According to the present invention, a hydrogenated conjugated diene-based polymer that can suppress cold flow of a rubber bale, has extremely excellent processability when used for obtaining a vulcanizate, and when in the form of a vulcanizate, has particularly excellent breaking strength, elongation at break, and fracture performance can be obtained.

## Mode for Carrying Out Invention

Now, an embodiment for practicing the present invention (hereinafter referred to as the "present embodiment") will be described in detail.

It is noted that the following present embodiment is merely an example for describing the present invention and the present invention is not limited to the following description but may be variously modified within the scope thereof.

### [Hydrogenated Conjugated Diene-based Polymer]

A hydrogenated conjugated diene-based polymer of the present embodiment has a branch number (hereinafter

also referred to as the "Bn"), measured by the viscosity detector-equipped GPC (gel permeation chromatography)-light scattering measurement, of 2.5 or more, and a hydrogenation rate of a structural unit derived from a conjugated diene compound (hereinafter also simply referred to as the "hydrogenation rate") of 30 to 99%.

The hydrogenated conjugated diene-based polymer specified in the hydrogenation rate and the branch number (Bn) as described above can suppress cold flow of a rubber bale, is extremely excellent in processability obtained when used for obtaining a vulcanizate, and when in the form of a vulcanizate, is excellent in fracture performances such as breaking strength and elongation at break.

In the hydrogenated conjugated diene-based polymer of the present embodiment, when an amount of 1,2-vinyl bond in a conjugated diene bond unit and an amount of an aromatic vinyl compound are optionally adjusted with the hydrogenation rate and the branch number (Bn) specified, a glass transition temperature (hereinafter also referred to as the "Tg") of the hydrogenated conjugated diene-based polymer can be arbitrarily adjusted with attaining extremely excellent processability when used for obtaining a vulcanizate, and when in the form of a vulcanizate, with improving fracture performances such as breaking strength and elongation at break.

For example, when the amount of 1,2-vinyl bond in a conjugated diene bond unit and the amount of an aromatic vinyl compound are set to be small, the Tg of the conjugated diene-based polymer is lowered, and hence, abrasion resistance and fracture strength when in the form of a vulcanizate are improved, and there is a tendency that a rubber composition further excellent in a low hysteresis loss property can be obtained.

Alternatively, when the amount of 1,2-vinyl bond in a conjugated diene bond unit and the amount of an aromatic vinyl compound are set to be large, the Tg of the conjugated diene-based polymer is increased, and hence, processability obtained when used for obtaining a vulcanizate is improved, and there is a tendency that a rubber composition further excellent in wet skid resistance can be obtained.

(Conjugated Diene Compound)

The hydrogenated conjugated diene-based polymer of the present embodiment contains a structural unit derived from a conjugated diene compound (hereinafter also referred to as the "conjugated diene monomer"). Specific examples of the conjugated diene compound are not especially limited, and include 1,3-butadiene, isoprene, 2,3-dimethyl-1,3-butadiene, 1,3-pentadiene, 3-methyl-1,3-pentadiene, 1,3-hexadiene, and 1,3-heptadiene. Among these, from the viewpoint of industrial availability, 1,3-butadiene and isoprene are preferred, and 1,3-butadiene is particularly preferred.

One of these may be singly used, or two or more of these may be used together.

Besides, the hydrogenated conjugated diene-based polymer of the present embodiment preferably contains a structural unit derived from an aromatic vinyl compound (hereinafter also referred to as the "aromatic vinyl monomer"). Even when the hydrogenated conjugated diene-based polymer of the present embodiment contains a structural unit derived from an aromatic vinyl compound, it is preferable that a hydrogenated portion is a portion derived from the conjugated diene compound, and that a portion derived from the aromatic vinyl compound is not hydrogenated. Specific examples of the aromatic vinyl compound are not especially limited, and include styrene, p-methylstyrene, $\alpha$-methylstyrene, vinylethylbenzene, vinylxylene, vinylnaphthalene, and diphenylethylene. Among these, from the viewpoint of industrial availability, styrene is preferred.

One of these may be singly used, or two or more of these may be used together.

Besides, the hydrogenated conjugated diene-based polymer of the present embodiment is preferably a hydrogenated product of a copolymer of a conjugated diene compound and an aromatic vinyl compound (hereinafter also referred to as the "conjugated diene-aromatic vinyl copolymer").

As for what is called a microstructure of the copolymer of a conjugated diene compound and an aromatic vinyl compound (a content of the aromatic vinyl monomer, and a ratio of the amount of 1,2-vinyl bond), the content of the aromatic vinyl monomer is preferably 0 to 60% by mass, more preferably 3 to 60% by mass, and further preferably 5 to 40% by mass, and the ratio of the amount of 1,2-vinyl bond in the conjugated diene bond unit in the conjugated diene-based polymer (the amount of 1,2-vinyl bond) is preferably 15 to 70% by mol, more preferably 22 to 65% by mol, and further preferably 24 to 60% by mol.

In the hydrogenated conjugated diene-based polymer of the present embodiment, the branch number is controlled in accordance with an amount of a polymerization initiator to be added, the type (the number of functional groups) and an amount of a branching agent to be added, the type (the number of functional groups) and an amount of a coupling agent to be added, and an amount (type) of a rubber softener to be added, and is not largely affected by the microstructure. Therefore, the microstructure can be appropriately designed within a general range. The content of the aromatic vinyl monomer and the amount of 1,2-vinyl bond affect, however, the Tg of the hydrogenated conjugated diene-based polymer as described above, and hence are preferably set to fall in the above-described ranges from the viewpoint of low fuel consumption performance and brake performance.

Here, the content of the aromatic vinyl monomer can be measured by $^1$H-NMR. Specifically, the measurement is performed in accordance with a method described in examples below.

Here, if the conjugated diene-based polymer is a copolymer of butadiene and styrene, the amount of bound vinyl (the amount of 1,2-vinyl bond) in a butadiene bond unit can be obtained by Hampton method (R. R. Hampton, Analytical Chemistry, 21, 923 (1949)).

If the hydrogenated conjugated diene-based polymer of the present invention is a hydrogenated product of a conjugated diene-aromatic vinyl copolymer, it preferably contains a few or no blocks in which 30 or more aromatic vinyl monomers are chained. More specifically, if the copolymer is a butadiene-styrene copolymer, in employing a known method in which the copolymer is decomposed by Kolthoff method (a method described by I. M. Kolthoff, et al., J. Polym. Sci. 1, 429 (1946)) to analyze the amount of polystyrene insoluble in methanol, a ratio of blocks in each of which 30 or more aromatic vinyl monomers are chained is preferably 10.0% by mass or less, and more preferably 5.0% by mass or less based on the total amount of the copolymer.

If the hydrogenated conjugated diene-based polymer of the present embodiment is a hydrogenated product of a conjugated diene-aromatic vinyl copolymer, a larger proportion of aromatic vinyl monomers is preferably present singly from the viewpoint of improvement of low fuel consumption performance.

Specifically, if the copolymer is a butadiene-styrene copolymer, when the copolymer is decomposed by employing a method through ozonolysis known as a method of Tanaka et al., (Polymer, 22, 1721 (1981)) to analyze a styrene chain distribution by GPC, it is preferable that the amount of isolated styrene, based on the total amount of bound styrene, is 40% by mass or more, and that the amount of a chain styrene structure consisting of 8 or more chained styrene is 5.0% by mass or less.

In this case, a vulcanized rubber to be obtained preferably attains a particularly low hysteresis loss.

(Hydrogenation Reaction)

The hydrogenated conjugated diene-based polymer of the present embodiment is obtained by hydrogenating a conjugated diene-based polymer described below. A method for hydrogenating a conjugated diene portion of the conjugated diene-based polymer is not especially limited, and any of known methods can be employed.

As a suitable hydrogenation method, a method in which the hydrogenation is performed by blowing gaseous hydrogen into a polymer solution in the presence of a catalyst can be employed.

The catalyst is not especially limited, and examples include heterogeneous catalysts such as a catalyst containing a noble metal supported on a porous inorganic substance; and homogenous catalysts such as a catalyst obtained by reacting a solubilized salt of nickel, cobalt or the like with organic aluminum or the like, and a catalyst using metallocene such as titanocene. Among these catalysts, from the viewpoint that a mild hydrogenation condition can be selected, a titanocene catalyst is preferably used.

For the hydrogenation reaction, either of batch process and continuous process may be employed, or a combination of these may be employed.

As for a hydrogenation rate of the hydrogenated conjugated diene-based polymer of the present embodiment, a hydrogenation rate of a structural unit derived from a conjugated diene compound (for example, butadiene) is 30% or more and less than 99%, preferably 30% or more and less than 96%, more preferably 30% or more and less than 93%, further preferably 30% or more and less than 90%, and particularly preferably 32% or more and less than 90%. When the hydrogenation rate of the structural unit derived from a conjugated diene compound is 30% or more, the hydrogenated conjugated diene-based polymer of the present embodiment is excellent in breaking strength and elongation at break when in the form of a vulcanizate, and when the hydrogenation rate of the structural unit derived from a conjugated diene compound is less than 99%, crosslink density obtained after vulcanization is improved, and breaking strength and low fuel consumption performance when in the form of a vulcanizate are excellent.

On the other hand, from the viewpoint of low fuel consumption performance, the hydrogenation rate of the hydrogenated conjugated diene-based polymer of the present embodiment is preferably 80% or less, more preferably 75% or less, further preferably less than 75%, and particularly preferably less than 72%. From the viewpoint of strength such as breaking strength and elongation at break, the hydrogenation rate is preferably 39% or more, preferably 40% or more, more preferably 45% or more, further preferably 50% or more, and particularly preferably 55% or more. When the hydrogenation rate is within a range of 39 to 80%, a loss elastic modulus is reduced by a butylene chain generated through the hydrogenation, and in addition, increase of the loss elastic modulus caused by an ethylene chain can be suppressed, and therefore, the low fuel consumption performance can be probably improved with strength retained at a good level.

A hydrogenated conjugated diene-based polymer to be compounded in a tire is varied in required functions depending on the relationship with another component to be compounded in the tire, and the molecular weight, the hydrogenation rate and the microstructure may be designed in accordance with necessary performances. For example, if strength such as breaking strength and elongation at break is required, the hydrogenation rate is preferably 65% or more, more preferably 70% or more, further preferably 75% or more, and particularly preferably 80% or more. On the other hand, if the hydrogenation rate is as high as over 85%, it may be difficult, in some cases, to exhibit desired low fuel consumption performance depending on the composition of another material to be contained in the tire. Therefore, from the viewpoint of

design balanced between fuel efficiency and strength, the hydrogenation rate is set preferably to 39 to 80%.

Besides, if the hydrogenation rate is as high as over 75%, the viscosity may be increased to deteriorate processability in some cases. Therefore, if the hydrogenation rate is desired to be increased beyond 75%, a weight average molecular weight is preferably 1,200,000 or less, more preferably 1,000,000 or less, further preferably 800,000 or less, and particularly preferably 600,000 or less from the viewpoints of viscosity and processability. In addition, if the hydrogenation rate is desired to be increased beyond 75%, from the viewpoint of suppressing viscosity increase through generation of a crystal component, it is preferrable that an amount of aromatic vinyl is 15% by mass or more, and/or that a total content of structures represented by the above-described formulas (1) and (2) is 35% by mol or more.

For example, as a composition for improving strength such as breaking strength and elongation at break, a resin component having a high glass transition temperature may be compounded in some cases. A combination of the resin component having a high Tg, and a hydrogenated conjugated diene-based polymer having a high hydrogenation rate is preferable from the viewpoint of strength. Preferable examples of the resin component will be described later.

The hydrogenation rate can be controlled in accordance with an amount of hydrogen to be added to the structural unit derived from a conjugated diene compound, a pressure of the hydrogen, a reaction time, an amount of a hydrogenation catalyst to be added, and a solution viscosity.

A temperature in the hydrogenation reaction is not especially limited, and is preferably 60 to 105°C, and more preferably 70 to 100°C.

The hydrogenation rate can be measured by $^{1}$H-NMR described in the examples below.

The hydrogenated conjugated diene-based polymer of the present embodiment contains the structural unit derived from a conjugated diene compound, and assuming that composition ratios (% by mol) of a structural unit represented by the following formula (1), a structural unit represented by the following formula (2), a structural unit represented by the following formula (3), and a structural unit represented by the following formula (4) are a, b, c, and d, respectively, the following expression (S) is preferably satisfied. It is noted that the structural unit represented by the formula (4) includes a 1,4 trans bond and a 1,4 cis bond.

(1) 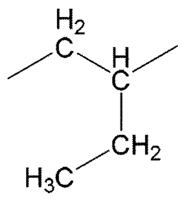 (2) 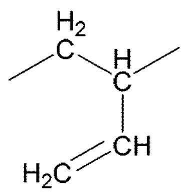

(3) 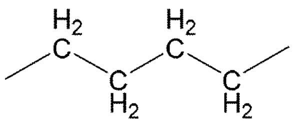 (4) 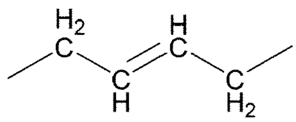

$20 \leq (a + b)/(a + b + c + d) \times 100 \leq 65$ Expression (S) :

The expression (S) represents a weight ratio between 1,2-vinyl bond and hydrogenated 1,2-vinyl bond in the hydrogenated conjugated diene-based polymer. When the expression (S) falls in the range, the hydrogenated conjugated diene-based polymer of the present embodiment is excellent in balance among processability, low fuel consumption performance, and wet grip performance.

The ratios a, b, c, and d can be controlled in accordance with the type and an amount of a polar material to be added, a polymerization temperature and the amount of hydrogen to be reacted in polymerizing a conjugated diene-based polymer before hydrogenation.

If the hydrogenation rate is controlled to be 40% or more and 80% or less, the content of 1,2-vinyl bond is preferably smaller from the viewpoint of heat resistance. More specifically, the composition ratio a is preferably 10% or less, more preferably 8% or less, and further preferably 5% or less.

The hydrogenated conjugated diene-based polymer of the present embodiment contains the structural unit derived from a conjugated diene compound, and assuming that the composition ratios (% by mol) of the structural unit represented by the formula (1) and the structural unit represented by the formula (2) are a and b, respectively, the following expression (T) is preferably satisfied.

$$\text{Expression (T): } 90 \leq (a)/(a + b) \times 100 \leq 100$$

The expression (T) represents a hydrogenation rate of a structure derived from 1,2-vinyl bond, and the value

approximates to 100 as a larger proportion of the 1,2-vinyl bond is hydrogenated. When the expression (T) is 90 or more, the hydrogenated conjugated diene-based polymer of the present embodiment tends to be excellent in heat resistance.

The ratios a and b can be controlled in accordance with the type of a hydrogenation catalyst, a hydrogenation reaction temperature, and the amount of hydrogen to be reacted.

It is noted that the ratios a, b, c, and d of the present embodiment can be measured by a method described in the examples below.

(Branch Number (Bn))

From the viewpoints of suppression of cold flow of a rubber bale and processability, the hydrogenated conjugated diene-based polymer of the present embodiment has a branch number (Bn) measured by viscosity detector-equipped GPC-light scattering measurement (hereinafter, also simply referred to as the "branch number (Bn)") of 2.5 or more, preferably 3.0 or more, more preferably 4.0 or more, further preferably 6.0 or more, further preferably 6.4 or more, still further preferably 8.0 or more, and particularly preferably 14.0 or more.

In the hydrogenated conjugated diene-based polymer of the present embodiment, from the viewpoint of attaining both processability and low fuel consumption performance, it is preferable that the branch number (Bn) is higher as the molecular weight is higher, and that the branch number (Bn) is higher as the hydrogenation rate is higher.

If a titanocene catalyst is used as the hydrogenation catalyst, solution viscosity and melt viscosity are lowered at an initial stage of the hydrogenation by hydrogenating 1,2-vinyl bond, and after the 1,2-vinyl bond has been hydrogenated, the solution viscosity and melt viscosity are increased when 1,4-bond is hydrogenated, and therefore, if a hydrogenated conjugated diene-based polymer having a hydrogenation rate over 75% is to be obtained, the branch number (Bn) is preferably higher because the viscosity tends to be suppressed even when the molecular weight is comparatively high. Even if the hydrogenation rate is over 75%, when the branch number (Bn) is 6 or more, there is a tendency that processability necessary for preparing a composition can be secured. On the other hand, in a region of the hydrogenation rate of 30% or more and 75% or less, the problem of viscosity increase is less likely to occur, high branching is not necessary from the production viewpoint, and hence, if strength is desired to be set high, the branch number (Bn) can be set to 2.5 or more, and is preferably 3.0 or more, and preferably 30 or less, more preferably 20 or less, and further preferably 14 or less.

In the present embodiment, for example, the branch number (Bn) being 2 or more means that the hydrogenated conjugated diene-based polymer of the present embodiment has 2 or more polymer chains as side chains with respect to a substantially longest polymer main chain.

The branch number (Bn) of a hydrogenated conjugated diene-based polymer is defined, by using a contracting factor (g') measured by viscosity detector-equipped GPC-light scattering measurement, as $g' = 6Bn/\{(Bn + 1)(Bn + 2)\}$.

In general, a polymer having a branch tends to have a smaller molecule when compared with a straight-chain polymer having the same absolute molecular weight.

The contracting factor (g') is an index of a size ratio occupied by a molecule to a straight-chain polymer assumed to have the same absolute molecular weight. In other words, when the branch number of a polymer is increased, the contracting factor (g') tends to be reduced.

For the contracting factor, an intrinsic viscosity is used as an index of the size of a molecule in this embodiment, and a straight-chain polymer satisfies the relationship: intrinsic viscosity $[\eta] = 10^{-3.883} M^{0.771}$, wherein M represents an absolute molecular weight.

The contracting factor expresses, however, a decreasing ratio of the size of a molecule and does not accurately express a branch structure of the polymer.

Therefore, the branch number (Bn) of the hydrogenated conjugated diene-based polymer is calculated by using a value of the contracting factor (g') obtained at each absolute molecular weight of the hydrogenated conjugated diene-based polymer. The thus calculated "branch number (Bn)" accurately expresses the number of polymers directly or indirectly bonded to a longest main chain structure.

The calculated branch number (Bn) can be an index expressing a branch structure of a hydrogenated conjugated diene-based polymer.

For example, in a general 4-branched star polymer (having 4 polymer chains connected to a center portion), 2 polymer chain arms are bonded to a longest highly branched main chain structure, and hence the branch number (Bn) is evaluated as 2.

In a general 8-branched star polymer, 6 polymer chain arms are bonded to a longest highly branched main chain structure, and the branch number (Bn) is evaluated as 6.

The hydrogenated conjugated diene-based polymer of the present embodiment has the branch number (Bn) of 2.5 or more, and such a case means that it is a hydrogenated conjugated diene-based polymer having, as a star polymer structure, branches similar to those of a star polymer structure having 4.5 branches on average.

Here, a "branch" is formed by a direct or indirect bond of one polymer to another polymer. Besides, the "branch

number (Bn)" corresponds to the number of polymers directly or indirectly bonded to a longest main chain structure.

When the branch number (Bn) is 2.5 or more, the hydrogenated conjugated diene-based polymer of the present embodiment can suppress cold flow of a rubber bale, is extremely excellent in processability (handleability) obtained when used for obtaining a vulcanizate, and when in the form of a vulcanizate, is excellent in in breaking strength, and elongation at break. From similar points of view, the hydrogenated conjugated diene-based polymer of the present embodiment has the branch number (Bn) of preferably 3.0 or more, more preferably 4.0 or more, further preferably 6.0 or more, further preferably 6.4 or more, still further preferably 8.0 or more, and particularly preferably 14.0 or more.

The upper limit of the branch number (Bn) is not especially limited, and may be equal to or larger than a detection limit, and is preferably 84 or less, more preferably 80 or less, further preferably 64 or less, and still further preferably 57 or less.

If the branch number of the hydrogenated conjugated diene-based polymer of the present embodiment is 84 or less, breaking strength and elongation at break when in the form of a vulcanizate tends to be excellent.

In general, increase of an absolute molecular weight tends to deteriorate processability, and when an absolute molecular weight is increased in a straight chain polymer structure, viscosity obtained when used for obtaining a vulcanizate is largely increased, which largely deteriorates processability.

Therefore, even when a large number of functional groups are introduced into the polymer to improve affinity and/or reactivity with silica to be blended as a filler, the silica cannot be sufficiently dispersed in the polymer in kneading process. As a result, the function of the introduced functional groups cannot be exhibited, and hence, an originally expected effect of improving a low hysteresis loss property and wet skid resistance by the introduction of the functional groups cannot be exhibited.

On the other hand, since the hydrogenated conjugated diene-based polymer of the present embodiment is specified to have a branch number (Bn) of 2.5 or more, the increase of the viscosity obtained when used for obtaining a vulcanizate due to increase of the absolute molecular weight is largely suppressed, and hence, for example, the polymer can be sufficiently mixed with silica or the like in kneading process, so that the silica can be probably dispersed around the hydrogenated conjugated diene-based polymer. As a result, abrasion resistance and fracture strength can be improved by setting a molecular weight of the hydrogenated conjugated diene-based polymer to be high, and in addition, silica can be dispersed around the polymer by sufficient kneading so as to make functional groups to act and/or react, and thus, the polymer can probably attain practically sufficient low hysteresis loss property and wet skid resistance.

The absolute molecular weight of the hydrogenated conjugated diene-based polymer of the present embodiment is preferably 25 x $10^4$ or more and 3,000 x $10^4$ or less, more preferably 26 x $10^4$ or more and 2,500 x $10^4$ or less, and further preferably 28 x $10^4$ or more and 2,000 x $10^4$ or less from the viewpoints of breaking strength, elongation at break, and moldability of a rubber bale in production.

The weight average molecular weight of the hydrogenated conjugated diene-based polymer of the present embodiment is preferably 210,000 or more and less than 3,000,000, more preferably 220,000 or more and 2,500,000 or less, and further preferably 230,000 or more and less than 2,300,000 from the viewpoints of moldability of a rubber bale in production and processability.

A method for controlling the weight average molecular weight to fall in the above-described range is not especially limited, and for example, a method in which the amount of a polymerization initiator to be used is adjusted can be employed.

The weight average molecular weight of the hydrogenated conjugated diene-based polymer of the present embodiment can be measured by a method described in the examples.

The hydrogenated conjugated diene-based polymer of the present embodiment contains a component having a molecular weight of 300,000 or less (hereinafter also referred to as the "component LM") in a ratio of preferably 20% or more and 80% or less, more preferably 20% or more and 75% or less, and further preferably 21% or more and 70% or less from the viewpoints of processability, productivity, and breaking strength.

A method for controlling the ratio of the component LM to fall in the above-described range is not especially limited, and for example, a method in which the amount of a polymerization initiator to be used is adjusted, or a method in which a coupling agent to be used is adjusted can be employed.

The ratio of the component LM in the hydrogenated conjugated diene-based polymer of the present embodiment can be measured by a method described in the examples.

A Mooney viscosity of the hydrogenated conjugated diene-based polymer of the present embodiment measured by using an L-type rotor at 100°C is preferably 120 or less, more preferably 110 or less, further preferably 100 or less, and particularly preferably 90 or less from the viewpoint of suppressing yield reduction caused by generation of a powder in drying process in the production. From the viewpoint of tensile strength, the Mooney viscosity is preferably 30 or more, more preferably 40 or more, and further preferably 50 or more.

A method for controlling the Mooney viscosity obtained by using an L-type rotor at 100°C to fall in the above-described range is not especially limited, and for example, a method in which the amount of a polymerization initiator to be used, the type and the amount of a branching agent to be used, or the type and the amount of a coupling agent to be used is

adjusted can be employed.

Even when the Mooney viscosity is equivalent, the branch number is preferably higher because thus the molecular weight can be increased.

The Mooney viscosity of the hydrogenated conjugated diene-based polymer of the present embodiment measured by using an L-type rotor at 100°C can be measured by a method described in the examples.

The branch number (Bn) of the hydrogenated conjugated diene-based polymer can be controlled to 2.5 or more through a combination of the amount of a branching agent to be added and the amount of a polymer end coupling agent to be added described below. Specifically, the branch number can be controlled in accordance with the number of functional groups of a branching agent, the amount of the branching agent to be added, the timing of adding the branching agent, and the number of functional groups of a coupling agent or a nitrogen atom-containing modifier, and the amount of the coupling agent or the nitrogen atom-containing modifier to be added. More specific description will be given in Method for Producing Hydrogenated Conjugated Diene-based Polymer described below.

(Coupling)

The hydrogenated conjugated diene-based polymer of the present embodiment is preferably a conjugated diene-based polymer obtained by performing a coupling reaction with a branching agent and a tri- or higher functional reactive compound (hereinafter also referred to as the "coupling agent") on an active end of a conjugated diene-based polymer obtained through polymerizing and branching process.

In coupling process, a coupling reaction is caused on an active end of a conjugated diene-based polymer with a coupling agent, or a coupling agent having a nitrogen atom-containing group to obtain a conjugated diene-based polymer. More specific description will be given in Method for Producing Hydrogenated Conjugated Diene-based Polymer described below.

(Coupling Agent)

In the present embodiment, a coupling agent used in the coupling process may have any structure as long as it is a tri- or higher functional reactive compound, and is preferably a tri- or higher functional reactive compound having a silicon atom. More specific description will be given in Method for Producing Hydrogenated Conjugated Diene-based Polymer described below.

The hydrogenated conjugated diene-based polymer of the present embodiment preferably contains a nitrogen atom. A hydrogenated conjugated diene-based polymer containing a nitrogen atom can be obtained, for example, by performing a coupling reaction with a modifier having a nitrogen atom-containing group described below.

(Modifier having Nitrogen Atom-containing Group)

The hydrogenated conjugated diene-based polymer of the present embodiment is more preferably a conjugated diene-based polymer obtained by performing a coupling reaction with a tri- or higher functional reactive compound having a nitrogen atom-containing group (hereinafter also referred to as the "modifier having a nitrogen atom-containing group") on an active end of a conjugated diene-based polymer obtained through the polymerizing and branching process.

In the coupling process, a coupling reaction is caused on an active end of a conjugated diene-based polymer with a coupling agent having a nitrogen atom-containing group to obtain a conjugated diene-based polymer.

When the conjugated diene-based polymer having been coupled with the modifier having a nitrogen atom-containing group is formed into a composition with a filler and the like compounded, there is a tendency that dispersibility of silica is good and hence the composition formed with a filler and the like compounded has good processability, and that abrasion resistance and fracture strength obtained when the compound is formed into a vulcanizate are good, and that balance between a low hysteresis loss property and wet skid resistance is remarkably improved. More specific description will be given in Method for Producing Hydrogenated Conjugated Diene-based Polymer described below.

Examples of the modifier having a nitrogen atom-containing group include, but are not limited to, an isocyanate compound, an isothiocyanate compound, an isocyanuric acid derivative, a nitrogen group-containing carbonyl compound, a nitrogen group-containing vinyl compound, and a nitrogen group-containing epoxy compound.

The modifier having a nitrogen atom-containing group preferably has a nitrogen atom-containing functional group, the nitrogen atom-containing functional group is preferably an amine compound not having active hydrogen, and examples include a tertiary amine compound, a protected amine compound in which the active hydrogen is substituted with a protecting group, an imine compound represented by a general formula -N=C, and an alkoxysilane compound bonded to the nitrogen atom-containing group. More specific description will be given in Method for Producing Hydrogenated Conjugated Diene-based Polymer described below.

(Modification Ratio)

Herein, the term "modification ratio" refers to a mass ratio of a conjugated diene-based polymer or a hydrogenated conjugated diene-based polymer having a nitrogen atom-containing functional group to a total amount of conjugated diene-based polymers or hydrogenated conjugated diene-based polymers.

For example, assuming that a nitrogen atom-containing modifier is reacted with a terminal end, a mass ratio of a conjugated diene-based polymer having a nitrogen atom-containing functional group owing to the nitrogen atom-containing modifier to a total amount of conjugated diene-based polymers is expressed as a modification ratio.

On the other hand, also when a polymer is branched by using a branching agent containing a nitrogen atom, the thus generated conjugated diene-based polymer has a nitrogen atom-containing functional group, and such a branched polymer is also counted in calculation of a modification ratio.

In other words, herein, a mass ratio of a sum of a coupling polymer obtained by using a modifier having a nitrogen atom-containing functional group and/or a branched polymer obtained by using a branching agent having a nitrogen atom-containing functional group corresponds to the "modification ratio".

The hydrogenated conjugated diene-based polymer of the present embodiment is modified in at least one end with a nitrogen atom-containing group, and hence tends to be remarkably improved in balance between a low hysteresis loss property and wet skid resistance with retaining processability obtained in forming a composition with a filler and the like compounded, and abrasion resistance and fracture strength obtained in forming the composition into a vulcanizate.

From the viewpoints of processability, abrasion resistance, fracture strength, and balance between a low hysteresis loss property and wet skid resistance, the hydrogenated conjugated diene-based polymer of the present embodiment has a modification ratio measured by column adsorption GPC (hereinafter also simply referred to as the "modification ratio") to the total amount of the hydrogenated conjugated diene-based polymer of preferably 40% by mass or more.

The modification ratio is preferably 60% by mass or more, more preferably 65% by mass or more, further preferably 70% by mass or more, and still further preferably 80% by mass or more. An upper limit of the modification ratio is not especially limited, and is, for example, 99% by mass.

The modification ratio can be measured by chromatography capable of separating a functional group-containing modified component and a non-modified component.

As a method using the chromatography, a method using a column for gel permeation chromatography using, as a filler, a polar material such as silica adsorbing a specific functional group, for performing quantitative determination using an internal standard of a non-adsorbed component for comparison (column adsorption GPC) can be employed.

More specifically, the modification ratio is obtained by measuring an amount of adsorption onto a silica column based on a difference between a chromatogram measured by using a polystyrene-based gel column and a chromatogram measured by using a silica-based column obtained from a sample solution containing a sample and low molecular weight internal standard polystyrene.

More specifically, the modification ratio is measured by a method described in the examples.

In the hydrogenated conjugated diene-based polymer of the present embodiment, the modification ratio can be controlled by adjusting an amount of a modifier to be added and a reaction method, and thus can be controlled to be 40% by mass or more.

For example, a method in which polymerization is performed by using, as a polymerization initiator, an organolithium compound, described later, having at least one nitrogen atom in a molecule, a method in which a monomer having at least one nitrogen atom in a molecule is copolymerized, and a method in which a modifier having a structural formula described later is used are combined, and polymerization conditions are controlled, and thus, the modification ratio can be obtained.

The term "star polymer structure" used herein refers to a structure in which a plurality of polymer chains (arms) are bonded to one central branch point.

The one central branch point herein has a substituent containing an atom derived from a coupling agent or a nitrogen atom derived from a modifier.

The term "main branch structure" used herein refers to a structure in which a polymer chain forms a branch point in a portion derived from a vinyl-based monomer containing an alkoxysilyl group or a halosilyl group, and a polymer chain (arm) extends from the branch point.

In the conjugated diene-based polymer of the present embodiment, from the viewpoint of improving the branch number (Bn), the number of main chain branch points constituted by the portion derived from a vinyl-based monomer containing an alkoxysilyl group or a halosilyl group is preferably 3 or more, and a branch structure derived from a star polymer structure formed with a coupling agent in reaction step includes preferably 3 or more branches, more preferably 4 or more branches, and further preferably 8 or more branches.

Although the branch number (Bn) is increased both by modification with a coupling agent for obtaining a star structure and by introduction of a branching agent into the polymer, contribution to the branch number (Bn) is larger when a

whole polymer chain is branched by using a coupling agent.

In design of a polymer, the branch number (Bn) can be controlled in accordance with selection of a coupling agent, and setting of selection of the type and the amount of a branching agent, and the branch number (Bn) can be more easily controlled by taking a contribution rate into consideration.

(Main Chain Branch Structure)

The main chain branch structure corresponds to branch points in the portion derived from a vinyl-based monomer containing an alkoxysilyl group or a halosilyl group, and includes 2 or more branch points, preferably 3 or more branch points, and further preferably 4 or more branch points.

The branch point forming the main branch structure has preferably at least 2 or more polymer chains, and more preferably 3 or more polymer chains not corresponding to a main chain.

Particularly in a main chain branch structure containing a vinyl-based monomer containing an alkoxysilyl group or a halosilyl group, a peak derived from the main chain branch structure is detected, in signal detection by $^{29}Si$-NMR, in a range of -45 ppm to - 65 ppm, and more restrictively in a range of -50 ppm to - 60 ppm.

(Star Polymer Structure)

The hydrogenated conjugated diene-based polymer of the present embodiment preferably contains a star polymer structure, and the number of branches derived from the star polymer structure is preferably 3 or more, more preferably 4 or more, further preferably 6 or more, and still further preferably 8 or more. The upper limit of the number of branches derived from the star polymer structure is not especially limited, and is, for example, 32 or less.

It is preferable that the hydrogenated conjugated diene-based polymer of the present embodiment contains a star polymer structure containing 3 or more branches, that at least one branched chain of the star structure contains a portion derived from a vinyl-based monomer containing an alkoxysilyl group or a halosilyl group, and that the portion derived from the vinyl-based monomer containing an alkoxysilyl group or a halosilyl group further contains a main chain branch structure. As a method for obtaining such a hydrogenated conjugated diene-based polymer, the "star polymer structure" can be formed by adjusting the number of functional groups of a coupling agent and the amount of the coupling agent to be added, and the "main chain branch structure" can be controlled by adjusting the number of functional groups of a branching agent, the amount of the branching agent to be added, and timing of adding the branching agent.

In order to obtain a hydrogenated conjugated diene-based polymer having a star polymer structure having 3 or more branches in which at least one branched chain of the star structure contains a portion derived from a vinyl-based monomer containing an alkoxysilyl group or a halosilyl group, and the portion derived from a vinyl-based monomer containing the alkoxysilyl group or the halosilyl group further containing a main chain branch structure, for example, a method in which polymerization is performed by using an organolithium-based compound as a polymerization initiator, a branching agent for imparting a specific branch point is added during or after the polymerization, and modification is performed by using a modifier for imparting a specific branching ratio after continuation of the polymerization can be employed.

Control means for such polymerization conditions will be described later as a production method in the examples.

(Detailed Structure of Main Chain Branch Structure)

In the hydrogenated conjugated diene-based polymer of the present embodiment, the portion derived from a vinyl-based monomer containing an alkoxysilyl group or a halosilyl group is a monomer unit based on a compound represented by the following formula (5) or (6), preferably contains a branch point of a polymer chain containing the monomer unit based on the compound represented by the formula (5) or (6), and the hydrogenated conjugated diene-based polymer is more preferably obtained by using a coupling agent, further preferably contains at least one end of the hydrogenated conjugated diene-based polymer coupled with a coupling agent, and is still further preferably a hydrogenated conjugated diene-based polymer in which at least one end of the hydrogenated conjugated diene-based polymer is modified with a nitrogen atom-containing group.

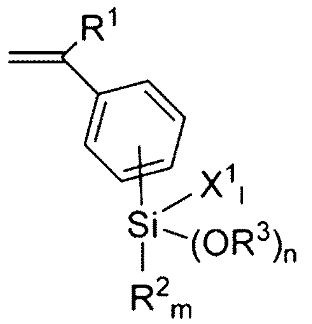

(5)

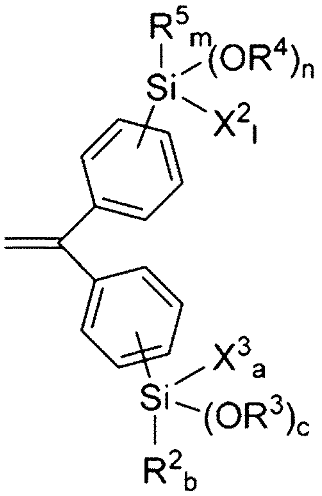

(6)

In the formula (5), $R^1$ represents a hydrogen atom, an alkyl group having 1 to 20 carbon atoms, or an aryl group having 6 to 20 carbon atoms, and may have a branch structure in a part thereof.
$R^2$ and $R^3$ each independently represent an alkyl group having 1 to 20 carbon atoms, or an aryl group having 6 to 20 carbon atoms, and may have a branch structure in a part thereof. Each of $R^1$ to $R^3$, if present in a plural number, is respectively independent.
$X^1$ represents a halogen atom. If present in a plural number, each $X^1$ is respectively independent.
m represents an integer of 0 to 2, n represents an integer of 0 to 3, l represents an integer of 0 to 3, and (m + n + 1) is 3.
In the formula (6), $R^2$ to $R^5$ each independently represent an alkyl group having 1 to 20 carbon atoms, or an aryl group having 6 to 20 carbon atoms, and may have a branch structure in a part thereof.
Each of $R^2$ to $R^5$, if present in a plural number, is respectively independent.
$X^2$ and $X^3$ each independently represent a halogen atom. Each of $X^2$ and $X^3$, if present in a plural number, is respectively independent.
m represents an integer of 0 to 2, n represents an integer of 0 to 3, and l represents an integer of 0 to 3.
(m + n+ l) is 3.
a represents an integer of 0 to 2, b represents an integer of 0 to 3, and c represents an integer of 0 to 3, and (a + b + c) is 3.
The hydrogenated conjugated diene-based polymer of the present embodiment preferably has a hydrogenated conjugated diene-based polymer having a monomer unit based on a compound represented by the formula (5) in which $R^1$ is a hydrogen atom and m is 0. Thus, the number of branches is improved, and an effect of improving abrasion resistance and processability can be obtained.
Alternatively, the hydrogenated conjugated diene-based polymer of the present embodiment is preferably a conjugated diene-based polymer having a monomer unit based on a compound represented by the formula (6) in which m is 0 and b is 0. Thus, the effect of improving abrasion resistance and processability can be obtained.
Further alternatively, the hydrogenated conjugated diene-based polymer of the present embodiment is preferably a hydrogenated conjugated diene-based polymer having a monomer unit based on a compound represented by the formula (6) in which m is 0, l is 0, n is 3, a is 0, b is 0, and c is 3. Thus, the effect of improving abrasion resistance and processability is obtained.
Besides, the hydrogenated conjugated diene-based polymer of the present embodiment is further preferably a

hydrogenated conjugated diene-based polymer having a monomer unit based on a compound represented by the formula (5) in which $R^1$ is a hydrogen atom, m is 0, l is 0, and n is 3. Thus, the modification ratio and the branch number are improved, and an effect of improving low fuel consumption performance, abrasion resistance and processability is obtained.

(Branching Agent)

In the hydrogenated conjugated diene-based polymer of the present embodiment, in constructing a main chain branch structure, a branching agent represented by the following formula (5) or (6) is preferably used as the branching agent.

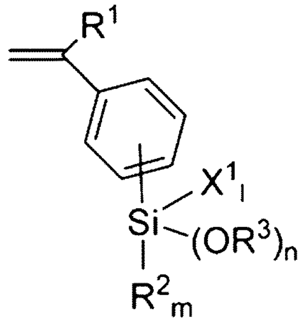

(5)

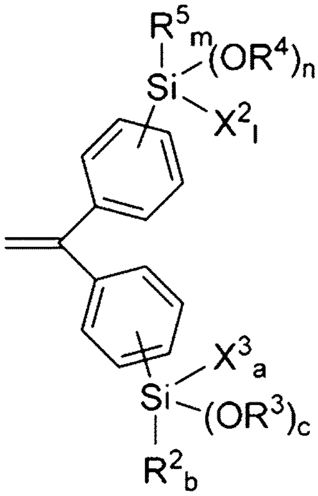

(6)

In the formula (5), $R^1$ represents a hydrogen atom, an alkyl group having 1 to 20 carbon atoms, or an aryl group having 6 to 20 carbon atoms, and may have a branch structure in a part thereof.

$R^2$ and $R^3$ each independently represent an alkyl group having 1 to 20 carbon atoms, or an aryl group having 6 to 20 carbon atoms, and may have a branch structure in a part thereof.

Each of $R^1$ to $R^3$, if present in a plural number, is respectively independent.

$X^1$ represents a halogen atom. If present in a plural number, each $X^1$ is respectively independent.

m represents an integer of 0 to 2, n represents an integer of 0 to 3, and l represents an integer of 0 to 3, and

(m + n + 1) is 3.

In the formula (6), $R^2$ to $R^5$ each independently represent an alkyl group having 1 to 20 carbon atoms, or an aryl group having 6 to 20 carbon atoms, and may have a branch structure in a part thereof.

Each of $R^2$ to $R^5$, if present in a plural number, is respectively independent.

$X^2$ and $X^3$ each independently represent a halogen atom. Each of $X^2$ and $X^3$, if present in a plural number, is respectively independent.

m represents an integer of 0 to 2, n represents an integer of 0 to 3, l represents an integer of 0 to 3, and (m + n+ l) is 3.

a represents an integer of 0 to 2, b represents an integer of 0 to 3, c represents an integer of 0 to 3, and (a + b + c) is 3.

In the present embodiment, from the viewpoints of continuity of polymerization and improvement of the branch number, the branching agent used in constructing the main chain branch structure of the hydrogenated conjugated diene-based polymer is preferably a compound represented by the formula (5) in which $R^1$ is a hydrogen atom and m is 0.

Alternatively, in the present embodiment, from the viewpoint of improvement of the branch number, the branching agent used in constructing the main chain branch structure of the hydrogenated conjugated diene-based polymer is preferably a compound represented by formula (6) in which m is 0 and b is 0.

In the present embodiment, from the viewpoints of continuity of polymerization and improvement of the modification ratio and the branch number, the branching agent used in constructing the main chain branch structure of the hydrogenated conjugated diene-based polymer is more preferably a compound represented by the formula (5) in which $R^1$ is a hydrogen atom, m is 0, l is 0, and n is 3.

In the present embodiment, from the viewpoint of improvement of the modification ratio and the branch number, the branching agent used in constructing the main chain branch structure of the hydrogenated conjugated diene-based polymer is preferably a compound represented by the formula (6) in which m is 0, l is 0, n is 3, a is 0, b is 0, and c is 3.

Examples of the branching agent represented by formula (5) include, but are not limited to, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl) silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, triisopropoxy(2-vinylphenyl)silane, dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, diisopropoxymethyl(4-vinylphenyl)silane, dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl(3-vinylphenyl)silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, diisopropoxymethyl(2-vinylphenyl)silane, dimethylmethoxy(4-vinylphenyl)silane, dimethylethoxy(4-vinylphenyl)silane, dimethylpropoxy(4-vinylphenyl)silane, dimethylbutoxy(4-vinylphenyl) silane, dimethylisopropoxy(4-vinylphenyl) silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl) silane, dimethylisopropoxy(3-vinylphenyl) silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl) silane, dimethylisopropoxy(2-vinylphenyl)silane, trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, triisopropoxy(2-isopropenylphenyl)silane, dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, diisopropoxymethyl(2-isopropenylphenyl)silane, dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, dimethylisopropoxy(2-isopropenylphenyl)silane, trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, and dimethylbromo(2-vinylphenyl)silane.

Among these, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, and trichloro(4-vinylphenyl)silane are preferred, and trimethoxy(4-vinylphenyl)silane, triethoxy(4-vinylphenyl)silane, tripropoxy(4-vinylphenyl)silane, tributoxy(4-vinylphenyl)silane, and triisopropoxy(4-vinylphenyl)silane are more preferred.

Examples of the branching agent represented by formula (6) include, but are not limited to, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, 1,1-bis(4-triisopropoxysilylphenyl)ethylene, 1,1-bis(3-trimethoxysilylphenyl)ethylene, 1,1-bis(3-triethoxysilylphenyl)ethylene, 1,1-bis(3-tripropoxysilylphenyl)ethylene, 1,1-bis(3-tripentoxysilylphenyl)ethylene,

1,1-bis(3-triisopropoxysilylphenyl)ethylene, 1,1-bis(2-trimethoxysilylphenyl)ethylene, 1,1-bis(2-triethoxysilylphenyl) ethylene, 1,1-bis(3-tripropoxysilylphenyl)ethylene, 1,1-bis(2-tripentoxysilylphenyl)ethylene, 1,1-bis(2-triisopropoxysilylphenyl)ethylene, 1,1-bis(4-(dimethylmethoxysilyl)phenyl)ethylene, 1,1-bis(4-(diethylmethoxysilyl)phenyl)ethylene, 1,1-bis(4-(dipropylmethoxysilyl)phenyl)ethylene, 1,1-bis(4-(dimethylethoxysilyl)phenyl)ethylene, 1,1-bis(4-(diethylethoxysilyl)phenyl)ethylene, and 1,1-bis(4-(dipropylethoxysilyl)phenyl)ethylene.

Among these, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, and 1,1-bis(4-triisopropoxysilylphenyl)ethylene are preferred, and 1,1-bis(4-trimethoxysilylphenyl)ethylene is more preferred.

(Method for Producing Hydrogenated Conjugated Diene-based Polymer)

A method for producing a hydrogenated conjugated diene-based polymer of the present embodiment includes, for example, the following steps (A) and (E), and at least one of the following steps (B) and (D), in which a hydrogenated conjugated diene-based polymer obtained in the step (E) has a branch number (Bn) measured by viscosity detector-equipped GPC-light scattering measurement of 2.5 or more, and a hydrogenation rate of a structural unit derived from a conjugated diene compound of 30% or more and less than 99%. The method for producing a hydrogenated conjugated diene-based polymer of the present embodiment preferably includes the step (D). The method for producing a hydrogenated conjugated diene-based polymer of the present embodiment preferably further includes the following step (C).

Step (A): a step of polymerizing only a conjugated diene compound, or a conjugated diene compound and an aromatic vinyl compound to obtain a conjugated diene-based polymer (polymerizing step)

Step (B): a step of reacting an end of the conjugated diene-based polymer with a branching agent to obtain a conjugated diene-based polymer solution containing a branched conjugated diene-based polymer having an active end (branching step)

Step (C): a step of further polymerizing a conjugated diene compound alone, or a conjugated diene compound and an aromatic vinyl compound, from the end of the conjugated diene-based polymer, to obtain a conjugated diene-based polymer (polymerizing step)

Step (D): a step of reacting the end of the conjugated diene-based polymer with a coupling agent (coupling step)

Step (E): a step of hydrogenating the conjugated diene-based polymer to obtain a hydrogenated conjugated diene-based polymer (hydrogenating step)

As for the respective steps, it is preferred that at least one of the steps (B) to (D) is contained after the step (A), and that the step (E) is performed thereafter. For example, when the branching agent of the step (B) is added during the polymerizing step of the step (A), namely, before monomers are completely consumed, a branched chain should extend even if a monomer is not further added after the reaction with the branching agent, and hence this procedure corresponds to the step (C). From the viewpoint of producing a polymer having an intended structure by controlling the steps, however, in a preferred aspect, the branching agent is added after consuming monomers in the step (A), and monomers are further added, as the step (C), to elongate a branched chain after the branching agent is completely bonded to polymer chains. Besides, it is preferred, from the viewpoint of improving a reaction rate of the coupling agent in the step (D), that conjugated diene is added as an additional monomer, or added with a supply ratio of conjugated diene set to be high.

The steps (B) to (D) may be performed only once, or may be performed repeatedly twice or more times.

In the method for producing a hydrogenated conjugated diene-based polymer of the present embodiment, it is particularly preferable to perform procedures in the order of the step (A), the step (B), the step (C), the step (D), and the step (E), or in the order of the step (A), the step (D), and the step (E), or in the order of the step (A), the step (C), the step (D), and the step (E), or in the order of the step (A), the step (B), and the step (E).

In the step (A) in the method for producing a hydrogenated conjugated diene-based polymer of the present embodiment, at least a conjugated diene compound is polymerized in the presence of an organolithium-based compound with an organolithium compound used as a polymerization initiator. The hydrogenated conjugated diene-based polymer may be a hydrogenated product of any one of a homopolymer of a single conjugated diene compound, a polymer of different kinds of conjugated diene compounds, namely, a copolymer thereof, and a copolymer of a conjugated diene compound and an aromatic vinyl compound.

(Polymerization Initiator)

As a polymerization initiator, at least an organomonolithium compound can be used.

An example of the organomonolithium compound includes, but is not limited to, an organomonolithium compound of a low molecular weight compound or a soluble oligomer.

Examples of the organomonolithium compound include, with respect to a bonding mode between an organic

group and lithium thereof, a compound having a carbon-lithium bond, a compound having a nitrogen-lithium bond, and a compound having a tin-lithium bond.

An amount of the organomonolithium compound to be used as the polymerization initiator is preferably determined on the basis of the molecular weight of a target conjugated diene-based polymer or hydrogenated conjugated diene-based polymer.

A ratio of the amount of a monomer such as a conjugated diene compound to be used to the amount of the polymerization initiator to be used relates to the degree of polymerization. In other words, there is a tendency that it relates to the number average molecular weight and/or the weight average molecular weight.

Accordingly, in order to increase the molecular weight, adjustment may be made to reduce the amount of the polymerization initiator to be used, and in order to reduce the molecular weight, the adjustment may be made to increase the amount of the polymerization initiator to be used.

From the viewpoint that it is used as one method for introducing a nitrogen atom into a conjugated diene-based polymer, the organomonolithium compound is preferably an alkyl lithium compound having a substituted amino group or dialkylamino lithium.

In this case, a conjugated diene-based polymer having, at a polymerization starting end, a nitrogen atom of an amino group is obtained.

The substituted amino group refers to an amino group having no active hydrogen or having a structure in which active hydrogen is protected.

Examples of an alkyl lithium compound containing an amino group having no active hydrogen include, but are not limited to, 3-dimethylaminopropyl lithium, 3-diethylaminopropyl lithium, 4-(methylpropylamino)butyl lithium and 4-hexamethyleneiminobutyl lithium.

Examples of an alkyl lithium compound containing an amino group having a structure in which active hydrogen is protected include, but are not limited to, 3-bistrimethylsilylaminopropyl lithium and 4-trimethylsilylmethylaminobutyl lithium.

Examples of the dialkylamino lithium include, but are not limited to, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenetylamide, lithium hexamethyleneimide, lithium pyrrolidide, lithium piperidide, lithium heptamethyleneimide, lithium morpholide, 1-lithioazacyclooctane, 6-lithio-1,3,3-trimethyl-6-azabicyclo [3.2.1] octane, and 1-lithio-1,2,3,6-tetrahydropyridine.

Such an organomonolithium compound having a substituted amino group can be reacted with a small amount of a polymerizable monomer, such as 1,3-butadiene, isoprene or styrene, to be used as an organomonolithium compound of a solubilized oligomer.

From the viewpoint of the industrial availability and the controllability of the polymerization reaction, the organomonolithium compound is preferably an alkyl lithium compound. In this case, a conjugated diene-based polymer having an alkyl group at a polymerization starting end can be obtained.

Examples of the alkyl lithium compound include, but are not limited to, n-butyllithium, sec-butyllithium, tert-butyllithium, n-hexyllithium, benzyllithium, phenyllithium, and stilbene lithium.

From the viewpoint of the industrial availability and the controllability of the polymerization reaction, the alkyl lithium compound is preferably n-butyllithium or sec-butyllithium.

One of these organomonolithium compounds may be singly used, or two or more of these may be used together. Alternatively, another organic metal compound may be used together.

Examples of such another organic metal compound include alkaline earth metal compounds, other alkaline metal compounds, and other organic metal compounds.

Examples of the alkaline earth metal compounds include, but are not limited to, organic magnesium compounds, organic calcium compounds and organic strontium compounds. Other examples include compounds of alkoxides, sulfonates, carbonates and amides of alkaline earth metals.

Examples of the organic magnesium compounds include dibutyl magnesium and ethyl butyl magnesium. Examples of the other organic metal compounds include organic aluminum compounds.

Examples of a polymerization reaction mode employed in the polymerizing step include, but are not limited to, batch and continuous polymerization reaction modes.

In the continuous mode, one reactor or two or more connected reactors can be used. As a reactor for the continuous mode, for example, a tank or tubular reactor equipped with a stirrer can be used. In the continuous mode, a monomer, an inert solvent and a polymerization initiator are continuously fed to the reactor, a polymer solution containing a polymer is obtained in the reactor, and the polymer solution is continuously discharged.

As a reactor for the batch mode, for example, a tank reactor equipped with a stirrer is used. It is preferable, in the batch mode, that a monomer, an inert solvent and a polymerization initiator are fed to the reactor, the monomer is continuously or intermittently additionally fed if necessary during the polymerization, a polymer solution containing a

polymer is obtained in the reactor, and the polymer solution is discharged after completing the polymerization.

In the production method for a hydrogenated conjugated diene-based polymer of the present embodiment, in order to obtain a conjugated diene-based polymer having an active end at a high ratio, the continuous mode in which a polymer is continuously discharged to be supplied to a next reaction in a short period of time is preferably employed.

In the polymerizing step for a conjugated diene-based polymer, the polymerization is performed preferably in an inert solvent. Examples of the solvent include, but are not limited to, hydrocarbon-based solvents such as saturated hydrocarbons and aromatic hydrocarbons. Specific examples of the hydrocarbon-based solvent include, but are not limited to, aliphatic hydrocarbons such as butane, pentane, hexane and heptane; alicyclic hydrocarbons such as cyclopentane, cyclohexane, methylcyclopentane and methylcyclohexane; aromatic hydrocarbons such as benzene, toluene and xylene; and a hydrocarbon containing a mixture of any of these.

Impurities of allenes and acetylenes are preferably treated with an organic metal compound before the solvent is supplied to the polymerization reaction because thus, a conjugated diene-based polymer having an active end in a high concentration tends to be obtained, and a modified conjugated diene-based polymer having a high modification ratio tends to be obtained.

In the polymerizing step, a polar compound (a polar material) may be added. An aromatic vinyl compound can be randomly copolymerized with a conjugated diene compound, and there is a tendency that the polar compound can be used also as a vinylation agent for controlling a microstructure of a conjugated diene portion. Besides, it tends to be advantageous for, for example, acceleration of the polymerization reaction.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkaline metal alkoxide compounds such as potassium-tert-amylate, potassium-tert-butylate, sodium-tert-butylate, and sodium amylate; and phosphine compounds such as triphenylphosphine.

One of these polar compounds may be singly used, or two or more of these may be used together.

The amount of the polar compound to be used is not especially limited but can be selected in accordance with the purpose or the like, and is preferably 0.01 mol or more and 100 mol or less per mole of the polymerization initiator.

Such a polar compound (a vinylation agent) can be used, as a microstructure modifier for a polymer conjugated diene portion, in an appropriate amount in accordance with a desired amount of 1,2-bound vinyl. There is a tendency that many polar compounds simultaneously have an effective randomizing effect in copolymerization of a conjugated diene compound and an aromatic vinyl compound, and can be used as a modifier for the distribution of the aromatic vinyl compound and the amount of a styrene block.

As a method for randomizing the conjugated diene compound and the aromatic vinyl compound, for example, a method as described in Japanese Patent Laid-Open No. 59-140211 in which a copolymerization reaction is started with the whole amount of styrene and a part of 1,3-butadiene with the rest of 1,3-butadiene intermittently added during the copolymerization reaction may be employed.

In the polymerizing step, a polymerization temperature is preferably a temperature at which the living anionic polymerization proceeds, and from the viewpoint of productivity, is more preferably 0°C or more, and more preferably 120°C or less. If the polymerization temperature falls in this range, there is a tendency that a reaction amount of the modifier reacted to the active end can be sufficiently attained after completing the polymerization. The polymerization temperature is further preferably 50°C or more and 100°C or less.

The step (B) in the method for producing a hydrogenated conjugated diene-based polymer of the present embodiment includes a step of adding the branching agent.

The amount of the branching agent to be added in the branching step is not especially limited, and can be selected in accordance with the purpose or the like, and is preferably 0.03 mol or more and 0.5 mol or less, more preferably 0.05 mol or more and 0.4 mol or less, and further preferably 0.01 mol or more and 0.25 mol or less per mole of the polymerization initiator. The timing of adding the branching agent is preferably timing when monomer conversion in the reactor is preferably 50% or more, more preferably 80% or more, and further preferably 90% or more from the viewpoint of increasing reproducibility of the polymerization.

In the step (C) in the method for producing a hydrogenated conjugated diene-based polymer of the present embodiment, a conjugated diene compound may be singly added, or a conjugated diene compound and an aromatic vinyl compound may be added. A ratio in the amount to be added between a monomer component added in the step (A) and a monomer component added in the step (C) (step (A):step (C)) is not especially limited, and is preferably 99:1 to 5:95, more preferably 95:5 to 30:70, and further preferably 95:5 to 60:40.

When the amount of monomers to be added falls in the above-described range, a molecular weight between a branch point formed by the branching agent and a branch point formed by the coupling agent is increased, and a molecular structure having high linearity tends to be easily formed. When a molecular structure having high linearity is used, entanglement among molecular chains of the hydrogenated conjugated diene-based polymer is increased when it is

formed into a vulcanizate, resulting in tendency that a rubber composition excellent in abrasion resistance, steering stability, and fracture strength can be easily obtained.

The step (D) in the method for producing a hydrogenated conjugated diene-based polymer of the present embodiment includes a step of adding a coupling agent including the modifier.

The amount of the coupling agent to be added is not especially limited, and can be selected in accordance with the purpose, and is preferably 0.01 mol or more and 0.5 mol or less, more preferably 0.03 mol or more and 0.4 mol or less, and further preferably 0.05 mol or more and 0.25 mol or less per mole of the active end of the conjugated diene-based polymer.

The timing of adding the coupling agent is preferably timing when monomer conversion in the reactor is preferably 50% or more, more preferably 90% or more, and further preferably 95% or more from the viewpoint of increasing reproducibility of the polymerization.

In the step (E) in the method for producing a hydrogenated conjugated diene-based polymer of the present embodiment, a hydrogenation reaction is performed by the method described above in Hydrogenation Reaction.

The hydrogenated conjugated diene-based polymer of the present embodiment is not especially limited, and may be a polymer of a conjugated diene compound (monomer) and a branching agent, or may be a copolymer of a conjugated diene compound, a branching agent, and another monomer. For example, when the conjugated diene compound is butadiene or isoprene, and this is polymerized with a branching agent containing a vinyl aromatic portion, a polymer chain is what is called polybutadiene or polyisoprene, and a polymer containing a structure derived from a vinyl aromatic in a branched portion is obtained. Owing to such a structure, linearity of each polymer chain can be improved and a crosslink density obtained after vulcanization can be improved, resulting in obtaining an effect of improving the abrasion resistance. Therefore, the hydrogenated conjugated diene-based polymer of the present embodiment is suitably used for a tire, resin modification, interior/exterior of a vehicle, an anti-vibration rubber, shoes and the like.

In the method for producing a hydrogenated conjugated diene-based polymer of the present embodiment, a deactivator, a neutralizer or the like may be added if necessary to the resultant polymer solution after the coupling step.

Examples of the deactivator include, but are not limited to, water; and alcohols such as methanol, ethanol and isopropanol.

Examples of the neutralizer include, but are not limited to, carboxylic acids such as stearic acid, oleic acid and versatic acid (a mixture of highly branched carboxylic acids having 9 to 11 carbon atoms, mainly 10 carbon atoms); and an aqueous solution of an inorganic acid, and a carbon dioxide gas.

In the method for producing a hydrogenated conjugated diene-based polymer of the present embodiment, from the viewpoints of preventing gel formation after the polymerization and of improving stability in the processing, a stabilizer for rubber is preferably added.

As the stabilizer for rubber, any of known stabilizers, not limited to the following, can be used, and preferable examples include antioxidants such as 2,6-di-tert-butyl-4-hydroxytoluene (hereinafter also referred to as "BHT"), n-octadecyl-3-(4'-hydroxy-3',5'-di-tert-butylphenol) propionate, and 2-methyl-4,6-bis[(octylthio)methyl]phenol.

In order to further improve productivity of the hydrogenated conjugated diene-based polymer of the present embodiment, and processability in obtaining a composition therefrom with a filler and the like compounded, a rubber softener can be added if necessary.

A hydrogenated conjugated diene-based polymer composition of the present embodiment preferably contains 100 parts by mass of the above-described conjugated diene-based polymer, and 1 to 60 parts by mass of the rubber softener.

In the hydrogenated conjugated diene-based polymer composition of the present embodiment, the content of the rubber softener is more preferably 5 to 50 parts by mass, and further preferably 10 to 37.5 parts by mass based on 100 parts by mass of the conjugated diene-based polymer.

Examples of the rubber softener include, but are not limited to, an extender oil, a liquid rubber, and a resin.

An example of a method for adding the rubber softener to the hydrogenated conjugated diene-based polymer preferably includes, but is not limited to, a method in which the rubber softener is added to a hydrogenated conjugated diene-based polymer solution to be mixed, and the resultant polymer solution containing the rubber softener is desolvated.

Preferable examples of the extender oil include an aroma oil, a naphthenic oil and a paraffin oil. Among these oils, from the viewpoint of environmental safety, oil bleeding prevention and wet grip characteristics, an aroma-alternative oil containing 3% by mass or less of a polycyclic aromatic (PCA) component according to the IP 346 is preferred. Examples of the aroma-alternative oil include TDAE (Threated Distillate Aromatic Extracts), MES (Mild Extraction Solvate) and the like mentioned in Kautschuk Gummi Kunststoffe 52 (12) 799 (1999), and RAE (Residual Aromatic Extracts).

Preferable examples of the liquid rubber include, but are not limited to, liquid polybutadiene and liquid styrene-butadiene rubber.

As effects obtained by adding the liquid rubber, processability in obtaining a composition by compounding the hydrogenated conjugated diene-based polymer, a filler and the like is improved, and in addition, since the glass transition temperature of the composition can be shifted to a low temperature side, abrasion resistance, a low hysteresis loss property, and a low temperature characteristic obtained when in the form of a vulcanizate tend to be improved.

Preferable examples of the resin include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic-aromatic hydrocarbon resin, a coumarin-indene resin, a phenol resin, a p-tert-butylphenol-acetylene resin, a phenolformaldehyde resin, a xylene-formaldehyde resin, a monoolefin oligomer, a diolefin oligomer, an aromatic hydrocarbon resin, an aromatic petroleum resin, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol. One of these resins may be used, or two or more of these may be used together. When hydrogenated, all unsaturated groups may be hydrogenated, or some may be left not hydrogenated.

As effects obtained by adding the resin, processability in obtaining a composition by compounding the hydrogenated conjugated diene-based polymer, a filler and the like is improved, and in addition, fracture strength obtained when in the form of a vulcanizate tends to be improved, and since the glass transition temperature of the composition can be shifted to a high temperature side, wet skid resistance tends to be improved.

The amount of the extender oil, the liquid rubber, the resin or the like to be added as the rubber softener is not especially limited, and is preferably 1 part by mass or more and 60 parts by mass or less, more preferably 5 parts by mass or more and 50 parts by mass or less, and further preferably 10 parts by mass or more and 37.5 parts by mass or less based on 100 parts by mass of the hydrogenated conjugated diene-based polymer of the present embodiment.

When the rubber softener is added in the above-described range, there is a tendency that processability in obtaining a composition by compounding the hydrogenated conjugated diene-based polymer, a filler and the like is good, and that fracture strength and abrasion resistance obtained when in the form of a vulcanizate are good.

(Desolvation Step)

In the method for producing a hydrogenated conjugated diene-based polymer of the present embodiment, as a method for obtaining the resultant hydrogenated conjugated diene-based polymer from the polymer solution, any of know methods can be employed. Examples of the method include, but are not limited to, a method in which the polymer is filtered after separating the solvent by steam stripping or the like, and the resultant is dehydrated and dried to obtain the polymer, a method in which the solution is concentrated in a flushing tank, and the resultant is devolatilized by using a bent extruder or the like, and a method in which the solution is directly devolatilized by using a drum dryer or the like.

(Rubber Composition)

A rubber composition of the present embodiment contains a rubber component, and 5.0 parts by mass or more and 150 parts by mass or less of a filler based on 100 parts by mass of the rubber component.

From the viewpoints of low fuel consumption performance, processability and improvement of abrasion resistance, the rubber component contains, based on a total amount (100 parts by mass) of the rubber component, 10 parts by mass or more of the above-described hydrogenated conjugated diene-based polymer or the above-described hydrogenated conjugated diene-based polymer composition.

The filler preferably contains a silica-based inorganic filler.

If a silica-based inorganic filler is dispersed in the rubber composition of the present embodiment, the rubber composition tends to be more excellent in processability obtained when used for obtaining a vulcanizate and tends to be more excellent in abrasion resistance and fracture strength, and balance between a low hysteresis loss property and wet skid resistance when in the form of a vulcanizate.

Also when the rubber composition of the present embodiment is to be used in application to a vulcanized rubber such as a tire, a vehicle component such as an anti-vibration rubber, or shoes, a silica-based inorganic filler is preferably contained.

In the rubber composition of the present embodiment, a rubber-like polymer different from the above-described hydrogenated conjugated diene-based polymer (hereinafter simply referred to as the "rubber-like polymer") can be used in combination with the hydrogenated conjugated diene-based polymer.

Examples of such a rubber-like polymer include, but are not limited to, a conjugated diene-based polymer or a hydrogenated product thereof, a random copolymer of a conjugated diene-based compound and a vinyl aromatic compound, or a hydrogenated product thereof, a block copolymer of a conjugated diene-based compound and a vinyl aromatic compound, or a hydrogenated product thereof, a non-diene-based polymer and a natural rubber.

Specific examples of the rubber-like polymer include, but are not limited to, a butadiene rubber or a hydrogenated product thereof, an isoprene rubber or a hydrogenated product thereof, styrene-based elastomers such as a styrene-butadiene rubber or a hydrogenated product thereof, and a styrene-butadiene block copolymer or a hydrogenated product thereof, a styrene-isoprene block copolymer or a hydrogenated product thereof, and an acrylonitrile-butadiene rubber or a

hydrogenated product thereof.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an $\alpha,\beta$-unsaturated nitrile-acrylic acid ester-conjugated diene copolymer rubber, a urethane rubber and a polysulfide rubber.

Examples of the natural rubber include, but are not limited to, smoked sheets of RSS Nos. 3 to 5, SMR and epoxidized natural rubber.

The above-described various rubber-like polymers may be in the form of a modified rubber imparted with a functional group having polarity such as a hydroxyl group or an amino group. For use in a tire, a butadiene rubber, an isoprene rubber, a styrene-butadiene rubber, a natural rubber and a butyl rubber are preferably used.

The weight average molecular weight of the rubber-like polymer is, from the viewpoint of balance between performance and processing characteristics, preferably 2,000 or more and 2,000,000 or less, and more preferably 5,000 or more and 1,500,000 or less. Besides, a rubber-like polymer having a low molecular weight, namely, what is called a liquid rubber, can be used. One of these rubber-like polymers may be singly used, or two or more of these may be used together.

When the rubber composition of the present embodiment is a rubber composition containing the hydrogenated conjugated diene-based polymer and the rubber-like polymer, a content ratio (in a mass ratio) of the hydrogenated conjugated diene-based polymer to the rubber-like polymer is, in terms of (the hydrogenated conjugated diene-based polymer/the rubber-like polymer), preferably 10/90 or more and 100/0 or less, more preferably 20/80 or more and 90/10 or less, and further preferably 50/50 or more and 80/20 or less.

Accordingly, the rubber component contains, based on the total amount (100 parts by mass) of the rubber component, the hydrogenated conjugated diene-based polymer in an amount of preferably 10 parts by mass or more and 100 parts by mass or less, more preferably 20 parts by mass or more and 90 parts by mass or less, and further preferably 50 parts by mass or more and 80 parts by mass or less.

If the content ratio of (the hydrogenated conjugated diene-based polymer/the rubber-like polymer) falls in the above-described range, there is a tendency that abrasion resistance and fracture strength obtained when formed into a vulcanizate are excellent, and that balance between a low hysteresis loss property and wet skid resistance is satisfactory.

Examples of the filler contained in the rubber composition of the present embodiment include, but are not limited to, a silica-based inorganic filler, carbon black, a metal oxide, and a metal hydroxide. Among these, a silica-based inorganic filler is preferred.

One of these fillers may be singly used, or two or more of these may be used together.

A content of the filler in the rubber composition of the present embodiment is 5.0 parts by mass or more and 150 parts by mass or less, preferably 20 parts by mass or more and 100 parts by mass or less, and further preferably 30 parts by mass or more and 90 parts by mass or less based on 100 parts by mass of the rubber component containing the hydrogenated conjugated diene-based polymer.

From the viewpoint of exhibiting the effect of the filler addition, the content of the filler in the rubber composition of the present embodiment is 5.0 parts by mass or more based on 100 parts by mass of the rubber component, and from the viewpoint that the filler is sufficiently dispersed to attain practically sufficient processability and mechanical strength of the composition, the content is 150 parts by mass or less based on 100 parts by mass of the rubber component.

The silica-based inorganic filler is not especially limited, any of known fillers can be used, a solid particle containing $SiO_2$ or $Si_3Al$ as a constituent unit is preferred, and a solid particle containing $SiO_2$ or $Si_3Al$ as a principal component of a constituent unit is more preferred. Here, the principal component refers to a component contained in the silica-based inorganic filler in an amount of 50% by mass or more, preferably 70% by mass or more, and more preferably 80% by mass or more.

Specific examples of the silica-based inorganic filler include, but are not limited to, silica, clay, talc, mica, diatomite, wollastonite, montmorillonite, zeolite and inorganic fibrous substances such as glass fiber. Besides, examples include a silica-based inorganic filler having a hydrophobized surface, and a mixture of a silica-based inorganic filler and an inorganic filler excluding silica. Among these, from the viewpoint of strength and abrasion resistance, silica and glass fiber are preferred, and silica is more preferred. Examples of the silica include dry silica, wet silica and synthetic silicate silica. Among these silica, wet silica is preferred from the viewpoint that it is excellent in the effect of improving fracture strength and balance in wet skid resistance.

From the viewpoint of obtaining practically good abrasion resistance and fracture strength of the rubber composition, a nitrogen adsorption specific surface area, obtained by the BET adsorption method, of the silica-based inorganic filler is preferably 100 $m^2/g$ or more and 300 $m^2/g$ or less, and more preferably 170 $m^2/g$ or more and 250 $m^2/g$ or less. Besides, a silica-based inorganic filler having a comparatively small specific surface area (for example, a specific surface area of 200 $m^2/g$ or less) and a silica-based inorganic filler having a comparatively large specific surface area (for example, 200 $m^2/g$ or more) can be used in combination if necessary. In the present embodiment, if a silica-based

inorganic filler having a comparatively large specific surface area (of, for example, 200 $m^2/g$ or more) is used in particular, the composition containing the hydrogenated conjugated diene-based polymer tends to be improved in dispersibility of silica, and be effective particularly in improvement of abrasion resistance, and be capable of well-balanced in good fracture strength and a low hysteresis loss property.

A content of the silica-based inorganic filler in the rubber composition is preferably 5.0 parts by mass or more and 150 parts by mass or less, more preferably 20 parts by mass or more and 100 parts by mass or less based on 100 parts by mass of the rubber component containing the hydrogenated conjugated diene-based polymer. From the viewpoint of exhibiting the effect of the addition of the inorganic filler, the content of the silica-based inorganic filler in the rubber composition of the present embodiment is 5.0 parts by mass or more based on 100 parts by mass of the rubber component, and from the viewpoint that the inorganic filler is sufficiently dispersed to attain practically sufficient processability and mechanical strength of the composition, the content is 150 parts by mass or less based on 100 parts by mass of the rubber component.

Examples of the carbon black include, but are not limited to, carbon blacks of SRF, FEF, HAF, ISAF and SAF classes. Among these, a carbon black having a nitrogen adsorption specific surface area of 50 $m^2/g$ or more and dibutyl phthalate (DBP) oil absorption of 80 mL/100 g or less is preferred.

A content of the carbon black in the rubber composition of the present embodiment is preferably 0.5 parts by mass or more and 100 parts by mass or less, more preferably 3.0 parts by mass or more and 100 parts by mass or less, and further preferably 5.0 parts by mass or more and 50 parts by mass or less based on 100 parts by mass of the rubber component containing the hydrogenated conjugated diene-based polymer. From the viewpoint of exhibiting performances required in use as a tire or the like such as dry grip performance and conductivity, the content of the carbon black in the rubber composition of the present embodiment is preferably 0.5 parts by mass or more based on 100 parts by mass of the rubber component, and from the viewpoint of dispersibility, the content is preferably 100 parts by mass or less based on 100 parts by mass of the rubber component.

The metal oxide refers to a solid particle containing a principal component of a constituent unit represented by chemical formula $M_xO_y$ (wherein M represents a metal atom, and x and y each independently represent an integer of 1 to 6).

Examples of the metal oxide include, but are not limited to, alumina, titanium oxide, magnesium oxide and zinc oxide.

Examples of the metal hydroxide include, but are not limited to, aluminum hydroxide, magnesium hydroxide and zirconium hydroxide.

The rubber composition of the present embodiment may contain a silane coupling agent. The silane coupling agent is preferably a compound that has a function to make close the interaction between the rubber component and the inorganic filler, has a group having affinity with or a binding property to both of the rubber component, and the silica-based inorganic filler, and contains, in one molecule, a sulfur bond portion and an alkoxysilyl group or silanol group portion. Examples of such a compound include, but are not limited to, bis-[3-(triethoxysilyl)-propyl]-tetrasulfide, bis-[3-(triethoxysilyl)-propyl]-disulfide and bis-[2-(triethoxysilyl)-ethyl]-tetrasulfide.

A content of the silane coupling agent in the rubber composition of the present embodiment is preferably 0.1 parts by mass or more and 30 parts by mass or less, more preferably 0.5 parts by mass or more and 20 parts by mass or less, and further preferably 1.0 part by mass or more and 15 parts by mass or less based on 100 parts by mass of the inorganic filler. If the content of the silane coupling agent falls in the aforementioned range, there is a tendency that the effect of the addition of the silane coupling agent can be more conspicuous.

The rubber composition of the present embodiment may contain a rubber softener from the viewpoint of improvement of the processability.

The amount of the rubber softener to be added is expressed as a total amount of the rubber softener precedently contained in the hydrogenated conjugated diene-based polymer and another rubber-like polymer, and the rubber softener to be added in forming the rubber composition based on 100 parts by mass of the rubber component containing the hydrogenated conjugated diene-based polymer.

As the rubber softener, an extender oil, a liquid rubber, and a resin are suitably used.

A mineral oil-based rubber softener, which is used for softening, expanding and improving processability of a rubber and is designated as a process oil or an extender oil, is a mixture of an aromatic ring, a naphthene ring and a paraffin chain, and one in which the number of carbon atoms of the paraffin chain is 50% or more of the number of all carbon atoms is designated as a paraffin-based softener, one in which the number of carbon atoms of the naphthene ring is 30% or more and 45% or less of the number of all carbon atoms is designated as a naphthene-based softener, and one in which the number of aromatic carbon atoms exceeds 30% of the number of all carbon atoms is designated as an aromatic-based softener. When the hydrogenated conjugated diene-based polymer of the present embodiment is a copolymer of a conjugated diene compound and a vinyl aromatic compound, a rubber softener to be used is preferably one having an appropriate aromatic content because such a softener tends to fit with the copolymer.

A content of the rubber softener in the rubber composition of the present embodiment is preferably 0 part by mass

or more and 100 parts by mass or less, more preferably 10 parts by mass or more and 90 parts by mass or less, and further preferably 30 parts by mass or more and 90 parts by mass or less based on 100 parts by mass of the rubber component. If the content of the rubber softener is 100 parts by mass or less based on 100 parts by mass of the rubber component, there is a tendency that the bleeding out is suppressed and the stickiness of the surface of the rubber composition is suppressed.

Examples of a method for mixing the hydrogenated conjugated diene-based polymer and another rubber-like polymer, a silica-based inorganic filler, carbon black or another filler, a silane coupling agent, and an additive such as a rubber softener include, but are not limited to, a melt-kneading method using a general mixer such as an open roll, a Banbury mixer, a kneader, a single shaft screw extruder, a twin shaft screw extruder or a multi-shaft screw extruder, and a method in which the respective components are melted and mixed followed by removal of a solvent by heating. Among these methods, the melt-kneading method using a roll, a Banbury mixer, a kneader or an extruder is preferred from the viewpoint of productivity and high kneadability. Besides, either of a method in which the rubber component and another filler, the silane coupling agent, and the additive are kneaded all together or a method in which these are mixed dividedly in plural times is applicable.

The rubber composition of the present embodiment may be a vulcanized composition having been vulcanized with a vulcanizing agent. Examples of the vulcanizing agent include, but are not limited to, radical generators such as organic peroxides and azo compounds, oxime compounds, nitroso compounds, polyamine compounds, sulfur and sulfur compounds. The sulfur compounds include sulfur monochloride, sulfur dichloride, disulfide compounds and high molecular weight polysulfide compounds. A content of the vulcanizing agent in the rubber composition of the present embodiment is preferably 0.01 parts by mass or more and 20 parts by mass or less, and more preferably 0.1 parts by mass or more and 15 parts by mass or less based on 100 parts by mass of the rubber component. As a vulcanizing method, any of known methods is applicable, and a vulcanization temperature is preferably 120°C or more and 200°C or less, and more preferably 140°C or more and 180°C or less.

For the vulcanization, a vulcanization accelerator may be used if necessary. As the vulcanization accelerator, any of known materials can be used, and examples include, but are not limited to, sulphenamide-based, guanidine-based, thiuram-based, aldehyde-amine-based, aldehyde-ammonia-based, thiazole-based, thiourea-based and dithiocarbamate-based vulcanization accelerators. Besides, examples of a vulcanization aid include, but are not limited to, zinc oxide and stearic acid. A content of the vulcanization accelerator is preferably 0.01 parts by mass or more and 20 parts by mass or less, and more preferably 0.1 parts by mass or more and 15 parts by mass or less based on 100 parts by mass of the rubber component.

The rubber composition of the present embodiment may contain, as long as the object of the present embodiment is not impaired, various additives such as another softener excluding those described above and a filler, a heat resistance stabilizer, an antistatic agent, a weathering stabilizer, an anti-ageing agent, a colorant, a lubricant. As another softener, any of known softeners can be used. Specific examples of another filler include, but are not limited to, calcium carbonate, magnesium carbonate, aluminum sulfate and barium sulfate. As each of the heat resistance stabilizer, the antistatic agent, the weathering stabilizer, the anti-ageing agent, the colorant and the lubricant, any of known materials can be used.

The rubber composition of the present embodiment is suitably used as a rubber composition for a tire. In other words, a tire of the present embodiment contains the rubber composition.

The rubber composition for a tire is applicable to, but not limited to, various tires such as a fuel-efficient tire, an all-season tire, a high-performance tire and a studless tire; and various tire portions such as a tread, a carcass, a sidewall and a bead. In particular, since the rubber composition for a tire is excellent in the abrasion resistance and fracture strength, and the balance between the low hysteresis loss property and the wet skid resistance obtained when in the form of a vulcanizate, it is suitably used as a tread of a fuel-efficient tire or a high-performance tire.

## Examples

The present embodiment will now be described in more detail with reference to specific examples and comparative examples, and it is noted that the present embodiment is not limited to the following examples and comparative examples at all.

Various physical properties of the examples and comparative examples were measured by the following methods.

### (Mooney Viscosity of Polymer)

A conjugated diene-based polymer or a hydrogenated conjugated diene-based polymer was used as a sample to measure a Mooney viscosity by using a Mooney viscometer (trade name "VR1132" manufactured by Ueshima Seisakusho Co., Ltd.) in accordance with ISO 289 with an L-type rotor used.

A measurement temperature was 100°C when a hydrogenated conjugated diene-based polymer was used as a sample.

Specifically, first, a sample was preheated at the test temperature for 1 minute, the rotor was rotated at 2 rpm, a torque was measured 4 minutes after, and the thus obtained measured value was defined as a Mooney viscosity ($ML_{(1+4)}$).

(Branch Number (Bn))

A conjugated diene-based polymer or a hydrogenated conjugated diene-based polymer not containing a rubber softener was used as a sample to measure a branch number (Bn) by viscosity detector-equipped GPC-light scattering measurement as follows. A gel permeation chromatography (GPC) measurement apparatus (trade name "GPCmax VE-2001" manufactured by Malvern Panalytical Ltd.) including a series of three columns using a polystyrene-based gel as a filler was used to perform measurement by using three detectors, that is, a light scattering detector, a refractive index (RI) detector, and a viscosity detector (trade name "TDA305" manufactured by Malvern Panalytical Ltd.) connected in the stated order. Based on standard polystyrene, an absolute molecular weight was obtained from results obtained by using the light scattering detector and the RI detector, and an intrinsic viscosity was obtained from results obtained by using the RI detector and the viscosity detector.
A straight-chain polymer was used under assumption of having an intrinsic viscosity $[\eta] = 10^{-3.883} M^{0.771}$, and a contracting factor (g') was calculated as a ratio of the intrinsic viscosity at each molecular weight. It is noted that M represents an absolute molecular weight in the expression.
Thereafter, the thus obtained contracting factor (g') was used to calculate a branch number (Bn) defined as $g' = 6 Bn/\{(Bn + 1)(Bn + 2)\}$.
As an eluent, tetrahydrofuran (hereinafter also referred to as "THF") containing 5 mmol/L of triethylamine was used.
As the columns, a series of columns of trade names "TSKgel G4000HXL", "TSKgel G5000HXL" and "TSKgel G6000HXL" manufactured by Tosoh Corporation were connected and used.
Twenty (20) mg of a sample for the measurement was dissolved in 10 mL of THF to obtain a measurement solution, and 100 μL of the measurement solution was injected into the GPC measurement apparatus for performing the measurement under conditions of an oven temperature of 40°C and a THF flow rate of 1 mL/min.

(Weight Average Molecular Weight, and Component having Molecular Weight of 300,000 or less (Component LM))

Measurement Conditions 1: A conjugated diene-based polymer or a hydrogenated conjugated diene-based polymer used as a sample was measured for a chromatogram using a GPC measurement apparatus (trade name "HLC-8320GPC" manufactured by Tosoh Corporation) including a series of three columns using a polystyrene-based gel as a filler with an RI detector (trade name "HLC8020" manufactured by Tosoh Corporation) used, and on the basis of a calibration curve obtained using standard polystyrene, a weight average molecular weight (Mw), a number average molecular weight (Mn), a molecular weight distribution (Mw/Mn), and a component having a molecular weight of 300,000 or less (component LM) of the sample were obtained.
As an eluent, THF (tetrahydrofuran) containing 5 mmol/L of triethylamine was used. As the columns, trade name "TSKguardcolumn Super MP(HZ)-H" manufactured by Tosoh Corporation connected, as a guard column at a previous stage, to a series of three columns of trade name "TSKgel Super Multipore HZ-H" manufactured by Tosoh Corporation were used.
Ten (10) mg of a sample for the measurement was dissolved in 10 mL of THF to obtain a measurement solution, and 10 μL of the measurement solution was injected into the GPC measurement apparatus for performing the measurement under conditions of an oven temperature of 40°C and a THF flow rate of 0.35 mL/min.
Among various samples having been subjected to the measurement under the above-described measurement conditions 1, a sample having a molecular weight distribution (Mw/Mn) less than 1.6 was subjected again to the measurement under measurement conditions 2 described below. With respect to samples having been subjected to the measurement under the measurement conditions 1 and found to have a molecular weight distribution of 1.6 or more, the samples were subjected to the measurement under the measurement conditions 1.
Measurement Conditions 2: A conjugated diene-based polymer or a hydrogenated conjugated diene-based polymer used as a sample was measured for a chromatogram using a GPC measurement apparatus including a series of three columns using a polystyrene-based gel as a filler, and on the basis of a calibration curve obtained using standard polystyrene, a weight average molecular weight (Mw), a number average molecular weight (Mn), and a component having a molecular weight of 300,000 or less (component LM) of the sample were obtained.
As an eluent, THF containing 5 mmol/L of triethylamine was used. As the columns, a guard column of trade name "TSKguardcolumn Super H-H" manufactured by Tosoh Corporation, and columns of trade names "TSKgel SuperH5000", "TSKgel SuperH6000", and "TSKgel SuperH7000" manufactured by Tosoh Corporation were used.
An RI detector (trade name "HLC8020" manufactured by Tosoh Corporation) was used under conditions of an oven temperature of 40°C and a THF flow rate of 0.6 mL/min. Ten (10) mg of a sample for the measurement was dissolved

in 20 mL of THF to obtain a measurement solution, and 20 μL of the measurement solution was injected into the GPC measurement apparatus for performing the measurement.

(Modification Ratio)

A conjugated diene-based polymer or a hydrogenated conjugated diene-based polymer not containing a rubber softener was used as a sample to measure a modification ratio in the polymer by column adsorption GPC as follows. The measurement was performed by applying a characteristic that a modified basic polymer component adsorbs onto a GPC column using a silica-based gel as a filler.

A modification ratio was obtained by measuring an amount of adsorption onto a silica-based column based on a difference between a chromatogram measured by using a polystyrene-based column and a chromatogram measured by using a silica-based column obtained from a sample solution containing a sample and low molecular weight internal standard polystyrene.

Specifically, the measurement was performed as described below. A sample found to have a molecular weight distribution of 1.6 or more by the measurement under the measurement conditions 1 of (Weight Average Molecular Weight) was measured under the following measurement conditions 3, and a sample found to have a molecular weight distribution less than 1.6 was measured under the following measurement conditions **4.**

Preparation of Sample Solution: Ten (10) mg of a sample and 5 mg of standard polystyrene were dissolved in 20 mL of THF to obtain a sample solution.

Measurement Conditions **3:** GPC measurement conditions using polystyrene-based column:
An apparatus of trade name "HLC-8320GPC" manufactured by Tosoh Corporation was used, THF containing 5 mmol/L of triethylamine was used as an eluent, and 10 μL of the sample solution was injected into the apparatus to obtain a chromatogram using an RI detector under conditions of a column oven temperature of 40°C and a THF flow rate of 0.35 mL/min. As the columns, a series of three columns of trade name "TSKgel Super Multipore HZ-H" and a guard column of trade name "TSKguardcolumn SuperMP(HZ)-H" manufactured by Tosoh Corporation connected at a previous stage were used.

Measurement Conditions **4:** THF containing 5 mmol/L of triethylamine was used as an eluent, and 20 μL of the sample solution was injected into the apparatus to perform the measurement. As the columns, a guard column of trade name "TSKguardcolumn Super H-H" manufactured by Tosoh Corporation and columns of trade names "TSKgel Super H5000", "TSKgel Super H6000", and "TSKgel Super H7000" manufactured by Tosoh Corporation were used. A chromatogram was obtained by performing the measurement by using an RI detector (HLC8020, manufactured by Tosoh Corporation) under conditions of a column oven temperature of 40°C and a THF flow rate of 0.6 mL/min.

GPC measurement conditions using silica-based column:
An apparatus of trade name "HLC-8320GPC" manufactured by Tosoh Corporation was used, THF was used as an eluent, and 50 μL of the sample solution was injected into the apparatus to obtain a chromatogram by using an RI detector under conditions of a column oven temperature of 40°C and a THF flow rate of 0.5 mL/min. A series of columns of trade names "Zorbax PSM-1000S", "PSM-300S" and "PSM-60S", and a guard column of trade name "DIOL 4.6 x 12.5 mm 5 micron" connected at a previous stage were used.

Calculation method for modification ratio:
It was assumed that the whole peak area of the chromatogram obtained by using the polystyrene-based column was 100, that a peak area of a sample was P1, and that a peak area of standard polystyrene was P2. It was also assumed that the whole peak area of the chromatogram obtained by using the silica-based column was 100, that a peak area of the sample was P3, and that a peak area of standard polystyrene was P4. Based on P1 to P4, a modification ratio (%) in the polymer was obtained in accordance with the following expression:

$$\text{Modification ratio (\%)} = [1 - (P2 \times P3)/(P1 \times P4)] \times 100$$

wherein P1 + P2 = P3 + P4 = 100.

(Molecular Weight obtained by GPC-Light Scattering Measurement (Absolute Molecular Weight))

A conjugated diene-based polymer or a hydrogenated conjugated diene-based polymer not containing a rubber softener was used as a sample, and a GPC-light scattering measurement apparatus including a series of three columns using a polystyrene-based gel as a filler was used to measure a chromatogram for obtaining a weight average molecular weight (Mw-i) (also designated as an "absolute molecular weight") based on the viscosity of a solution and a light scattering method.

As an eluent, a mixed solution of tetrahydrofuran and triethylamine (THE in TEA: prepared by mixing 5 mL of triethylamine with 1 L of tetrahydrofuran) was used.

As the columns, a series of a guard column of trade name "TSKguardcolumn HHR-H" manufactured by Tosoh Corporation, and columns of trade names "TSKgel G6000HHR", "TSKgel G5000HHR", and "TSKgel G4000HHR" were connected and used.

A GPC-light scattering measurement apparatus (trade name "Viscotek TDAmax" manufactured by Malvern Panalytical Ltd.) was used under conditions of an oven temperature of 40°C and a THF flow rate of 1 mL/min. Ten (10) mg of a sample for the measurement was dissolved in 20 mL of THF to obtain a measurement solution, and 200 μL of the measurement solution was injected into the GPC measurement apparatus for the measurement.

(Amount of Bound Styrene, Hydrogenation Rate, Expression (S), and Expression (T))

A conjugated diene-based polymer or a hydrogenated conjugated diene-based polymer not containing a rubber softener was used as a sample to measure the amount of bound styrene in the polymer, and a composition ratio (% by mol) among the structural unit represented by the formula (1), the structural unit represented by the formula (2), the structural unit represented by the formula (3) and the structural unit represented by the formula (4), and measurement was performed with a nuclear magnetic resonance apparatus ($^1$H-NMR) under the following conditions for calculating a hydrogenation rate of a double bond in a structural unit derived from **1,3-**butadiene (hereinafter also simply referred to as the "hydrogenation rate"), a value of the expression (S), and a value of the expression (T). The conditions for the $^1$H-NMR measurement were as follows:

(Measurement Conditions)

Measurement apparatus: JNM-LA400 (manufactured by JEOL Ltd.)
Solvent: deuterated chloroform
Measurement sample: product extracted before and after hydrogenation of polymer
Sample concentration: 50 mg/mL
Observing frequency: 400 MHz
Chemical shift reference: TMS (tetramethylsilane)
Pulse delay: 2.904 sec
Scan frequency: 64 times
Pulse width: 45°
Measurement temperature: 26°C

(Cold Flow)

A conjugated diene-based polymer (composition) or a hydrogenated conjugated diene-based polymer (composition) was used as a sample for measurement. As for cold flow, a load of 1 kg was applied to a sample in a size of 40 mm x 40 mm x 50 mm in thickness (H0) at 25°C, the resultant was left to stand for 60 minutes to obtain a resultant thickness (H60), and a change rate (%) of the thickness was calculated in accordance with the following expression:

$$\text{Thickness change rate (\%)} = (H0 - H60) \times 100/H0$$

A result of each of Comparative Examples 2 to 5, and Examples 1, 2, 4, 5 and 31 was expressed as an index obtained by assuming that a result of Comparative Example 1 was 100. A result of each of Examples 6 to 8 was expressed as an index obtained by assuming that a result of Comparative Example 6 was 100. A result of each of Examples 9 to 11 was expressed as an index obtained by assuming that a result of Comparative Example 7 was 100. A result was expressed as an index obtained by assuming that a result of Comparative Example 8 was 100. A result of each of Examples 15 to 17 was expressed as an index obtained by assuming that a result of Comparative Example 9 was 100.

A result of each of Comparative Examples 11 and 12, and Examples 18 to 23 was expressed as an index obtained by assuming that a result of Comparative Example 10 was 100. A result of each of Examples 24 to 26 was expressed as an index obtained by assuming that a result of Comparative Example 13 was 100. A result of each of Examples 27 to 29 was expressed as an index obtained by assuming that a result of Comparative Example 14 was 100. A result of Example 30 was expressed as an index obtained by assuming that a result of Comparative Example 15 was 100. A result of each of Examples 32 and 33 was expressed as an index obtained by assuming that a result of Comparative Example 16 was 100.

A lower index indicates that cold flow of a rubber bale during storage is small, and hence handleability is excellent.

A sample having an index of 79 or less is evaluated as very good (shown as ◎◎ in tables), a sample having an index of 80 to 89 is evaluated as good (shown as ◎ in tables), a sample having an index of 90 to 99 is evaluated to have no

practical problem (shown as ○ in tables), a sample having an index of 100 to 105 is evaluated as rather poor (shown as △ in tables), and a sample having an index of 105 or more is evaluated to have a practical problem (shown as × in tables).

(Preparation of Hydrogenation Catalyst)

A hydrogenation catalyst to be used for preparing a hydrogenated conjugated diene-based polymer in each of the examples and comparative examples described below was prepared by the following method.

A reaction vessel equipped with a stirrer, which had been subjected to nitrogen substitution, was charged with 1 L of dried and purified cyclohexane. Next, 100 mmol of bis(η5-cyclopentadienyl)titanium dichloride was added thereto. A n-hexane solution containing 200 mmol of trimethylaluminum was added thereto under sufficient stirring, followed by reaction at room temperature for about 3 days. Thus, a hydrogenation catalyst (T) was obtained.

(Structure of Branching Agent)

In each of the examples and comparative examples described below, trimethoxy(4-vinylphenyl)silane (BS-1) or dimethoxymethyl(4-vinylphenyl)silane (B2-2) was used as the branching agent, both of which are monomer units based on a compound represented by the following formula (5).

Trimethoxy(4-vinylphenyl)silane (BS-1) had a structure of the formula (5) in which $R^1$ is hydrogen, $R^2$ and $R^3$ are methyl groups, m is 0, n is 3, and l is 0.

Dimethoxymethyl(4-vinylphenyl)silane (BS-2) had a structure of the formula (5) in which $R^1$ is hydrogen, $R^2$ and $R^3$ are methyl groups, m is 1, n is 2, and l is 0.

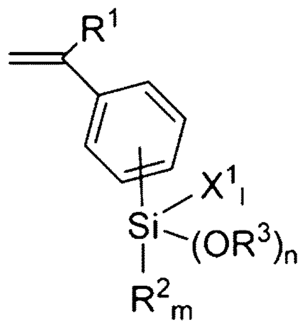

(5)

In the formula (5), $R^1$ represents a hydrogen atom, an alky group having 1 to 20 carbon atoms, or an aryl group having 6 to 20 carbon atoms, and may have a branch structure in a part thereof.

$R^2$ and $R^3$ each independently represent an alkyl group having 1 to 20 carbon atoms, or an aryl group having 6 to 20 carbon atoms, and may have a branch structure in a part thereof.

Each of $R^1$ to $R^3$, if present in a plural number, is respectively independent.

$X^1$ represents a halogen atom. If present in a plural number, each $X^1$ is respectively independent.

m represents an integer of 0 to 2, n represents an integer of 0 to 3, and l represents an integer of 0 to 3, and (m + n + l) is 3.

(Comparative Example 1) Hydrogenated Conjugated Diene-based Polymer (Sample B1)

A temperature-controllable autoclave having an internal volume of 40 L, and equipped with a stirrer and a jacket was used as a reactor, and 2,220 g of 1,3-butadiene, 780 g of styrene, and 21,000 g of cyclohexane, from which impurities had been removed, and 30 mmol of tetrahydrofuran (THF) and 15 mmol of 2,2-bis(2-oxolanyl)propane (BOP) used as polar materials were put in the reactor, and the internal temperature of the reactor was kept at 40°C.

To the reactor, 18 mmol of n-butyllithium was supplied as a polymerization initiator to star polymerization.

After starting the polymerization reaction, the internal temperature of the reactor started to increase due to heat generated by the polymerization, and the internal temperature of the reactor finally reached 76°C. Two minutes after reaching this peak of the reaction temperature, 6.0 mmol of N,N-bis(trimethylsilyl)aminopropyl methyltriethoxysilane (compound 1) was added as a coupling agent to the reactor to perform a coupling reaction for 20 minutes. To the resultant polymer solution, 3.0 mmol of methanol was added as a reaction terminator to obtain a solution of a conjugated diene-based polymer.

To the thus obtained solution of the conjugated diene-based polymer, the hydrogenation catalyst (T) prepared as described above was added in an amount, in terms of Ti, of 60 ppm per 100 parts by mass of the conjugated diene-based polymer, and a hydrogenation reaction was performed at a hydrogen pressure of 0.8 MPa and an average temperature of

85°C for 1 hour to obtain a solution of a hydrogenated conjugated diene-based polymer. A hydrogenation rate of a butadiene-derived structural unit in the thus obtained hydrogenated conjugated diene-based polymer was 60.0%.

To the thus obtained solution of the hydrogenated conjugated diene-based polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the solvent was removed by steam stripping, and the resultant was subjected to a drying treatment with a drier to obtain a hydrogenated conjugated diene-based polymer (Sample B1).

Analysis results of Sample B1 are shown in Table 1-1.

It was found, as a result of measurement, that a structure of a conjugated diene-based polymer obtained before adding the coupling agent in Sample B1 had a linear polymer structure, and did not have a star polymer.

(Comparative Example 2) Conjugated Diene-based Polymer (Sample B2)

A temperature-controllable autoclave having an internal volume of 40 L, and equipped with a stirrer and a jacket was used as a reactor, and 1,887 g of 1,3-butadiene (initial butadiene), 780 g of styrene, and 21,000 g of cyclohexane, from which impurities had been removed, and 30 mmol of tetrahydrofuran (THF) and 69 mmol of 2,2-bis(2-oxolanyl)propane (BOP) used as polar materials were put in the reactor, and the internal temperature of the reactor was kept at 42°C.

To the reactor, 92 mmol of n-butyllithium was supplied as a polymerization initiator to start polymerization.

After starting the polymerization reaction, the internal temperature of the reactor started to increase due to heat generated by the polymerization, and when monomer conversion in the reactor reached 98%, 18 mmol of trimethoxy(4-vinylphenyl)silane (BS-1) was added as a branching agent, followed by stirring for 5 minutes. Thereafter, 333 g of additional 1,3-butadiene (additional butadiene) was added thereto to cause a reaction. A final internal temperature of the reactor was 75°C.

The internal temperature of the reactor finally reached 76°C. Two minutes after reaching this peak of the reaction temperature, 8.0 mmol of 2,2-dimethoxy-1-(3-trimethoxysilylpropyl)-1-aza-2-silacyclopentane (compound 2) was added as a coupling agent to the reactor to perform a coupling reaction for 20 minutes. To the resultant polymer solution, 5.7 mmol of methanol was added as a reaction terminator to obtain a solution of a conjugated diene-based polymer.

To the thus obtained solution of the conjugated diene-based polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the solvent was removed by steam stripping, and the resultant was subjected to a drying treatment with a drier to obtain a conjugated diene-based polymer (Sample B2).

Analysis results of Sample B2 are shown in Table 1-1.

In each of a polymer obtained before adding the branching agent, a polymer obtained after adding the branching agent, and a polymer obtained after adding the coupling agent, the structure of the coupled conjugated diene-based polymer was identified based on comparison between a molecular weight obtained by GPC measurement and a branch number obtained by viscosity detector-equipped GPC measurement. Hereinafter, the structure of each sample was similarly identified. As a result of the measurement, as for the structure of Sample B2, a conjugated diene-based polymer obtained after adding the branching agent had a star polymer structure having 3.9 branches on average, and a conjugated diene-based polymer obtained after adding the coupling agent had, in a branched chain of 2 star structures on average, a portion derived from a vinyl-based monomer containing an alkoxysilyl group.

(Comparative Example 3) Hydrogenated Conjugated Diene-based Polymer (Sample B3)

A temperature-controllable autoclave having an internal volume of 40 L, and equipped with a stirrer and a jacket was used as a reactor, and 1,887 g of 1,3-butadiene (initial butadiene), 780 g of styrene, and 21,000 g of cyclohexane, from which impurities had been removed, and 30 mmol of tetrahydrofuran (THF) and 69 mmol of 2,2-bis(2-oxolanyl)propane (BOP) used as polar materials were put in the reactor, and the internal temperature of the reactor was kept at 42°C.

To the reactor, 92 mmol of n-butyllithium was supplied as a polymerization initiator to start polymerization.

After starting the polymerization reaction, the internal temperature of the reactor started to increase due to heat generated by the polymerization, and when monomer conversion in the reactor reached 98%, 18 mmol of trimethoxy(4-vinylphenyl)silane (BS-1) was added as a branching agent, followed by stirring for 5 minutes. Thereafter, 333 g of additional 1,3-butadiene (additional butadiene) was added thereto to cause a reaction. A final internal temperature of the reactor was 75°C.

The internal temperature of the reactor finally reached 76°C. Two minutes after reaching this peak of the reaction temperature, 8.0 mmol of 2,2-dimethoxy-1-(3-trimethoxysilylpropyl)-1-aza-2-silacyclopentane (compound 2) was added as a coupling agent to the reactor to perform a coupling reaction for 20 minutes. To the resultant polymer solution, 5.7 mmol of methanol was added as a reaction terminator to obtain a solution of a conjugated diene-based polymer.

To the thus obtained solution of the conjugated diene-based polymer, the hydrogenation catalyst (T) prepared as described above was added in an amount, in terms of Ti, of 60 ppm per 100 parts by mass of the conjugated diene-based

polymer, and a hydrogenation reaction was performed at a hydrogen pressure of 0.8 MPa and an average temperature of 85°C for 30 minutes to obtain a solution of a hydrogenated conjugated diene-based polymer. A hydrogenation rate of a butadiene-derived structural unit in the thus obtained hydrogenated conjugated diene-based polymer was 20.0%.

To the thus obtained solution of the hydrogenated conjugated diene-based polymer, 12.6 g of n-octadecyl-3-(3,5-di-t-butyl-4-hydroxyphenyl)-propionate and 3.0 g of 4,6-bis(octylthiomethyl)-o-cresol were added as antioxidants, the solvent was removed by steam stripping, and the resultant was subjected to a drying treatment with a drier to obtain a hydrogenated conjugated diene-based polymer (Sample B3). Sample B3 had a hydrogenation rate of 20%.

Analysis results of Sample B3 are shown in Table 1-1.

As a result of measurement, a structure of a conjugated diene-based polymer obtained after adding the branching agent in Sample B3 had a star polymer structure having 3.9 branches on average, and a conjugated diene-based polymer obtained after adding the coupling agent had, in a branched chain of 2 star structures on average, a portion derived from a vinyl-based monomer containing an alkoxysilyl group.

(Examples 1 and 2, and Comparative Example 4) Hydrogenated Conjugated Diene-based Polymers (Samples B4, B5, and B6, respectively)

Hydrogenated conjugated diene-based polymers (Sample B4, Sample B5, and Sample B6) were obtained through the same procedures as those of Comparative Example 3 except that an integrated hydrogen flow rate in the hydrogenation reaction was adjusted. Sample B4, Sample B5, and Sample B6 had hydrogenation rates of 63.0%, 92.0%, and 99.5%, respectively.

Analysis results of Sample B4, Sample B5, and Sample B6 are shown in Table 1-1.

As a result of measurement, a structure of a conjugated diene-based polymer obtained after adding the branching agent in each of Samples B4, B5 and B6 had a star polymer structure having 3.9 branches on average, and a conjugated diene-based polymer obtained after adding the coupling agent had, in a branched chain of 2 star structures on average, a portion derived from a vinyl-based monomer containing an alkoxysilyl group.

(Comparative Example 5) Hydrogenated Conjugated Diene-based Polymer (Sample B8)

A hydrogenated conjugated diene-based polymer (Sample B8) was obtained in the same manner as in Comparative Example 1 except that the polar material was changed to 19 mmol of 2,2-bis(2-oxolanyl)propane (BOP), that the polymerization initiator was changed to 24 mmol of n-butyllithium, that the coupling agent was changed to 4.3 mmol of 2,2-dimethoxy-1-(3-trimethoxysilylpropyl)-1-aza-2-silacyclopentane (Compound 2), and that the reaction terminator was changed to 5.3 mmol of methanol. Sample B8 had a hydrogenation rate of 96%.

Analysis results of Sample B8 are shown in Table 1-1.

It was found, as a result of measurement, that a structure of a conjugated diene-based polymer obtained before adding the coupling agent in Sample B8 had a linear polymer structure, and did not have a star polymer.

(Example 4) Hydrogenated Conjugated Diene-based Polymer (Sample B9)

A hydrogenated conjugated diene-based polymer (Sample B9) was obtained through the same procedures as those of Comparative Example 3 except that the coupling agent was changed to 4.0 mmol of 2,2-dimethoxy-1-(3-trimethoxysilylpropyl)-1-aza-2-silacyclopentane (Compound 2) and 4.0 mmol of silicon tetrachloride (Compound 3), and that an integrated hydrogen flow rate in the hydrogenation reaction was adjusted. Sample B9 had a hydrogenation rate of 65%.

Analysis results of Sample B9 are shown in Table 1-1.

As a result of measurement, a structure of a conjugated diene-based polymer obtained after adding the branching agent in Sample B9 had a star polymer structure having 3.9 branches on average, and a conjugated diene-based polymer obtained after adding the coupling agent had, in a branched chain of 2 star structures on average, a portion derived from a vinyl-based monomer containing an alkoxysilyl group.

(Example 5) Hydrogenated Conjugated Diene-based Polymer (Sample B10)

A hydrogenated conjugated diene-based polymer (Sample B10) was obtained through the same procedures as those of Comparative Example 3 except that 18 mmol of trimethoxy(4-vinylphenyl)silane (BS-1) was added as the branching agent when monomer conversion in the reactor was 60%, that 7.4 mmol of trimethoxy(4-vinylphenyl)silane (BS-1) was further added as the branching agent when monomer conversion in the reactor was 98%, that 9.8 mmol of 1,3-dimethyl-2-imidazolidinone (Compound 4) was added as a modifier instead of the coupling agent of 2,2-dimethoxy-1-(3-trimethoxysilylpropyl)-1-aza-2-silacyclopentane (Compound 2), that the reaction terminator was changed to 5.3 mmol of

methanol, and that an integrated hydrogen flow rate in the hydrogenation reaction was adjusted. Sample B10 had a hydrogenation rate of 65%.

Analysis results of Sample B10 are shown in Table 1-1.

As a result of measurement, as for the structure of Sample B10, a structure of a conjugated diene-based polymer obtained after the second addition of the branching agent had a star polymer structure having 5.2 branches on average, and had a portion derived from a vinyl-based monomer containing an alkoxysilyl group.

(Comparative Example 6) Hydrogenated Conjugated Diene-based Polymer (Sample B11)

A hydrogenated conjugated diene-based polymer (Sample B11) was obtained through the same procedures as those of Comparative Example 1 except that the amount of initial butadiene was changed to 2,700 g, that the amount of styrene was changed to 300 g, that the polar material was changed to 4.8 mmol of 2,2-bis(2-oxolanyl)propane (BOP), that the polymerization initiator was changed to 22 mmol of n-butyllithium, that the coupling agent was changed to 7.3 mmol of N,N-bis(trimethylsilyl)aminopropyl methyltriethoxysilane (Compound 1), that the reaction terminator was changed to 3.3 mmol of methanol, and that an integrated hydrogen flow rate was adjusted. Sample B11 had a hydrogenation rate of 60%.

Analysis results of Sample B11 are shown in Table 1-2.

It was found, as a result of measurement, that a structure of a conjugated diene-based polymer obtained before adding the coupling agent in Sample B11 had a linear polymer structure, and did not have a star polymer.

(Examples 6, 7, and 8) Hydrogenated Conjugated Diene-based Polymers (Samples B12, B13, and B14, respectively)

Hydrogenated conjugated diene-based polymers (Sample B12, Sample B13, and Sample B14) were obtained through the same procedures as those of Comparative Example 3 except that the amount of initial butadiene was changed to 2,295 g, that the amount of styrene was changed to 300 g, that the amount of additional butadiene was changed to 405 g, that the polar material was changed to 21 mmol of 2,2-bis(2-oxolanyl)propane (BOP), that the polymerization initiator was changed to 110 mmol of n-butyllithium, that the branching agent was changed to 35 mmol of dimethoxymethyl(4-vinylphenyl)silane (BS-2), that the coupling agent was changed to 5.9 mmol of N,N,N',N'-tetrakis(3-trimethoxysilylpropyl)-1,3-propanediamine (Compound 5), that the reaction terminator was changed to 8.6 mmol of methanol, and that an integrated hydrogen flow rate was adjusted. Sample B12, Sample B13, and Sample B14 had hydrogenation rates of 60.0%, 88.0%, and 93.0%, respectively.

Analysis results of Sample B12, Sample B13, and Sample B14 are shown in Table 1-2.

As a result of measurement, a structure of a conjugated diene-based polymer obtained before adding the coupling agent in each of Samples B12, B13 and B14 had a star polymer structure having 3.0 branches on average, and a conjugated diene-based polymer obtained after adding the coupling agent had, in a branched chain of 4 star structures on average, a portion derived from a vinyl-based monomer containing an alkoxysilyl group.

(Comparative Example 7) Hydrogenated Conjugated Diene-based Polymer (Sample B15)

A hydrogenated conjugated diene-based polymer (Sample B15) was obtained through the same procedures as those of Comparative Example 1 except that the amount of initial butadiene was changed to 1,950 g, that the amount of styrene was changed to 1,050 g, that the polar material was changed to 2.1 mmol of 2,2-bis(2-oxolanyl)propane (BOP), that the polymerization initiator was changed to 19 mmol of n-butyllithium, that the coupling agent was changed to 6.3 mmol of N,N-bis(trimethylsilyl)aminopropyl methyltriethoxysilane (Compound 1), that the reaction terminator was changed to 2.9 mmol of methanol, and that an integrated hydrogen flow rate was adjusted. Sample B15 had a hydrogenation rate of 50%.

Analysis results of Sample B15 are shown in Table 1-3.

It was found, as a result of measurement, that a structure of a conjugated diene-based polymer obtained before adding the coupling agent in Sample B15 had a linear polymer structure, and did not have a star polymer.

(Examples 9, 10, and 11) Hydrogenated Conjugated Diene-based Polymers (Samples B16, B17, and B18, respectively)

Hydrogenated conjugated diene-based polymers (Sample B16, Sample B17, and Sample B18) were obtained through the same procedures as those of Comparative Example 3 except that the amount of initial butadiene was changed to 1,560 g, that the amount of styrene was changed to 1,050 g, that the amount of additional butadiene was changed to 390 g, that the polar material was changed to 12 mmol of 2,2-bis(2-oxolanyl)propane (BOP), that the polymerization initiator was changed to 146 mmol of n-butyllithium, that the branching agent was changed to 30 mmol of trimethoxy(4-vinylphenyl) silane (BS-1), that the coupling agent was changed to 7.2 mmol of N,N,N',N'-tetrakis(3-trimethoxysilylpropyl)-1,3-propanediamine (Compound 5), that the reaction terminator was changed to 0 mmol of methanol, and that an integrated hydrogen flow rate was adjusted. Sample B16, Sample B17, and Sample B18 had hydrogenation rates of 39.0%, 64.0%, and 95.0%, respectively.

Analysis results of Sample B16, Sample B17, and Sample B18 are shown in Table 1-3.

As a result of measurement, a structure of a conjugated diene-based polymer obtained before adding the coupling agent in each of Samples B16, B17 and B18 had a star polymer structure having 3.9 branches on average, and a conjugated diene-based polymer obtained after adding the coupling agent had, in a branched chain of 4 star structures on average, a portion derived from a vinyl-based monomer containing an alkoxysilyl group.

(Comparative Example 8) Hydrogenated Conjugated Diene-based Polymer (Sample B19)

A hydrogenated conjugated diene-based polymer (Sample B19) was obtained through the same procedures as those of Comparative Example 1 except that the amount of initial butadiene was changed to 2,220 g, that the amount of styrene was changed to 780 g, that the polar material was changed to 5.5 mmol of 2,2-bis(2-oxolanyl)propane (BOP), that the polymerization initiator was changed to 19 mmol of n-butyllithium, that the coupling agent was changed to 6.3 mmol of N,N-bis(trimethylsilyl)aminopropyl methyltriethoxysilane (Compound 1), that the reaction terminator was changed to 2.9 mmol of methanol, and that an integrated hydrogen flow rate was adjusted. Sample B19 had a hydrogenation rate of 70%.

Analysis results of Sample B19 are shown in Table 1-4.

It was found, as a result of measurement, that a structure of a conjugated diene-based polymer obtained before adding the coupling agent in Sample B19 had a linear polymer structure, and did not have a star polymer.

(Comparative Example 9) Hydrogenated Conjugated Diene-based Polymer (Sample B23)

A hydrogenated conjugated diene-based polymer (Sample B23) was obtained through the same procedures as those of Comparative Example 1 except that the amount of initial butadiene was changed to 3,000 g, that the amount of styrene was changed to 0 g, that the polar material was changed to 4.3 mmol of 2,2-bis(2-oxolanyl)propane (BOP), that the polymerization initiator was changed to 21 mmol of n-butyllithium, that the coupling agent was changed to 6.9 mmol of N,N-bis(trimethylsilyl)aminopropyl methyltriethoxysilane (Compound 1), that the reaction terminator was changed to 3.2 mmol of methanol, and that an integrated hydrogen flow rate was adjusted. Sample B23 had a hydrogenation rate of 60%.

Analysis results of Sample B23 are shown in Table 1-5.

It was found, as a result of measurement, that a structure of a conjugated diene-based polymer obtained before adding the coupling agent in Sample B23 had a linear polymer structure, and did not have a star polymer.

(Examples 15, 16 and 17) Hydrogenated Conjugated Diene-based Polymers (Samples B24, B25, and B26, respectively)

Hydrogenated conjugated diene-based polymers (Sample B24, Sample B25, and Sample B26) were obtained through the same procedures as those of Comparative Example 1 except that the amount of initial butadiene was changed to 3,000 g, that the amount of styrene was changed to 0 g, that the polar material was changed to 6.8 mmol of 2,2-bis(2-oxolanyl)propane (BOP), that the polymerization initiator was changed to 45 mmol of n-butyllithium, that the coupling agent was changed to 4.5 mmol of N,N,N',N'-tetrakis(3-trimethoxysilylpropyl)-1,3-propanediamine (Compound 5), that the reaction terminator was changed to 6.9 mmol of methanol, and that an integrated hydrogen flow rate was adjusted. Sample B24, Sample B25, and Sample B26 had hydrogenation rates of 60%, 75%, and 94%, respectively.

Analysis results of Sample B24, Sample B25, and Sample B26 are shown in Table 1-5.

It was found, as a result of measurement, that a structure of a conjugated diene-based polymer obtained before adding the coupling agent in each of Samples B24, B25 and B26 had a linear polymer structure, and did not have a star polymer.

(Example 31) Hydrogenated Conjugated Diene-based Polymer (Sample B27)

A hydrogenated conjugated diene-based polymer (Sample B27) was obtained through the same procedures as those of Comparative Example 3 except that the amount of initial butadiene was changed to 1,887 g, that the amount of styrene was changed to 780 g, that the amount of additional butadiene was changed to 333 g, that the polar material was changed to 72 mmol of 2,2-bis(2-oxolanyl)propane (BOP), that the polymerization initiator was changed to 98 mmol of n-butyllithium, that the branching agent was changed to 22.6 mmol of trimethoxy(4-vinylphenyl)silane (BS-1), that the coupling agent was changed to 4.9 mmol of 2,2-dimethoxy-1-(3-trimethoxysilylpropyl)-1-aza-2-silacyclopentane (Compound 2), that the reaction terminator was changed to 3.7 mmol of methanol, and that an integrated hydrogen flow rate was adjusted. Sample B27 had a hydrogenation rate of 71%.

Analysis results of Sample B27 are shown in Table 1-5.

As a result of measurement, a structure of a conjugated diene-based polymer obtained before adding the coupling agent in Sample B27 had a star polymer structure having 3.9 branches on average, and a conjugated diene-based polymer obtained after adding the coupling agent had, in a branched chain of 3 star structures on average, a portion derived from a vinyl-based monomer containing an alkoxysilyl group.

[Table 1-1]

| | | | Comparative Example 1 | Comparative Example 2 | Comparative Example 3 | Example 1 | Example 2 | Comparative Example 4 | Comparative Example 5 | Example 4 | Example 5 | Example 31 |
|---|---|---|---|---|---|---|---|---|---|---|---|---|
| (Hydrogenated) Conjugated Diene-based Polymer | | Type | B1 | B2 | B3 | B4 | B5 | B6 | B8 | B9 | B10 | B27 |
| Initial Butadiene | | g | 2220 | 1887 | 1887 | 1887 | 1887 | 1887 | 2220 | 1887 | 1887 | 1887 |
| Additional Butadiene | | g | 0 | 333 | 333 | 333 | 333 | 333 | 0 | 333 | 333 | 333 |
| Styrene | | g | 780 | 780 | 780 | 780 | 780 | 780 | 780 | 780 | 780 | 780 |
| Cyclohexane | | g | 21000 | 21000 | 21000 | 21000 | 21000 | 21000 | 21000 | 21000 | 21000 | 21000 |
| n-Butyllithium | | mmol | 18 | 92 | 92 | 92 | 92 | 92 | 24 | 92 | 92 | 98 |
| BOP | | mmol | 15 | 69 | 69 | 69 | 69 | 69 | 19 | 69 | 69 | 72 |
| Branching Agent | Type | | - | BS-1 | BS-1 | BS-1 | BS-1 | BS-1 | - | BS-1 | BS-1 | BS-1 |
| | Amount Added | mmol | 0 | 18 | 18 | 18 | 18 | 18 | 0 | 18 | 25.4 | 22.6 |
| Coupling Agent | Type | | Compound 1 | Compound 2 | Compound 2 | Compound 2 | Compound 2 | Compound 2 | Compound 2 | Compound 2 + Compound 3 | Compound 4 | Compound 2 |
| | Amount Added | mmol | 6.0 | 8.0 | 8.0 | 8.0 | 8.0 | 8.0 | 4.3 | 4.0+4.0 | 9.8 | 4.9 |
| Methanol | | mmol | 3.0 | 5.7 | 5.7 | 5.7 | 5.7 | 5.7 | 5.3 | 5.7 | 5.3 | 3.7 |
| Hydrogenation Catalyst | Type | | T | - | T | T | T | T | T | T | T | T |
| | Amount Added | ppm | 60 | 0 | 60 | 60 | 60 | 60 | 60 | 60 | 60 | 60 |
| Conjugated Diene-based Polymer or Hydrogenated Conjugated Diene-based Polymer | Mooney Viscosity | | 56 | 60 | 55 | 52 | 65 | 66 | 64 | 55 | 56 | 67 |
| | Weight Average Molecular Weight | Ten thousand | 32 | 56 | 56 | 56 | 56 | 56 | 36 | 51 | 47 | 64 |
| | Component LM Content | mass% | 41.7 | 26.1 | 26.1 | 26.1 | 26.1 | 26.5 | 34.7 | 29 | 34.1 | 23.6 |
| | Modification Ratio | mass% | 80 | 82 | 82 | 81 | 81 | 81 | 71 | 40 | 60 | 85 |
| | Branch Number Bn | | 1.1 | 5.7 | 5.5 | 5.3 | 5.1 | 5.1 | 1.3 | 5.4 | 4.9 | 6.6 |

(continued)

| | | | Comparative Example 1 | Comparative Example 2 | Comparative Example 3 | Example 1 | Example 2 | Comparative Example 4 | Comparative Example 5 | Example 4 | Example 5 | Example 31 |
|---|---|---|---|---|---|---|---|---|---|---|---|---|
| | Absolute Molecular Weight | Ten thousand | 52 | 106 | 102 | 100 | 98 | 98 | 68 | 87 | 79 | 116 |
| | Styrene Content | mass% | 25.6 | 26.0 | 25.9 | 25.6 | 25.3 | 25.3 | 25.2 | 25.9 | 25.9 | 25.1 |
| | Hydrogenatio n Rate | % | 60.0 | 0.0 | 20.0 | 63.0 | 92.0 | 99.5 | 96.0 | 65.0 | 65.0 | 71.0 |
| | Expression (S) | | 55.8 | 55.0 | 55.2 | 55.8 | 55.1 | 54.9 | 55.1 | 55.2 | 55.2 | 54.7 |
| | Expression (T) | | 92 | 0 | 34 | 92 | 99.8 | 99.8 | 99.9 | 0 | 0 | 94 |
| | Cold Flow Property | Index | 100 | 92 | 93 | 82 | 68 | 67 | 94 | 80 | 87 | 76 |
| | | | Δ | ○ | ○ | ◎ | ◎◎ | ◎◎ | ○ | ◎ | ◎ | ◎◎ |

[Table 1-2]

<table>
<tr><th colspan="2"></th><th></th><th>Comparative Example 6</th><th>Example 6</th><th>Example 7</th><th>Example 8</th></tr>
<tr><td colspan="2">(Hydrogenated) Conjugated Diene-based Polymer</td><td>Type</td><td>B11</td><td>B12</td><td>B13</td><td>B14</td></tr>
<tr><td colspan="2">Initial Butadiene</td><td>g</td><td>2700</td><td>2295</td><td>2295</td><td>2295</td></tr>
<tr><td colspan="2">Additional Butadiene</td><td>g</td><td>0</td><td>405</td><td>405</td><td>405</td></tr>
<tr><td colspan="2">Styrene</td><td>g</td><td>300</td><td>300</td><td>300</td><td>300</td></tr>
<tr><td colspan="2">Cyclohexane</td><td>g</td><td>21000</td><td>21000</td><td>21000</td><td>21000</td></tr>
<tr><td colspan="2">n-Butyllithium</td><td>mmol</td><td>22</td><td>110</td><td>110</td><td>110</td></tr>
<tr><td colspan="2">BOP</td><td>mmol</td><td>4.8</td><td>21</td><td>21</td><td>21</td></tr>
<tr><td rowspan="2">Branching Agent</td><td>Type</td><td></td><td>-</td><td>BS-2</td><td>BS-2</td><td>BS-2</td></tr>
<tr><td>Amount Added</td><td>mmol</td><td>0</td><td>35</td><td>35</td><td>35</td></tr>
<tr><td rowspan="2">Coupling Agent</td><td>Type</td><td></td><td>Compound 1</td><td>Compound 5</td><td>Compound 5</td><td>Compound 5</td></tr>
<tr><td>Amount Added</td><td>mmol</td><td>7.3</td><td>5.9</td><td>5.9</td><td>5.9</td></tr>
<tr><td colspan="2">Methanol</td><td>mmol</td><td>3.3</td><td>8.6</td><td>8.6</td><td>8.6</td></tr>
<tr><td rowspan="2">Hydrogenation Catalyst</td><td>Type</td><td></td><td>T</td><td>T</td><td>T</td><td>T</td></tr>
<tr><td>Amount Added</td><td>ppm</td><td>60</td><td>60</td><td>60</td><td>60</td></tr>
<tr><td rowspan="12">Conjugated Diene-based Polymer or Hydrogenated Conjugated Diene-based Polymer</td><td>Mooney Viscosity</td><td></td><td>53</td><td>51</td><td>73</td><td>79</td></tr>
<tr><td>Weight Average Molecular Weight</td><td>Ten thousand</td><td>32</td><td>66</td><td>66</td><td>66</td></tr>
<tr><td>Component LM Content</td><td>mass%</td><td>36.8</td><td>25.4</td><td>25.4</td><td>25.4</td></tr>
<tr><td>Modification Ratio</td><td>mass%</td><td>80</td><td>78</td><td>78</td><td>78</td></tr>
<tr><td>Branch Number Bn</td><td></td><td>1.1</td><td>9.9</td><td>9.7</td><td>9.6</td></tr>
<tr><td>Absolute Molecular Weight</td><td>Ten thousand</td><td>53</td><td>120</td><td>117</td><td>115</td></tr>
<tr><td>Styrene Content</td><td>mass%</td><td>9.8</td><td>9.8</td><td>9.7</td><td>9.7</td></tr>
<tr><td>Hydrogenation Rate</td><td>%</td><td>60.0</td><td>60.0</td><td>88.0</td><td>93.0</td></tr>
<tr><td>Expression (S)</td><td></td><td>40.8</td><td>40.8</td><td>40.4</td><td>40.1</td></tr>
<tr><td>Expression (T)</td><td></td><td>97</td><td>97</td><td>99.1</td><td>99.7</td></tr>
<tr><td rowspan="2">Cold Flow Property</td><td rowspan="2">Index</td><td>100</td><td>78</td><td>68</td><td>65</td></tr>
<tr><td>Δ</td><td>◎◎</td><td>◎◎</td><td>◎◎</td></tr>
</table>

[Table 1-3]

| | | | Comparative Example 7 | Example 9 | Example 10 | Example 11 |
|---|---|---|---|---|---|---|
| (Hydrogenated) Conjugated Diene-based Polymer | | Type | B15 | B16 | B17 | B18 |
| Initial Butadiene | | g | 1950 | 1950 | 1950 | 1950 |
| Additional Butadiene | | g | 0 | 390 | 390 | 390 |
| Styrene | | g | 1050 | 1050 | 1050 | 1050 |
| Cyclohexane | | g | 21000 | 21000 | 21000 | 21000 |
| n-Butyllithium | | mmol | 19 | 146 | 146 | 146 |
| BOP | | mmol | 2.1 | 12 | 12 | 12 |
| Branching Agent | Type | | - | BS-1 | BS-1 | BS-1 |
| | Amount Added | mmol | 0 | 30 | 30 | 30 |
| Coupling Agent | Type | | Compound 1 | Compound 5 | Compound 5 | Compound 5 |
| | Amount Added | mmol | 6.3 | 7.2 | 7.2 | 7.2 |
| Methanol | | mmol | 2.9 | 0 | 0 | 0 |
| Hydrogenation Catalyst | Type | | T | T | T | T |
| | Amount Added | ppm | 60 | 60 | 60 | 60 |
| Conjugated Diene-based Polymer or Hydrogenated Conjugated Diene-based Polymer | Mooney Viscosity | | 64 | 37 | 67 | 91 |
| | Weight Average Molecular Weight | Ten thousand | 33 | 82 | 82 | 82 |
| | Component LM Content | mass% | 31.5 | 22.8 | 22.8 | 22.8 |
| | Modification Ratio | mass% | 80 | 83 | 83 | 38 |
| | Branch Number Bn | | 1.1 | 16.4 | 16.1 | 15.9 |
| | Absolute Molecular Weight | Ten thousand | 55 | 138 | 136 | 132 |
| | Styrene Content | mass% | 34.5 | 34.7 | 34.5 | 34.2 |
| | Hydrogenation Rate | % | 50.0 | 39.0 | 64.0 | 95.0 |
| | Expression (S) | | 26.4 | 26.6 | 26.4 | 26.0 |
| | Expression (T) | | 26.5 | 93 | 98 | 99.6 |
| | Cold Flow Property | Index | 100 | 90 | 77 | 60 |
| | | | Δ | ○ | ◎◎ | ◎◎ |

[Table 1-4]

| | | | Comparative Example 8 |
|---|---|---|---|
| (Hydrogenated) Conjugated Diene-based Polymer | Type | | B19 |
| Initial Butadiene | g | | 2220 |
| Additional Butadiene | g | | - |
| Styrene | g | | 780 |
| Cyclohexane | | g | 21000 |
| n-Butyllithium | | mmol | 19 |
| BOP | | mmol | 5.5 |
| Branching Agent | Type | | - |
| | Amount Added | mmol | 0 |
| Coupling Agent | Type | | Compound 1 |
| | Amount Added | mmol | 6.3 |
| Methanol | | mmol | 2.9 |
| Hydrogenation Catalyst | Type | | T |
| | Amount Added | ppm | 60 |
| Conjugated Diene-based Polymer or Hydrogenated Conjugated Diene-based Polymer | Mooney Viscosity | | 55 |
| | Weight Average Molecular Weight | Ten thousand | 31 |
| | Component LM Content | mass% | 31.1 |
| | Modification Ratio | mass% | 80 |
| | Branch Number Bn | | 1.1 |
| | Absolute Molecular Weight | Ten thousand | 53 |
| | Styrene Content | mass% | 25.4 |
| | Hydrogenation Rate | % | 70.0 |
| | Expression (S) | | 45.6 |
| | Expression (T) | | 97 |
| | Cold Flow Property | Index | 100 |
| | | | Δ |

[Table 1-5]

| | | Comparative Example 9 | Example 15 | Example 16 | Example 17 |
|---|---|---|---|---|---|
| (Hydrogenated) Conjugated Diene-based Polymer | Type | B23 | B24 | B25 | B26 |
| Initial Butadiene | g | 3000 | 3000 | 3000 | 3000 |
| Additional Butadiene | g | - | - | - | - |
| Styrene | g | 0 | 0 | 0 | 0 |
| Cyclohexane | g | 21000 | 21000 | 21000 | 21000 |
| n-Butyllithium | mmol | 21 | 45 | 45 | 45 |

(continued)

| | | | Comparative Example 9 | Example 15 | Example 16 | Example 17 |
|---|---|---|---|---|---|---|
| BOP | | mmol | 4.3 | 6.8 | 6.8 | 6.8 |
| Branching Agent | Type | | - | - | - | - |
| | Amount Added | mmol | 0 | 0 | 0 | 0 |
| Coupling Agent | Type | | Compound 1 | Compound 5 | Compound 5 | Compound 5 |
| | Amount Added | mmol | 6.9 | 4.5 | 4.5 | 4.5 |
| Methanol | | mmol | 3.2 | 6.9 | 6.9 | 6.9 |
| Hydrogenation Catalyst | Type | | T | T | T | T |
| | Amount Added | ppm | 60 | 60 | 60 | 60 |
| Conjugated Diene-based Polymer or Hydrogenated Conjugated Diene-based Polymer | Mooney Viscosity | | 63 | 60 | 74 | 96 |
| | Weight Average Molecular Weight | Ten thousand | 33 | 59 | 59 | 59 |
| | Component LM Content | mass% | 29.1 | 27.9 | 27.9 | 27.9 |
| | Modification Ratio | mass% | 80 | 81 | 81 | 81 |
| | Branch Number Bn | | 1.1 | 5.9 | 5.6 | 5.5 |
| | Absolute Molecular Weight | Ten thousand | 56 | 103 | 101 | 100 |
| | Styrene Content | mass% | 0 | 0 | 0 | 0 |
| | Hydrogenation Rate | % | 60.0 | 60.0 | 75.0 | 94.0 |
| | Expression (S) | | 40.7 | 40.7 | 40.4 | 40.2 |
| | Expression (T) | | 94 | 94 | 98 | 99 |
| | Cold Flow Property | Index | 100 | 90 | 82 | 75 |
| | | | Δ | ○ | ◎ | ◎◎ |

Branching agents and coupling agents shown in Tables 1-1 to 1-5 are the following compounds.

[Branching Agent]

BS-1: trimethoxy(4-vinylphenyl)silane

BS-2: dimethoxymethyl(4-vinylphenyl)silane

[Coupling Agent]

Compound 1: N,N-bis(trimethylsilyl)aminopropyl methyltriethoxysilane
Compound 2: 2,2-dimethoxy-1-(3-trimethoxysilylpropyl)-1-aza-2-silacyclopentane
Compound 3: silicon tetrachloride
Compound 4: 1,3-dimethyl-2-imidazolidinone
Compound 5: N,N,N',N'-tetrakis(3-trimethoxysilylpropyl)-1,3-propanediamine

[Application Examples 1 to 2, 4 to 11, and 15 to 17, and Application Comparative Examples 1 to 9, and Application Example 33]

Samples B1 to B6, B8 to B19, B23 to B26, and B27 shown in Tables 1-1 to 1-5 were used as raw material rubber components to obtain rubber compositions containing the respective raw material rubber components in accordance with the following compounding conditions C.

(Rubber Component)

- Conjugated diene-based polymer or hydrogenated conjugated diene-based polymer (each of Samples B1 to B6, B8 to B19, B23 to B26, and B27): 100 parts by mass

(Compounding Conditions C)

An amount of each agent to be compounded is expressed in parts by mass based on 100 parts by mass of a rubber component not containing a rubber softener.

- Silica 1 (trade name "Ultrasil 7000GR" manufactured by Evonik Degussa, nitrogen adsorption specific surface area: 170 $m^2/g$): 50.0 parts by mass
- Silica 2 (trade name "Zeosil Premium 200MP" manufactured by Rhodia, nitrogen adsorption specific surface area: 220 $m^2/g$): 25.0 parts by mass
- Carbon black (trade name "Seast KH (N339)", manufactured by Tokai Carbon Co., Ltd.): 5.0 parts by mass
- Silane coupling agent: (trade name "Si75", manufactured by Evonik Degussa, bis(triethoxysilylpropyl)disulfide): 6.0 parts by mass
- SRAE oil (trade name "Process NC140", manufactured by JX Nippon Oil & Energy Corporation): 25.0 parts by mass
- Zinc oxide: 2.5 parts by mass
- Stearic acid: 1.0 part by mass
- Anti-aging agent (N-(1,3-dimethylbutyl)-N'-phenyl-p-phenylenediamine): 2.0 parts by mass
- Sulfur: 2.2 parts by mass
- Vulcanization accelerator 1 (N-cyclohexyl-2-benzothiazylsulfinamide): 1.7 parts by mass
- Vulcanization accelerator 2 (diphenylguanidine): 2.0 parts by mass

Total: 222.4 parts by mass

(Kneading Method)

The above-described materials were kneaded by the following method to obtain a rubber composition. A closed kneader (having an internal volume of 0.3 L) equipped with a temperature controller was used to knead, as a first stage of kneading, the raw material rubber component (each of Samples B1 to B6, B8 to B19, B23 to B26, and B27), the fillers (silica 1, silica 2 and carbon black), the silane coupling agent, the SRAE oil, zinc oxide and stearic acid under conditions of a filling ratio of 65% and a rotor rotation speed of 30 to 50 rpm. Here, the temperature of the closed mixer was controlled to obtain each rubber composition (compound) at a discharging temperature of 155 to 160°C.

Next, after cooling the compound obtained as described above to room temperature, as a second stage of the kneading, the anti-aging agent was added thereto, and the resultant was kneaded again to improve dispersibility of the silica. Also in this case, the discharging temperature for the compound was adjusted to 155 to 160°C by the temperature control of the mixer. After cooling, as a third stage of the kneading, sulfur and the vulcanization accelerators 1 and 2 were

added, and the resultant was kneaded by an open roll set to 70°C to obtain a rubber composition (a conjugated diene-based polymer composition or a hydrogenated conjugated diene-based polymer composition). Thereafter, the resultant rubber composition was molded and vulcanized at 160°C for 20 minutes by a vulcanizing press. The rubber composition prior to the vulcanization, and the rubber composition after the vulcanization were evaluated. Specifically, evaluations were performed as described below.

Results of Application Comparative Examples 1 to 4, Application Comparative Examples 6 to 9, Application Examples 1 to 2, Application Examples 4 to 11, Application Examples 15 to 17, and Application Example 33 are shown in Tables 2-1 to 2-5.

Results of Application Comparative Example 5 are shown in Table 3.

(Mooney Viscosity of Compound)

Each compound obtained after the second stage of the kneading and before the third stage of the kneading was used as a sample to measure a viscosity by using a Mooney viscometer in accordance with ISO 289 after preheating the compound at 130°C for 1 minute, and after rotating a rotor for 4 minutes at 2 rpm.

A result of each of Application Comparative Examples 2 to 4 and Application Examples 1 to 2 and 4 to 5 was shown as an index obtained assuming that a result of Application Comparative Example 1 was 100. A result of each of Application Examples 6 to 8 was shown as an index obtained assuming that a result of Application Comparative Example 6 was 100. A result of each of Application Examples 9 to 11 was shown as an index obtained assuming that a result of Application Comparative Example 7 was 100. A result was shown as an index obtained assuming that a result of Application Comparative Example 8 was 100. A result of each of Application Examples 15 to 17 was shown as an index obtained assuming that a result of Application Comparative Example 9 was 100. A result of Application Example 33 was shown as an index obtained assuming that a result of Application Comparative Example 1 was 100. A result of Application Comparative Example 5 was shown as an index obtained assuming that a result of Application Comparative Example 10 obtained under compounding conditions D described below was 100. A lower index indicates better processability.

A sample having an index of 79 or less was evaluated as very good (shown as ◎◎ in the tables), a sample having an index of 80 to 89 was evaluated as good (shown as ◎ in the tables), a sample having an index of 90 to 99 was evaluated to have no practical problem (shown as ○ in the tables), a sample having an index of 100 to 105 was evaluated as rather poor (shown as △ in the tables), and a sample having an index of 105 or more was evaluated to have a practical problem (shown as × in the tables).

(Breaking Strength and Elongation at Break, and Fracture Performance)

Breaking strength and elongation at break were measured in accordance with a tensile test method according to JIS K6251. In addition, a product of measured values of breaking strength and elongation at break was defined as fracture performance.

A result of each of Application Comparative Examples 2 to 4 and Application Examples 1 to 2 and 4 to 5 was shown as an index obtained assuming that a result of Application Comparative Example 1 was 100. A result of each of Application Examples 6 to 8 was shown as an index obtained assuming that a result of Application Comparative Example 6 was 100. A result of each of Application Examples 9 to 11 was shown as an index obtained assuming that a result of Application Comparative Example 7 was 100. A result was shown as an index obtained assuming that a result of Application Comparative Example 8 was 100. A result of each of Application Examples 15 to 17 was shown as an index obtained assuming that a result of Application Comparative Example 9 was 100. A result of Application Example 33 was shown as an index obtained assuming that a result of Application Comparative Example 1 was 100. A result of Application Comparative Example 5 was shown as an index obtained assuming that a result of Application Comparative Example 10 obtained under compounding conditions D described below was 100. A higher index indicates that breaking strength, elongation at break (fracture strength), and fracture performance are better.

A sample having an index of 121 or more was evaluated as very good (shown as ◎◎ in the tables), a sample having an index of 111 to 120 was evaluated as good (shown as ◎ in the tables), a sample having an index of 101 to 110 was evaluated to have no practical problem (shown as ○ in the tables), a sample having an index of 95 to 100 was evaluated as rather poor (shown as △ in the tables), and a sample having an index of 94 or less was evaluated to have a practical problem (shown as × in the tables).

(Low Fuel Consumption Performance)

A viscoelasticity testing machine "ARES" manufactured by Rheometric Scientific, Inc. was used to measure a viscoelasticity parameter in a torsion mode.

A tan $\delta$ measured at 50°C at a frequency of 10 Hz and strain of 3% was used as an index of fuel efficiency.

A result of each of Application Comparative Examples 2 to 4 and Application Examples 1 to 2 and 4 to 5 was shown as an index obtained assuming that a result of Application Comparative Example 1 was 100. A result of each of Application Examples 6 to 8 was shown as an index obtained assuming that a result of Application Comparative Example 6 was 100. A result of each of Application Examples 9 to 11 was shown as an index obtained assuming that a result of Application Comparative Example 7 was 100. A result was shown as an index obtained assuming that a result of Application Comparative Example 8 was 100. A result of each of Application Examples 15 to 17 was shown as an index obtained assuming that a result of Application Comparative Example 9 was 100. A result of Application Example 33 was shown as an index obtained assuming that a result of Application Comparative Example 1 was 100.

A sample having an index of 121 or more was evaluated as very good (shown as ◎◎ in the tables), a sample having an index of 111 to 120 was evaluated as good (shown as ◎ in the tables), a sample having an index of 101 to 110 was evaluated to have no practical problem (shown as ○ in the tables), a sample having an index of 95 to 100 was evaluated as rather poor (shown as △ in the tables), and a sample having an index of 94 or less may be deteriorated in fuel efficiency as compared with a standard product, and may be lowered in grade of labelling system (shown as × in the tables). Results are shown in Tables 2-1 to 2-5, and Table 3.

[Application Comparative Example 10]

Sample B8 shown in Table 1-1 was used as a raw material rubber component to obtain a rubber composition containing the raw material rubber component under the following compounding conditions D:

(Rubber Component)

- Conjugated diene-based polymer or hydrogenated conjugated diene-based polymer (Sample B8): 100 parts by mass

(Compounding Conditions D)

An amount of each agent to be compounded is expressed in parts by mass based on 100 parts by mass of a rubber component not containing a rubber softener.

- Silica 1 (trade name "Ultrasil 7000GR" manufactured by Evonik Degussa, nitrogen adsorption specific surface area: 170 $m^2/g$): 50.0 parts by mass
- Silica 2 (trade name "Zeosil Premium 200MP" manufactured by Rhodia, nitrogen adsorption specific surface area: 220 $m^2/g$): 25.0 parts by mass
- Carbon black (trade name "Seast KH (N339)", manufactured by Tokai Carbon Co., Ltd.): 5.0 parts by mass
- Silane coupling agent: (trade name "Si75", manufactured by Evonik Degussa, bis(triethoxysilylpropyl)disulfide): 6.0 parts by mass
- SRAE oil (trade name "Process NC140", manufactured by JX Nippon Oil & Energy Corporation): 15.0 parts by mass
- Zinc oxide: 2.5 parts by mass
- Stearic acid: 1.0 part by mass
- Anti-aging agent (N-(1,3-dimethylbutyl)-N'-phenyl-p-phenylenediamine): 2.0 parts by mass
- Sulfur: 2.2 parts by mass
- Vulcanization accelerator 1 (N-cyclohexyl-2-benzothiazylsulfinamide): 1.7 parts by mass
- Vulcanization accelerator 2 (diphenylguanidine): 2.0 parts by mass

Total: 212.4 parts by mass

(Kneading Method)

The above-described materials were kneaded by the following method to obtain a rubber composition. A closed kneader (having an internal volume of 0.3 L) equipped with a temperature controller was used to knead, as a first stage of kneading, the raw material rubber component (Sample B8), the fillers (silica 1, silica 2 and carbon black), the silane coupling agent, the SRAE oil, zinc oxide and stearic acid under conditions of a filling ratio of 65% and a rotor rotation speed of 30 to 50 rpm. Here, the temperature of the closed mixer was controlled to obtain each rubber composition (compound) at a discharging temperature of 155 to 160°C.

Next, after cooling the compound obtained as described above to room temperature, as a second stage of the kneading, the anti-aging agent was added thereto, and the resultant was kneaded again to improve dispersibility of the

silica. Also in this case, the discharging temperature for the compound was adjusted to 155 to 160°C by the temperature control of the mixer. After cooling, as a third stage of the kneading, sulfur and the vulcanization accelerators 1 and 2 were added, and the resultant was kneaded by an open roll set to 70°C to obtain a rubber composition. Thereafter, the resultant rubber composition was molded and vulcanized at 160°C for 20 minutes by a vulcanizing press. The rubber composition prior to the vulcanization, and the rubber composition after the vulcanization were evaluated. Specifically, evaluations were performed as described below. Results are shown in Table 3.

(Mooney Viscosity of Compound)

Each compound obtained after the second stage of the kneading and before the third stage of the kneading was used as a sample to measure a viscosity by using a Mooney viscometer in accordance with ISO 289 after preheating the compound at 130°C for 1 minute, and after rotating a rotor for 4 minutes at 2 rpm.

A result was shown as an index obtained assuming that a result of Application Comparative Example 10 obtained under the compounding conditions D was 100. A lower index indicates better processability.

A sample having an index of 79 or less was evaluated as very good (shown as ◎◎ in the tables), a sample having an index of 80 to 89 was evaluated as good (shown as ◎ in the tables), a sample having an index of 90 to 99 was evaluated to have no practical problem (shown as ○ in the tables), a sample having an index of 100 to 105 was evaluated as rather poor (shown as △ in the tables), and a sample having an index of 105 or more was evaluated to have a practical problem (shown as × in the tables).

(Breaking Strength and Elongation at Break, and Fracture Performance)

Breaking strength and elongation at break were measured in accordance with a tensile test method according to JIS K6251. In addition, a product of measured values of breaking strength and elongation at break was defined as fracture performance.

A result was shown as an index obtained assuming that a result of Application Comparative Example 10 obtained under the compounding conditions D was 100. A higher index indicates that breaking strength, elongation at break (fracture strength), and fracture performance are better.

A sample having an index of 121 or more was evaluated as very good (shown as ◎◎ in the tables), a sample having an index of 111 to 120 was evaluated as good (shown as ◎ in the tables), a sample having an index of 101 to 110 was evaluated to have no practical problem (shown as ○ in the tables), a sample having an index of 95 to 100 was evaluated as rather poor (shown as △ in the tables), and a sample having an index of 94 or less was evaluated to have a practical problem (shown as × in the tables).

[Table 2-1]

| | | | Application Comparative Example 1 | Application Comparative Example 2 | Application Comparative Example 3 | Application Example 1 | Application Example 2 | Application Comparative Example 4 | Application Example 4 | Application Example 5 | Application Example 33 |
|---|---|---|---|---|---|---|---|---|---|---|---|
| (Hydrogenated) Conjugated Diene-based Polymer | | Type | B1 | B2 | B3 | B4 | B5 | B6 | B9 | B10 | B27 |
| Compounding Conditions | | - | C | C | C | C | C | C | C | C | C |
| Physical Properties of Composition | Mooney Viscosity of Compound | Index | 100 | 90 | 88 | 94 | 99 | 103 | 83 | 90 | 89 |
| | | | Δ | ○ | ◎ | ○ | ○ | Δ | ◎ | ○ | ◎ |
| | Breaking Strength | Index | 100 | 90 | 95 | 113 | 120 | 20 | 106 | 110 | 107 |
| | | | Δ | × | Δ | ◎ | ◎ | × | ○ | ○ | ○ |
| | Elongation at Break | Index | 100 | 92 | 95 | 115 | 123 | 115 | 107 | 115 | 109 |
| | | | Δ | × | Δ | ◎ | ◎◎ | ◎ | ○ | ◎ | ○ |
| | Fracture Performance | Index | 100 | 83 | 90 | 130 | 148 | 23 | 113 | 127 | 117 |
| | | | Δ | × | × | ◎◎ | ◎◎ | × | ◎ | ◎◎ | ◎ |
| | Low Fuel Consumption Performance | Index | 100 | 86 | 93 | 109 | 85 | 65 | 97 | 102 | 114 |
| | | | Δ | × | × | ○ | × | × | Δ | ○ | ◎ |

[Table 2-2]

| | | | Application Comparative Example 6 | Application Example 6 | Application Example 7 | Application Example 8 |
|---|---|---|---|---|---|---|
| (Hydrogenated) Conjugated Diene-based Polymer | | Type | B11 | B12 | B13 | B14 |
| Compounding Conditions | | - | C | C | C | C |
| Physical Properties of Composition | Mooney Viscosity of Compound | Index | 100 | 87 | 92 | 95 |
| | | | △ | ◎ | ○ | ○ |
| | Breaking Strength | Index | 100 | 106 | 119 | 124 |
| | | | △ | ○ | ◎ | ◎◎ |
| | Elongation at Break | Index | 100 | 107 | 116 | 119 |
| | | | △ | ○ | ◎ | ◎ |
| | Fracture Performance | Index | 100 | 113 | 138 | 148 |
| | | | △ | ◎ | ◎◎ | ◎◎ |
| | Low Fuel Consumption Performance | Index | 100 | 110 | 99 | 90 |
| | | | △ | ○ | △ | × |

[Table 2-3]

| | | | Application Comparative Example 7 | Application Example 9 | Application Example 10 | Application Example 11 |
|---|---|---|---|---|---|---|
| (Hydrogenated) Conjugated Diene-based Polymer | | Type | B15 | B16 | B17 | B18 |
| Compounding Conditions | | - | C | C | C | C |
| Physical Properties of Composition | Mooney Viscosity of Compound | Index | 100 | 84 | 86 | 102 |
| | | | △ | ◎ | ◎ | △ |
| | Breaking Strength | Index | 100 | 105 | 116 | 131 |
| | | | △ | ○ | ◎ | ◎◎ |
| | Elongation at Break | Index | 100 | 106 | 120 | 135 |
| | | | △ | ○ | ◎ | ◎◎ |
| | Fracture Performance | Index | 100 | 111 | 139 | 177 |
| | | | △ | ◎ | ◎◎ | ◎◎ |
| | Low Fuel Consumption Performance | Index | 100 | 106 | 122 | 95 |
| | | | △ | ○ | ◎◎ | △ |

[Table 2-4]

| | | Application Comparative Example 8 |
|---|---|---|
| (Hydrogenated) Conjugated Diene-based Polymer | Type | B19 |

(continued)

| | | | Application Comparative Example 8 |
|---|---|---|---|
| Compounding Conditions | | - | C |
| Physical Properties of Composition | Mooney Viscosity of Compound | Index | 100 |
| | | | △ |
| | Breaking Strength | Index | 100 |
| | | | △ |
| | Elongation at Break | Index | 100 |
| | | | △ |
| | Fracture Performance | Index | 100 |
| | | | △ |
| | Low Fuel Consumption Performance | Index | 100 |
| | | | △ |

[Table 2-5]

| | | | Application Comparative Example 9 | Application Example 15 | Application Example 16 | Application Example 17 |
|---|---|---|---|---|---|---|
| (Hydrogenated) Conjugated Diene-based Polymer | | Type | B23 | B24 | B25 | B26 |
| Compounding Conditions | | - | C | C | C | C |
| Physical Properties of Composition | Mooney Viscosity of Compound | Index | 100 | 83 | 93 | 100 |
| | | | △ | ◎ | ○ | △ |
| | Breaking Strength | Index | 100 | 102 | 106 | 110 |
| | | | △ | ○ | ○ | ○ |
| | Elongation at Break | Index | 100 | 103 | 105 | 109 |
| | | | △ | ○ | ○ | ○ |
| | Fracture Performance | Index | 100 | 105 | 111 | 120 |
| | | | △ | ○ | ◎ | ◎ |
| | Low Fuel Consumption Performance | Index | 100 | 111 | 107 | 94 |
| | | | △ | ◎ | ○ | × |

[Table 3]

| | | Application Comparative Example 5 | Application Comparative Example 10 |
|---|---|---|---|
| (Hydrogenated) Conjugated Diene-based Polymer | Type | B8 | B8 |
| Compounding Conditions | - | C | D |

(continued)

| | | | Application Comparative Example 5 | Application Comparative Example 10 |
|---|---|---|---|---|
| Physical Properties of Composition | Mooney Viscosity of Compound | Index | 88 | 100 |
| | | | ◎ | △ |
| | Breaking Strength | Index | 92 | 100 |
| | | | × | △ |
| | Elongation at Break | Index | 104 | 100 |
| | | | ○ | △ |
| | Fracture Performance | Index | 94 | 100 |
| | | | × | △ |

[Production of Hydrogenated Conjugated Diene-based Polymer Composition (Oil-extended Polymer)]

(Comparative Example 10) Hydrogenated Conjugated Diene-based Polymer Composition (Sample C1)

Two tank pressure vessels, each of which is a stirrer-equipped tank reactor having an internal volume of 10 L and a ratio (L/D) of internal height (L) and diameter (D) of 4.0, having an inlet at a bottom and an outlet at a top, and equipped with a stirrer and a temperature controlling jacket, were connected to each other as polymerization reactors.

1,3-Butadiene (initial butadiene), styrene and n-hexane, from which a water content had been precedently removed, were mixed under conditions of 17.7 g/min, 10.9 g/min and 175.2 g/min, respectively. In a static mixer provided in the middle of a pipe for supplying the thus obtained mixed solution to the inlet of the reactor, n-butyllithium (n-butyllithium for treatment) to be used for residual impurity inactivation was added and mixed at a rate of 0.105 mmol/min, and the resultant was continuously supplied to the bottom of the reactor. Besides, 2,2-bis(2-oxolanyl)propane (BOP) used as a polar material and n-butyllithium (n-butyllithium for polymerization initiation) used as a polymerization initiator were supplied, at rates of 0.034 mmol/min and 0.122 mmol/min, respectively, to the bottom of the first reactor, in which materials were vigorously mixed by the stirrer, for starting polymerization, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor.

Next, to the polymer solution flowing out of an outlet of the reactor, N,N-bis(trimethylsilyl)aminopropyl methyltriethoxysilane (Compound 1) was added, as a coupling agent, continuously at a rate of 0.041 mmol/min, and the resultant was mixed by using the static mixer for performing a coupling reaction. Here, a time until the addition of the coupling agent to the polymer solution flowing out of the outlet of the reactor was 4.8 min, the temperature was 68°C, and a difference between the temperature in the polymerizing step and the temperature until the addition of the coupling agent was 2°C.

Next, to the polymer solution resulting from the coupling reaction, methanol was added as a reaction terminator at a rate of 0.019 mmol/min.

The thus obtained conjugated diene-based polymer solution was transferred to another reactor, the hydrogenation catalyst (T) prepared as described above was added thereto in an amount, in terms of Ti, of 60 ppm per 100 parts by mass of the conjugated diene-based polymer, and a hydrogenation reaction was performed at a hydrogen pressure of 0.8 MPa and an average temperature of 85°C for 30 minutes to obtain a solution of a hydrogenated conjugated diene-based polymer. A hydrogenation rate of a butadiene-derived structural unit in the thus obtained hydrogenated conjugated diene-based polymer was 50.0%.

Next, to the resultant solution of the hydrogenated conjugated diene-based polymer, an antioxidant (BHT) was continuously added in an amount of 0.2 g per 100 g of the polymer. Simultaneously with the antioxidant, an SRAE oil (JOMO Process NC140, manufactured by JX Nippon Oil & Energy Corporation) was continuously added as a rubber softener in an amount of 25.0 g per 100 g of the polymer, and the resultant was mixed by using a static mixer. The solvent was removed by steam stripping, and thus, a hydrogenated conjugated diene-based polymer composition (Sample C1) was obtained.

Physical properties of Sample C1 are shown in Table 4-1.

It was found, as a result of measurement, that a structure of a conjugated diene-based polymer obtained before adding the coupling agent in Sample C1 had a linear polymer structure, and did not have a star polymer.

(Comparative Example 11) Conjugated Diene-based Polymer Composition (Sample C2)

Two tank pressure vessels, each of which is a stirrer-equipped tank reactor having an internal volume of 10 L and a ratio (L/D) of internal height (L) and diameter (D) of 4.0, having an inlet at a bottom and an outlet at a top, and equipped with a stirrer and a temperature controlling jacket, were connected to each other as polymerization reactors.

1,3-Butadiene (initial butadiene), styrene and n-hexane, from which a water content had been precedently removed, were mixed under conditions of 14.2 g/min, 10.9 g/min and 175.2 g/min, respectively. In a static mixer provided in the middle of a pipe for supplying the thus obtained mixed solution to the inlet of the reactor, n-butyllithium (n-butyllithium for treatment) to be used for residual impurity inactivation was added and mixed at a rate of 0.105 mmol/min, and the resultant was continuously supplied to the bottom of the reactor. Besides, 2,2-bis(2-oxolanyl)propane (BOP) used as a polar material and n-butyllithium (n-butyllithium for polymerization initiation) used as a polymerization initiator were supplied, at rates of 0.056 mmol/min and 0.215 mmol/min, respectively, to the bottom of the first reactor, in which materials were vigorously mixed by the stirrer, for starting polymerization, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor. When the polymerization was sufficiently stabilized, with copolymerizing 1,3-butadiene and styrene, trimethoxy(4-vinylphenyl)silane (BS-1) was added as a branching agent from the bottom of the second reactor at a rate of 0.032 mmol/min to perform a polymerization reaction and a branching reaction for obtaining a conjugated diene-based polymer having a main chain branch structure.

Next, from a middle portion of the second reactor, 1,3-butadiene (additional butadiene), from which a water content had been precedently removed, was additionally added under a condition of 3.5 g/min to further perform the polymerization reaction.

Next, to the polymer solution flowing out of an outlet of the reactor, N,N,N',N'-tetrakis(3-trimethoxysilylpropyl)-1,3-propanediamine (Compound 5) was added, as a coupling agent, continuously at a rate of 0.013 mmol/min, and the resultant was mixed by using a static mixer for performing a coupling reaction. Here, a time until the addition of the coupling agent to the polymer solution flowing out of the outlet of the reactor was 4.8 min, the temperature was 68°C, and a difference between the temperature in the polymerizing process and the temperature until the addition of the coupling agent was 2°C.

Next, to the polymer solution resulting from the coupling reaction, methanol was added as a reaction terminator at a rate of 0.018 mmol/min, and then an antioxidant (BHT) was continuously added in an amount of 0.2 g per 100 g of the polymer at a rate of 0.055 g/min (n-hexane solution). Simultaneously with the antioxidant, an SRAE oil (JOMO Process NC140, manufactured by JX Nippon Oil & Energy Corporation) was continuously added as a rubber softener in an amount of 25.0 g per 100 g of the polymer, and the resultant was mixed by using a static mixer. The solvent was removed by steam stripping, and thus, a conjugated diene-based polymer (Sample C2) was obtained.

Physical properties of Sample C2 are shown in Table 4-1.

In each of the polymer obtained before adding the branching agent, the polymer obtained after adding the branching agent, and the polymer obtained after adding the coupling agent, the structure of the conjugated diene-based polymer was identified based on comparison between a molecular weight obtained by GPC measurement and a branch number obtained by viscosity detector-equipped GPC measurement. Hereinafter, the structure of each sample was similarly identified. As a result of the measurement, a structure of a conjugated diene-based polymer obtained after adding the branching agent in Sample C2 had a star polymer structure having 4.2 branches on average, and a conjugated diene-based polymer obtained after adding the coupling agent had, in a branched chain of 4 star structures on average, a portion derived from a vinyl-based monomer containing an alkoxysilyl group.

(Comparative Example 12) Hydrogenated Conjugated Diene-based Polymer Composition (Sample C3)

Two tank pressure vessels, each of which is a stirrer-equipped tank reactor having an internal volume of 10 L and a ratio (L/D) of internal height (L) and diameter (D) of 4.0, having an inlet at a bottom and an outlet at a top, and equipped with a stirrer and a temperature controlling jacket, were connected to each other as polymerization reactors.

1,3-Butadiene (initial butadiene), styrene and n-hexane, from which a water content had been precedently removed, were mixed under conditions of 14.2 g/min, 10.9 g/min and 175.2 g/min, respectively. In a static mixer provided in the middle of a pipe for supplying the thus obtained mixed solution to the inlet of the reactor, n-butyllithium (n-butyllithium for treatment) to be used for residual impurity inactivation was added and mixed at a rate of 0.105 mmol/min, and the resultant was continuously supplied to the bottom of the reactor. Besides, 2,2-bis(2-oxolanyl)propane (BOP) used as a polar material and n-butyllithium (n-butyllithium for polymerization initiation) used as a polymerization initiator were supplied, at rates of 0.056 mmol/min and 0.215 mmol/min, respectively, to the bottom of the first reactor, in which materials were vigorously mixed by the stirrer, for starting polymerization, and the internal temperature of the reactor was kept at 67°C.

The thus obtained polymer solution was continuously taken out from the top of the first reactor to be continuously

supplied to the bottom of the second reactor for continuing the reaction at 70°C, and the resultant was further supplied to a static mixer from the top of the second reactor. When the polymerization was sufficiently stabilized, with copolymerizing 1,3-butadiene and styrene, trimethoxy(4-vinylphenyl)silane (BS-1) was added as a branching agent from the bottom of the second reactor at a rate of 0.032 mmol/min to perform a polymerization reaction and a branching reaction for obtaining a conjugated diene-based polymer having a main chain branch structure.

Next, from a middle portion of the second reaction, 1,3-butadiene (additional butadiene), from which a water content had been precedently removed, was additionally added under a condition of 3.5 g/min to further perform the polymerization reaction.

Next, to the polymer solution flowing out of an outlet of the reactor, N,N,N',N'-tetrakis(3-trimethoxysilylpropyl)-1,3-propanediamine (Compound 5) was added, as a coupling agent, continuously at a rate of 0.013 mmol/min, and the resultant was mixed by using a static mixer for performing a coupling reaction. Here, a time until the addition of the coupling agent to the polymer solution flowing out of the outlet of the reactor was 4.8 min, the temperature was 68°C, and a difference between the temperature in the polymerizing process and the temperature until the addition of the coupling agent was 2°C.

Next, to the polymer solution resulting from the coupling reaction, methanol was added as a reaction terminator at a rate of 0.018 mmol/min to obtain a solution of a conjugated diene-based polymer.

The thus obtained solution of the conjugated diene-based polymer was transferred to another reactor, the hydrogenation catalyst (T) prepared as described above was added thereto in an amount, in terms of Ti, of 60 ppm per 100 parts by mass of the conjugated diene-based polymer, and a hydrogenation reaction was performed at a hydrogen pressure of 0.8 MPa and an average temperature of 85°C for 20 minutes to obtain a solution of a hydrogenated conjugated diene-based polymer. A hydrogenation rate of a butadiene-derived structural unit in the thus obtained hydrogenated conjugated diene-based polymer was 20.0%.

Next, to the resultant solution of the hydrogenated conjugated diene-based polymer, an antioxidant (BHT) was continuously added in an amount of 0.2 g per 100 g of the polymer. Simultaneously with the antioxidant, an SRAE oil (JOMO Process NC140, manufactured by JX Nippon Oil & Energy Corporation) was continuously added as a rubber softener in an amount of 25.0 g per 100 g of the polymer, and the resultant was mixed by using a static mixer. The solvent was removed by steam stripping, and thus, a hydrogenated conjugated diene-based polymer composition (Sample C3) was obtained.

Physical properties of Sample C3 are shown in Table 4-1.

As a result of measurement, a structure of a conjugated diene-based polymer obtained after adding the branching agent in Sample C3 had a star polymer structure having 4.2 branches on average, and a conjugated diene-based polymer obtained after adding the coupling agent had, in a branched chain of 4 star structures on average, a portion derived from a vinyl-based monomer containing an alkoxysilyl group.

(Examples 18 to 20) Hydrogenated Conjugated Diene-based Polymer Compositions (Samples C4, C5 and C6, respectively)

Hydrogenated conjugated diene-based polymer compositions (Sample C4, Sample C5, and Sample C6) were obtained through the same procedures as those of Comparative Example 12 except that an integrated hydrogen flow rate in the hydrogenation reaction was adjusted. Hydrogenated conjugated diene-based polymers of Sample C4, Sample C5, and Sample C6 had hydrogenation rates of 55.0%, 87.0%, and 93.0%, respectively.

Analysis results of Sample C4, Sample C5, and Sample C6 are shown in Table 4-1.

As a result of measurement, a structure of a conjugated diene-based polymer obtained after adding the branching agent in each of Samples C4, C5, and C6 had a star polymer structure having 4.2 branches on average, and a conjugated diene-based polymer obtained after adding the coupling agent had, in a branched chain of 4 star structures on average, a portion derived from a vinyl-based monomer containing an alkoxysilyl group.

(Examples 21 to 23) Hydrogenated Conjugated Diene-based Polymer Compositions (Samples C7, C8, and C9, respectively)

Hydrogenated conjugated diene-based polymer compositions (Sample C7, Sample C8, and Sample C9) were obtained through the same procedures as those of Comparative Example 12 except that the polar material was changed to 0.056 mmol/min of 2,2-bis(2-oxolanyl)propane (BOP), that the polymerization initiator was changed to 0.163 mmol/min of n-butyllithium (n-butyllithium for polymerization initiation), that the branching agent was changed to 0.033 mmol/min of trimethoxy(4-vinylphenyl)silane (BS-1), that the coupling agent was changed to 0.011 mol/min of 3-(4-methylpiperazine-1-yl)propyltrimethoxysilane (Compound 6), that the reaction terminator was changed to 0.16 mmol/min of methanol, and that an integrated hydrogen flow rate in the hydrogenation reaction was adjusted. Hydrogenated conjugated diene-based polymers of Sample C7, Sample C8, and Sample C9 had hydrogenation rates of 50.0%, 84.0%, and 93.0%, respectively.

Analysis results of Sample C7, Sample C8, and Sample C9 are shown in Table 4-1.

As a result of measurement, a structure of a conjugated diene-based polymer obtained after adding the branching agent in each of Samples C7, C8, and C9 had a star polymer structure having 4.2 branches on average, and a conjugated diene-based polymer obtained after adding the coupling agent had, in a branched chain of 1 star structure on average, a portion derived from a vinyl-based monomer containing an alkoxysilyl group.

(Comparative Example 13) Hydrogenated Conjugated Diene-based Polymer Composition (Sample C10)

A hydrogenated conjugated diene-based polymer composition (Sample C10) was obtained through the same procedures as those of Comparative Example 10 except that the amount of initial butadiene was changed to 21.5 g/min, that the amount of styrene was changed to 7.2 g/min, that the polar material was changed to 0.036 mmol/min of 2,2-bis(2-oxolanyl)propane (BOP), that the polymerization initiator was changed to 0.130 mmol/min of n-butyllithium (n-butyllithium for polymerization initiation), that the coupling agent was changed to 0.044 mmol/min of N,N-bis(trimethylsilyl)aminopropyl methyltriethoxysilane (Compound 1), that the reaction terminator was changed to 0.02 mmol/min of methanol, and that an integrated hydrogen flow rate in the hydrogenation reaction was adjusted. A hydrogenated conjugated diene-based polymer of Sample C10 had a hydrogenation rate of 50.0%.

Analysis results of Sample C10 are shown in Table 4-2.

It was found, as a result of measurement, that a structure of a conjugated diene-based polymer obtained before adding the coupling agent in Sample C10 had a linear polymer structure, and did not have a star polymer.

(Examples 24 to 26) Hydrogenated Conjugated Diene-based Polymer Compositions (Samples C11, C12, and C13, respectively)

Hydrogenated conjugated diene-based polymer compositions (Sample C11, Sample C12, and Sample C13) were obtained through the same procedures as those of Comparative Example 12 except that the amount of initial butadiene was changed to 17.2 g/min, that the amount of styrene was changed to 7.2 g/min, that the polar material was changed to 0.051 mmol/min of 2,2-bis(2-oxolanyl)propane (BOP), that the polymerization initiator was changed to 0.170 mmol/min of n-butyllithium (n-butyllithium for polymerization initiation), that the branching agent was changed to 0.041 mmol/min of dimethoxymethyl(4-vinylphenyl)silane (BS-2), that the amount of additional butadiene was changed to 4.3 g/min, that the coupling agent was changed to 0.012 mol/min of 3,3'-(piperazine-1,4-di-yl)bis(N,N-bis(3-(triethoxysilyl) propyl)propan-1-amine) (Compound 7), that the reaction terminator was changed to 0.016 mmol/min of methanol, and that an integrated hydrogen flow rate in the hydrogenation reaction was adjusted. Hydrogenated conjugated diene-based polymers of Sample C11, Sample C12, and Sample C13 had hydrogenation rates of 50.0%, 82.0%, and 95.0%, respectively.

Analysis results of Sample C11, Sample C12, and Sample C13 are shown in Table 4-2.

As a result of measurement, a structure of a conjugated diene-based polymer obtained after adding the branching agent in each of Samples C11, C12, and C13 had a star polymer structure having 3 branches on average, and a conjugated diene-based polymer obtained after adding the coupling agent had, in a branched chain of 3.8 star structures on average, a portion derived from a vinyl-based monomer containing an alkoxysilyl group.

(Comparative Example 14) Hydrogenated Conjugated Diene-based Polymer Composition (Sample C14)

A hydrogenated conjugated diene-based polymer composition (Sample C14) was obtained through the same procedures as those of Comparative Example 10 except that the amount of initial butadiene was changed to 17.2 g/min, that the amount of styrene was changed to 11.5 g/min, that the polar material was changed to 0.054 mmol/min of 2,2-bis(2-oxolanyl)propane (BOP), that the polymerization initiator was changed to 0.120 mmol/min of n-butyllithium (n-butyllithium for polymerization initiation), that the coupling agent was changed to 0.041 mmol/min of N,N-bis(trimethylsilyl)aminopropyl methyltriethoxysilane (Compound 1), that the reaction terminator was changed to 0.018 mmol/min of methanol, and that an integrated hydrogen flow rate in the hydrogenation reaction was adjusted. A hydrogenated conjugated diene-based polymer of Sample C14 had a hydrogenation rate of 60%.

Analysis results of Sample C14 are shown in Table 4-3.

It was found, as a result of measurement, that a structure of a conjugated diene-based polymer obtained before adding the coupling agent in Sample C14 had a linear polymer structure, and did not have a star polymer.

(Examples 27 to 29) Hydrogenated Conjugated Diene-based Polymer Compositions (Samples C15, C16, and C17, respectively)

Hydrogenated conjugated diene-based polymer compositions (Sample C15, Sample C16, and Sample C17)

were obtained through the same procedures as those of Comparative Example 10 except that the amount of initial butadiene was changed to 17.2 g/min, that the amount of styrene was changed to 11.5 g/min, that the polar material was changed to 0.067 mmol/min of 2,2-bis(2-oxolanyl)propane (BOP), that the polymerization initiator was changed to 0.159 mmol/min of n-butyllithium (n-butyllithium for polymerization initiation), that the coupling agent was changed to 0.017 mmol/min of N,N,N',N'-tetrakis(3-trimethoxysilylpropyl)-1,3-propanediamine (compound 5), that the reaction terminator was changed to 0.024 mmol/min of methanol, and that an integrated hydrogen flow rate in the hydrogenation reaction was adjusted. Hydrogenated conjugated diene-based polymers of Sample C15, Sample C16, and Sample C17 had hydrogenation rates of 60.0%, 82.0%, and 93.0%, respectively.

Analysis results of Sample C15, Sample C16, and Sample C17 are shown in Table 4-3.

As a result of measurement, a structure of a conjugated diene-based polymer obtained before adding the coupling agent in each of Samples C15, C16 and C17 had a linear polymer structure, and did not have a star polymer.

(Comparative Example 15) Conjugated Diene-based Polymer Composition (Sample C18)

A conjugated diene-based polymer composition (Sample C18) was obtained through the same procedures as those of Comparative Example 10 except that the amount of initial butadiene was changed to 17.9 g/min, that the amount of styrene was changed to 9.8 g/min, that the amount of cyclohexane was changed to 145.3 g/min, that the polar material was changed to 0.098 mmol/min of 2,2-bis(2-oxolanyl)propane (BOP), that the polymerization initiator was changed to 0.242 mmol/min of n-butyllithium (n-butyllithium for polymerization initiation), that the coupling agent was changed to 0.030 mmol/min of N,N,N',N'-tetrakis(3-trimethoxysilylpropyl)-1,3-propanediamine (compound 5), that the reaction terminator was changed to 0.044 mmol/min of methanol, and that the hydrogenation catalyst (T) was not added and hence a hydrogenation reaction was not performed.

Analysis results of Sample C18 are shown in Table 4-4.

It was found, as a result of measurement, that a structure of a conjugated diene-based polymer obtained before adding the coupling agent in Sample C18 had a linear polymer structure, and did not have a star polymer.

(Example 30) Hydrogenated Conjugated Diene-based Polymer Composition (Sample C19)

A hydrogenated conjugated diene-based polymer composition (Sample C19) was obtained through the same procedures as those of Comparative Example 10 except that the amount of initial butadiene was changed to 17.9 g/min, that the amount of styrene was changed to 9.8 g/min, that the amount of cyclohexane was changed to 145.3 g/min, that the polar material was changed to 0.098 mmol/min of 2,2-bis(2-oxolanyl)propane (BOP), that the polymerization initiator was changed to 0.242 mmol/min of n-butyllithium (n-butyllithium for polymerization initiation), that the coupling agent was changed to 0.030 mmol/min of N,N,N',N'-tetrakis(3-trimethoxysilylpropyl)-1,3-propanediamine (compound 5), that the reaction terminator was changed to 0.044 mmol/min of methanol, and that an integrated hydrogen flow rate in the hydrogenation reaction was adjusted. A hydrogenated conjugated diene-based polymer of Sample C19 had a hydrogenation rate of 80.0%.

Analysis results of Sample C19 are shown in Table 4-4.

It was found, as a result of measurement, that a structure of a conjugated diene-based polymer obtained before adding the coupling agent in Sample C19 had a linear polymer structure, and did not have a star polymer.

(Comparative Example 16)

The same procedures as those of Comparative Example 10 were performed except that the amount of initial butadiene was changed to 17.9 g/min, that the amount of styrene was changed to 9.8 g/min, that the amount of cyclohexane was changed to 145.3 g/min, that the polar material was changed to 0.018 mmol/min of 2,2-bis(2-oxolanyl)propane (BOP), that the polymerization initiator was changed to 0.121 mmol/min of n-butyllithium (n-butyllithium for polymerization initiation), that the coupling agent was changed to 0.012 mmol/min of N,N,N',N'-tetrakis(3-trimethoxysilylpropyl)-1,3-propanediamine (compound 5), that the reaction terminator was changed to 0.025 mmol/min of methanol, and that the hydrogenation catalyst (T) was added in an amount, in terms of Ti, of 100 ppm per 100 parts by mass of a conjugated diene-based polymer. Since the viscosity became very high during the hydrogenation reaction, the hydrogenation reaction did not proceed, and hence the reaction was stopped, and thus, a conjugated diene-based polymer composition (Sample C20) was obtained.

Analysis results of Sample C20 are shown in Table 4-4.

It was found, as a result of measurement, that a structure of a conjugated diene-based polymer obtained before adding the coupling agent in Sample C20 had a linear polymer structure, and did not have a star polymer.

(Example 32)

The same procedures as those of Comparative Example 10 were performed except that the amount of initial butadiene was changed to 17.9 g/min, that the amount of styrene was changed to 9.8 g/min, that the amount of cyclohexane was changed to 145.3 g/min, that the polar material was changed to 0.018 mmol/min of 2,2-bis(2-oxolanyl)propane (BOP), that the polymerization initiator was changed to 0.121 mmol/min of n-butyllithium (n-butyllithium for polymerization initiation), that the coupling agent was changed to 0.012 mmol/min of N,N,N',N'-tetrakis(3-trimethoxysilylpropyl)-1,3-propanediamine (compound 5), that the reaction terminator was changed to 0.025 mmol/min of methanol, that the hydrogenation catalyst (T) was added in an amount, in terms of Ti, of 200 ppm per 100 parts by mass of a conjugated diene-based polymer, and that cyclohexane was added to obtain a copolymer concentration in cyclohexane of 12% by mass. Since the viscosity became very high during the hydrogenation reaction, the hydrogenation reaction did not proceed, and hence the reaction was stopped, and thus, a conjugated diene-based polymer composition (Sample C21) was obtained.

Analysis results of Sample C21 are shown in Table 4-4.

It was found, as a result of measurement, that a structure of a conjugated diene-based polymer obtained before adding the coupling agent in Sample C21 had a linear polymer structure, and did not have a star polymer.

(Example 33)

Through the same procedures as those of Comparative Example 12 except that the amount of initial butadiene was changed to 14.3 g/min, that the amount of styrene was changed to 9.8 g/min, that the polar material was changed to 0.027 mmol/min of 2,2-bis(2-oxolanyl)propane (BOP), that the polymerization initiator was changed to 0.194 mmol/min of n-butyllithium (n-butyllithium for polymerization initiation), that the branching agent was changed to 0.048 mmol/min of trimethoxy(4-vinylphenyl)silane (BS-1), that the amount of additional butadiene was changed to 4.3 g/min, that the coupling agent was changed to 0.010 mmol/min of 2,2-dimethoxy-1-(3-trimethoxysilylpropyl)-1-aza-2-silacyclopentane (compound 2), that the reaction terminator was changed to 0.010 mmol/min of methanol, and that an integrated hydrogen flow rate in the hydrogenation reaction was adjusted, the hydrogenation reaction proceeded without problems, and thus, a hydrogenated conjugated diene-based polymer composition (Sample C22) was obtained. A hydrogenated conjugated diene-based polymer of Sample C22 had a hydrogenation rate of 50%.

Analysis results of Sample C22 are shown in Table 4-4.

As a result of measurement, a structure of a conjugated diene-based polymer obtained after adding the branching agent in Sample C22 had a star polymer structure having 3.9 branches on average, and a conjugated diene-based polymer obtained after adding the coupling agent had, in a branched chain of 3.6 star structures on average, a portion derived from a vinyl-based monomer containing an alkoxysilyl group.

[Table 4-1]

| | | | Comparative Example 10 | Comparative Example 11 | Comparative Example 12 | Example 18 | Example 19 | Example 20 | Example 21 | Example 22 | Example 23 |
|---|---|---|---|---|---|---|---|---|---|---|---|
| (Hydrogenated) Conjugated Diene-based Polymer Composition | | Type | C1 | C2 | C3 | C4 | C5 | C6 | C7 | C8 | C9 |
| Initial Butadiene | | (g/min) | 17.7 | 14.2 | 14.2 | 14.2 | 14.2 | 14.2 | 14.2 | 14.2 | 14.2 |
| Additional Butadiene | | (g/min) | 0 | 3.5 | 3.5 | 3.5 | 3.5 | 3.5 | 3.5 | 3.5 | 3.5 |
| Styrene | | (g/min) | 10.9 | 10.9 | 10.9 | 10.9 | 10.9 | 10.9 | 10.9 | 10.9 | 10.9 |
| Cyclohexane | | (g/min) | 175.2 | 175.2 | 175.2 | 175.2 | 175.2 | 175.2 | 175.2 | 175.2 | 175.2 |
| n-Butyllithium for Treatment | | (mmol/min) | 0.105 | 0.105 | 0.105 | 0.105 | 0.105 | 0.105 | 0.105 | 0.105 | 0.105 |
| n-Butyllithium for Polymerization Initiation | | (mmol/min) | 0.122 | 0.215 | 0.215 | 0.215 | 0.215 | 0.215 | 0.163 | 0.163 | 0.163 |
| BOP | | (mmol/ min) | 0.034 | 0.056 | 0.056 | 0.056 | 0.056 | 0.056 | 0.056 | 0.056 | 0.056 |
| Branching Agent | Type | | - | BS-1 | BS-1 | BS-1 | BS-1 | BS-1 | BS-1 | BS-1 | BS-1 |
| | Amount Added | (mmol/ min) | 0 | 0.032 | 0.032 | 0.032 | 0.032 | 0.032 | 0.033 | 0.033 | 0.033 |
| Coupling Agent | Type | | Compound 1 | Compound 5 | Compound 5 | Compound 5 | Compound 5 | Compound 5 | Compound 6 | Compound 6 | Compound 6 |
| | Amount Added | (mmol/ min) | 0.041 | 0.013 | 0.013 | 0.013 | 0.013 | 0.013 | 0.011 | 0.011 | 0.011 |
| Methanol | | (mmol/ min) | 0.019 | 0.018 | 0.018 | 0.018 | 0.018 | 0.018 | 0.016 | 0.016 | 0.016 |
| Hydrogenation Catalyst | Type | | T | - | T | T | T | T | T | T | T |
| | Hydrogenation Catalyst | (ppm) | 60 | 0 | 60 | 60 | 60 | 60 | 60 | 60 | 60 |
| Type of Rubber Softener | | | SRAE | SRAE | SRAE | SRAE | SRAE | SRAE | SRAE | SRAE | SRAE |
| Amount of Rubber Softener Added | | (phm) | 25 | 25 | 25 | 25 | 25 | 25 | 25 | 25 | 25 |
| Conjugated Diene-based Polymer or Hydrogenated | Mooney Viscosity | | 90 | 66 | 63 | 79 | 104 | 125 | 87 | 99 | 112 |
| | Weight Average Molecular Weight | | 72 | 115 | 113 | 112 | 112 | 112 | 92 | 92 | 92 |

(continued)

| | | | Comparative Example 10 | Comparative Example 11 | Comparative Example 12 | Example 18 | Example 19 | Example 20 | Example 21 | Example 22 | Example 23 |
|---|---|---|---|---|---|---|---|---|---|---|---|
| Conjugated Diene-based Polymer | Component LM Content | mass% | 26.9 | 20.7 | 20.7 | 20.7 | 20.7 | 20.7 | 23.1 | 23.1 | 23.1 |
| | Modification Ratio | mass% | 82 | 88 | 88 | 88 | 88 | 88 | 86 | 86 | 86 |
| | Branch Number Bn | | 1.3 | 26.8 | 26.6 | 26.2 | 26.0 | 25.7 | 3.4 | 3.2 | 3.0 |
| | Absolute Molecular Weight | Ten thousand | 103 | 295 | 291 | 287 | 276 | 274 | 154 | 150 | 147 |
| | Styrene Content | mass% | 37.6 | 38 | 37.8 | 37.5 | 37.3 | 37.2 | 37.5 | 37.3 | 37.2 |
| | Hydrogenation Rate | % | 50.0 | 0.0 | 20.0 | 55.0 | 87.0 | 93.0 | 50.0 | 84.0 | 93.0 |
| | Expression (S) | | 30.6 | 30 | 30.6 | 30.6 | 30.3 | 30.1 | 30.6 | 30.3 | 30.1 |
| | Expression (T) | | 95 | 0 | 56 | 96 | 100 | 100 | 97 | 98 | 99 |
| Oil-extended Polymer | Cold Flow Property | Index | 100 | 91 | 87 | 76 | 69 | 64 | 90 | 84 | 79 |
| | | | Δ | ○ | ◎ | ◎◎ | ◎◎ | ◎◎ | ○ | ◎ | ◎◎ |

[Table 4-2]

| | | | Comparative Example 13 | Example 24 | Example 25 | Example 26 |
|---|---|---|---|---|---|---|
| (Hydrogenated) Conjugated Diene-based Polymer Composition | | Type | C10 | C11 | C12 | C13 |
| Initial Butadiene | | (g/min) | 21.5 | 17.2 | 17.2 | 17.2 |
| Additional Butadiene | | (g/min) | 0 | 4.3 | 4.3 | 4.3 |
| Styrene | | (g/min) | 7.2 | 7.2 | 7.2 | 7.2 |
| Cyclohexane | | (g/min) | 175.2 | 175.2 | 175.2 | 175.2 |
| n-Butyllithium for Treatment | | (mmol/min) | 0.105 | 0.105 | 0.105 | 0.105 |
| n-Butyllithium for Polymerization Initiation | | (mmol/ min) | 0.130 | 0.17 | 0.17 | 0.17 |
| BOP | | (mmol/ min) | 0.036 | 0.051 | 0.051 | 0.051 |
| Branching Agent | Type | | - | BS-2 | BS-2 | BS-2 |
| | Amount Added | (mmol/ min) | 0 | 0.041 | 0.041 | 0.041 |
| Coupling Agent | Type | | Compound 1 | Compound 7 | Compound 7 | Compound 7 |
| | Amount Added | (mmol/min) | 0.044 | 0.012 | 0.012 | 0.012 |
| Methanol | | (mmol/ min) | 0.02 | 0.016 | 0.016 | 0.016 |
| Hydrogenation Catalyst | Type | | T | T | T | T |
| | Hydrogenation Catalyst | (ppm) | 60 | 60 | 60 | 60 |
| Type of Rubber Softener | | | SRAE | SRAE | SRAE | SRAE |
| Amount of Rubber Softener Added | | (phm) | 25 | 25 | 25 | 25 |
| Conjugated Diene-based Polymer or Hydrogenated Conjugated Diene-based Polymer | Mooney Viscosity | | 89 | 79 | 90 | 102 |
| | Weight Average Molecular Weight | | 73 | 103 | 101 | 100 |
| | Component LM Content | mass% | 27.2 | 32.1 | 32.1 | 32.1 |
| | Modification Ratio | mass% | 84 | 84 | 84 | 84 |
| | Branch Number Bn | | 1.3 | 11.4 | 11.1 | 10.9 |
| | Absolute Molecular Weight | Ten thousand | 101 | 202 | 198 | 195 |
| | Styrene Content | mass% | 24.6 | 24.6 | 24.7 | 24.4 |
| | Hydrogenation Rate | % | 50.0 | 50.0 | 82.0 | 95.0 |
| | Expression (S) | | 30.6 | 30.6 | 30.3 | 30.1 |

(continued)

| | | | Comparative Example 13 | Example 24 | Example 25 | Example 26 |
|---|---|---|---|---|---|---|
| | Expression (T) | | 98 | 98 | 99 | 99 |
| Oil-extended Polymer | Cold Flow Property | Index | 100 | 90 | 76 | 67 |
| | | | △ | ○ | ◎◎ | ◎◎ |

[Table 4-3]

| | | | Comparative Example 14 | Example 27 | Example 28 | Example 29 |
|---|---|---|---|---|---|---|
| (Hydrogenated) Conjugated Diene-based Polymer Composition | | Type | C14 | C15 | C16 | C17 |
| Initial Butadiene | | (g/min) | 17.2 | 17.2 | 17.2 | 17.2 |
| Additional Butadiene | | (g/min) | 0 | 0 | 0 | 0 |
| Styrene | | (g/min) | 11.5 | 11.5 | 11.5 | 11.5 |
| Cyclohexane | | (g/min) | 175.2 | 175.2 | 175.2 | 175.2 |
| n-Butyllithium for Treatment | | (mmol/min) | 0.105 | 0.105 | 0.105 | 0.105 |
| n-Butyllithium for Polymerization Initiation | | (mmol/ min) | 0.120 | 0.159 | 0.159 | 0.159 |
| BOP | | (mmol/ min) | 0.054 | 0.067 | 0.067 | 0.067 |
| Branching Agent | Type | | - | - | - | - |
| | Amount Added | (mmol/ min) | 0 | 0 | 0 | 0 |
| Coupling Agent | Type | | Compound 1 | Compound 5 | Compound 5 | Compound 5 |
| | Amount Added | (mmol/min) | 0.041 | 0.017 | 0.017 | 0.017 |
| Methanol | | (mmol/ min) | 0.018 | 0.024 | 0.024 | 0.024 |
| Hydrogenation Catalyst | Type | | T | T | T | T |
| | Hydrogenation Catalyst | (ppm) | 60 | 60 | 60 | 60 |
| Type of Rubber Softener | | | SRAE | SRAE | SRAE | SRAE |
| Amount of Rubber Softener Added | | (phm) | 25 | 25 | 25 | 25 |
| | Mooney Viscosity | | 90 | 88 | 100 | 109 |
| | Weight Average Molecular Weight | | 74 | 99 | 99 | 99 |
| | Component LM Content | mass% | 27.0 | 22.7 | 22.7 | 22.7 |
| | Modification Ratio | mass% | 83 | 87 | 87 | 87 |

(continued)

| | | | Comparative Example 14 | Example 27 | Example 28 | Example 29 |
|---|---|---|---|---|---|---|
| Conjugated Diene-based Polymer or Hydrogenated Conjugated Diene-based Polymer | Branch Number Bn | | 1.3 | 6.0 | 5.8 | 5.5 |
| | Absolute Molecular Weight | Ten thousand | 101 | 144 | 142 | 140 |
| | Styrene Content | mass% | 39.5 | 39.5 | 39.3 | 39.2 |
| | Hydrogenation Rate | % | 60.0 | 60.0 | 82.0 | 93.0 |
| | Expression (S) | | 40.8 | 40.8 | 40.3 | 40.1 |
| | Expression (T) | | 96 | 96 | 98 | 99 |
| Oil-extended Polymer | Cold Flow Property | Index | 100 | 90 | 80 | 73 |
| | | | △ | ○ | ◎ | ◎◎ |

[Table 4-4]

| | | | Comparative Example 15 | Example 30 | Comparative Example 16 | Example 32 | Example 33 |
|---|---|---|---|---|---|---|---|
| (Hydrogenated) Conjugated Diene-based Polymer Composition | | Type | C18 | C19 | C20 | C21 | C22 |
| Initial Butadiene | | (g/min) | 17.9 | 17.9 | 17.9 | 17.9 | 14.3 |
| Additional Butadiene | | (g/min) | 0 | 0 | 0 | 0 | 3.6 |
| Styrene | | (g/min) | 9.8 | 9.8 | 9.8 | 9.8 | 9.8 |
| Cyclohexane | | (g/min) | 145.3 | 145.3 | 145.3 | 145.3 | 145.3 |
| n-Butyllithium for Treatment | | (mmol/min) | 0.105 | 0.105 | 0.105 | 0.105 | 0.105 |
| n-Butyllithium for Polymerization Initiation | | (mmol/ min) | 0.242 | 0.242 | 0.121 | 0.121 | 0.194 |
| BOP | | (mmol/ min) | 0.098 | 0.098 | 0.018 | 0.018 | 0.027 |
| Branching Agent | Type | | - | - | - | - | BS-1 |
| | Amount Added | (mmol/ min) | 0 | 0 | 0 | 0 | 0.048 |
| Coupling Agent | Type | | Compound 5 | Compound 5 | Compound 5 | Compound 5 | Compound 2 |
| | Amount Added | (mmol/min) | 0.030 | 0.030 | 0.012 | 0.012 | 0.010 |
| Methanol | | (mmol/ min) | 0.044 | 0.044 | 0.025 | 0.025 | 0.010 |
| Hydrogenation Catalyst | Type | | - | T | T | T | T |
| | Hydrogenation Catalyst | (ppm) | 0 | 60 | 100 | 200 | 100 |
| Type of Rubber Softener | | | SRAE | SRAE | SRAE | SRAE | SRAE |
| Amount of Rubber Softener Added | | (phm) | 25 | 25 | 25 | 25 | 25 |
| Conjugated Diene-based Polymer or Hydrogenated Conjugated Diene-based Polymer | Mooney Viscosity | | 65 | 100 | 129 | 134 | 118 |
| | Weight Average Molecular Weight | | 86 | 86 | 127 | 127 | 121 |
| | Component LM Content | mass% | 23.0 | 23.0 | 16.3 | 16.3 | 20.1 |
| | Modification Ratio | mass% | 80 | 80 | 76 | 76 | 78 |
| | Branch Number Bn | | 5.9 | 5.5 | 5.7 | 5.6 | 6.4 |

(continued)

| | | | Comparative Example 15 | Example 30 | Comparative Example 16 | Example 32 | Example 33 |
|---|---|---|---|---|---|---|---|
| | Absolute Molecular Weight | Ten thousand | 123 | 120 | 194 | 194 | 293 |
| | Styrene Content | mass% | 35 | 34.7 | 34.6 | 34.6 | 34.6 |
| | Hydrogenation Rate | % | 0.0 | 80.0 | 20.0 | 34.0 | 50.0 |
| | Expression (S) | | 42 | 42.2 | 21.1 | 21.1 | 23.0 |
| | Expression (T) | | 0 | 99 | 91 | 97 | 98 |
| Oil-extended Polymer | Cold Flow Property | Index | 100 | 75 | 100 | 98 | 89 |
| | | | Δ | ◎◎ | Δ | ○ | ◎ |

Branching agents and coupling agents shown in Tables 4-1 to 4-4 are the following compounds.

[Branching Agent]

BS-1: trimethoxy(4-vinylphenyl)silane
BS-2: dimethoxymethyl(4-vinylphenyl)silane

[Coupling Agent]

Compound 1: N,N-bis(trimethylsilyl)aminopropyl methyltriethoxysilane
Compound 5: N,N,N',N'-tetrakis(3-trimethoxysilylpropyl)-1,3-propanediamine
Compound 6: 3-(4-methylpiperazine-1-yl)propyltriethoxysilane
Compound 7: 3,3'-(piperazine-1,4-di-yl)bis(N,N-bis(3-(triethoxysilyl)propyl)propan-1-amine)

[Application Examples 19 to 31, Application Comparative Examples 11 to 16, Application Comparative Example 19, and Application Examples 34 and 35]

Samples C1 to C19, and C20 to C22 shown in Tables 4-1 to 4-4 were used as raw material rubber components to obtain rubber compositions containing the respective raw material rubber components in accordance with the following compounding conditions E.

(Rubber Component)

- Conjugated diene-based polymer composition or hydrogenated conjugated diene-based polymer composition (each of Samples C1 to C19 and C20 to C22): 100 parts by mass (parts by mass excluding a rubber softener)

(Compounding Conditions E)

An amount of each agent to be compounded is expressed in parts by mass based on 100 parts by mass of a rubber component not containing a rubber softener.

- Silica 1 (trade name "Ultrasil 7000GR" manufactured by Evonik Degussa, nitrogen adsorption specific surface area: 170 $m^2/g$): 50.0 parts by mass
- Silica 2 (trade name "Zeosil Premium 200MP" manufactured by Rhodia, nitrogen adsorption specific surface area: 220 $m^2/g$): 25.0 parts by mass
- Carbon black (trade name "Seast KH (N339)", manufactured by Tokai Carbon Co., Ltd.): 5.0 parts by mass
- Silane coupling agent: (trade name "Si75", manufactured by Evonik Degussa, bis(triethoxysilylpropyl)disulfide): 6.0 parts by mass
- SRAE oil (trade name "Process NC140", manufactured by JX Nippon Oil & Energy Corporation): 37.5 parts by mass (including an amount precedently added as a rubber softener to be contained in each of Samples C1 to C19)
- Zinc oxide: 2.5 parts by mass
- Stearic acid: 1.0 part by mass
- Anti-aging agent (N-(1,3-dimethylbutyl)-N'-phenyl-p-phenylenediamine): 2.0 parts by mass
- Sulfur: 2.2 parts by mass
- Vulcanization accelerator 1 (N-cyclohexyl-2-benzothiazylsulfinamide): 1.7 parts by mass
- Vulcanization accelerator 2 (diphenylguanidine): 2.0 parts by mass

Total: 234.9 parts by mass

(Kneading Method)

The above-described materials were kneaded by the following method to obtain a rubber composition. A closed

kneader (having an internal volume of 0.3 L) equipped with a temperature controller was used to knead, as a first stage of kneading, the raw material rubber component (each of Samples C1 to C19, and C20 to C22), the fillers (silica 1, silica 2 and carbon black), the silane coupling agent, the SRAE oil, zinc oxide and stearic acid under conditions of a filling ratio of 65% and a rotor rotation speed of 30 to 50 rpm. Here, the temperature of the closed mixer was controlled to obtain each rubber composition (compound) at a discharging temperature of 155 to 160°C.

Next, after cooling the compound obtained as described above to room temperature, as a second stage of the kneading, the anti-aging agent was added thereto, and the resultant was kneaded again to improve dispersibility of the silica. Also in this case, the discharging temperature for the compound was adjusted to 155 to 160°C by the temperature control of the mixer. After cooling, as a third stage of the kneading, sulfur and the vulcanization accelerators 1 and 2 were added, and the resultant was kneaded by an open roll set to 70°C to obtain a rubber composition. Thereafter, the resultant rubber composition was molded and vulcanized at 160°C for 20 minutes by a vulcanizing press. The rubber composition prior to the vulcanization, and the rubber composition after the vulcanization were evaluated. Specifically, evaluations were performed as described below.

Results of Application Comparative Examples 11 to 15, Application Examples 19 to 30, Application Comparative Example 19, and Application Examples 34 and 35 are shown in Tables 5-1 to 5-3.

Results of Application Comparative Example 16 and Application Example 31 are shown in Table 6.

(Mooney Viscosity of Compound)

Each compound obtained after the second stage of the kneading and before the third stage of the kneading was used as a sample to measure a viscosity by using a Mooney viscometer in accordance with ISO 289 after preheating the compound at 130°C for 1 minute, and after rotating a rotor for 4 minutes at 2 rpm.

A result of each of Application Comparative Examples 12 and 13 and Application Examples 19 to 24 was shown as an index obtained assuming that a result of Application Comparative Example 11 was 100. A result of each of Application Examples 25 to 27 was shown as an index obtained assuming that a result of Application Comparative Example 14 was 100. A result of each of Application Examples 28 to 30 was shown as an index obtained assuming that a result of Application Comparative Example 15 was 100. A result of each of Application Examples 34 and 35 was shown as an index obtained assuming that a result of Application Comparative Example 19 was 100. A result of each of Application Example 31 and Application Comparative Example 16 obtained under the compounding conditions E was shown as an index obtained assuming that a result of Application Comparative Example 17 obtained under compounding conditions F described below was 100. A lower index indicates better processability.

A sample having an index of 79 or less was evaluated as very good (shown as ◎◎ in the tables), a sample having an index of 80 to 89 was evaluated as good (shown as ◎ in the tables), a sample having an index of 90 to 99 was evaluated to have no practical problem (shown as ○ in the tables), a sample having an index of 100 to 105 was evaluated as rather poor (shown as △ in the tables), and a sample having an index of 105 or more was evaluated to have a practical problem (shown as × in the tables).

(Breaking Strength and Elongation at Break, and Fracture Performance)

Breaking strength and elongation at break were measured in accordance with a tensile test method according to JIS K6251. In addition, a product of measured values of breaking strength and elongation at break was defined as fracture performance. A result of each of Application Comparative Examples 12 and 13 and Application Examples 19 to 24 was shown as an index obtained assuming that a result of Application Comparative Example 11 was 100. A result of each of Application Examples 25 to 27 was shown as an index obtained assuming that a result of Application Comparative Example 14 was 100. A result of each of Application Examples 28 to 30 was shown as an index obtained assuming that a result of Application Comparative Example 15 was 100. A result of each of Application Examples 34 and 35 was shown as an index obtained assuming that a result of Application Comparative Example 19 was 100. A result of each of Application Example 31 and Application Comparative Example 16 obtained under the compounding conditions E was shown as an index obtained assuming that a result of Application Comparative Example 17 obtained under compounding conditions F described below was 100. A higher index indicates that breaking strength, elongation at break, and fracture performance are better.

A sample having an index of 121 or more was evaluated as very good (shown as ◎◎ in the tables), a sample having an index of 111 to 120 was evaluated as good (shown as ◎ in the tables), a sample having an index of 101 to 110 was evaluated to have no practical problem (shown as ○ in the tables), a sample having an index of 95 to 100 was evaluated as rather poor (shown as △ in the tables), and a sample having an index of 94 or less was evaluated to have a practical problem (shown as × in the tables).

(Low Fuel Consumption Performance)

A viscoelasticity testing machine "ARES" manufactured by Rheometric Scientific, Inc. was used to measure a viscoelasticity parameter in a torsion mode.

A tan δ measured at 50°C at a frequency of 10 Hz and strain of 3% was used as an index of fuel efficiency.

A result of each of Application Comparative Examples 12 and 13 and Application Examples 19 to 24 was shown as an index obtained assuming that a result of Application Comparative Example 11 was 100. A result of each of Application Examples 25 to 27 was shown as an index obtained assuming that a result of Application Comparative Example 14 was 100. A result of each of Application Examples 28 to 30 was shown as an index obtained assuming that a result of Application Comparative Example 15 was 100. A result of each of Application Examples 34 and 35 was shown as an index obtained assuming that a result of Application Comparative Example 19 was 100. A result of each of Application Example 31 and Application Comparative Example 16 obtained under the compounding conditions E was shown as an index obtained assuming that a result of Application Comparative Example 17 obtained under compounding conditions F described below was 100.

A sample having an index of 121 or more was evaluated as very good (shown as ◎◎ in the tables), a sample having an index of 111 to 120 was evaluated as good (shown as ◎ in the tables), a sample having an index of 101 to 110 was evaluated to have no practical problem (shown as ○ in the tables), a sample having an index of 95 to 100 was evaluated as rather poor (shown as △ in the tables), and a sample having an index of 94 or less may be deteriorated in fuel efficiency as compared with a standard product, and may be lowered in grade of labelling system (shown as × in the tables). Results are shown in Tables 5-1 to 5-3, and Table 6.

[Application Example 32 and Application Comparative Example 17]

Samples C18 and C19 shown in Tables 4-3 were used as raw material rubber components to obtain rubber compositions containing the respective raw material rubber components in accordance with the following compounding conditions F.

(Rubber Component)

- Conjugated diene-based polymer composition or hydrogenated conjugated diene-based polymer composition (each of Samples C18 and C19): 100 parts by mass (parts by mass excluding a rubber softener)

(Compounding Conditions F)

An amount of each agent to be compounded is expressed in parts by mass based on 100 parts by mass of a rubber component not containing a rubber softener.

- Silica 1 (trade name "Ultrasil 7000GR" manufactured by Evonik Degussa, nitrogen adsorption specific surface area: 170 $m^2/g$): 50.0 parts by mass
- Silica 2 (trade name "Zeosil Premium 200MP" manufactured by Rhodia, nitrogen adsorption specific surface area: 220 $m^2/g$): 25.0 parts by mass
- Carbon black (trade name "Seast KH (N339)", manufactured by Tokai Carbon Co., Ltd.): 5.0 parts by mass
- Silane coupling agent: (trade name "Si75", manufactured by Evonik Degussa, bis(triethoxysilylpropyl)disulfide): 6.0 parts by mass
- SRAE oil (trade name "Process NC140", manufactured by JX Nippon Oil & Energy Corporation): 27.5 parts by mass (including an amount precedently added as a rubber softener to be contained in each of Samples C18, C19)
- Zinc oxide: 2.5 parts by mass
- Stearic acid: 1.0 part by mass
- Anti-aging agent (N-(1,3-dimethylbutyl)-N'-phenyl-p-phenylenediamine): 2.0 parts by mass
- Sulfur: 2.2 parts by mass
- Vulcanization accelerator 1 (N-cyclohexyl-2-benzothiazylsulfinamide): 1.7 parts by mass
- Vulcanization accelerator 2 (diphenylguanidine): 2.0 parts by mass

Total: 224.9 parts by mass

(Kneading Method)

The above-described materials were kneaded by the following method to obtain a rubber composition. A closed kneader (having an internal volume of 0.3 L) equipped with a temperature controller was used to knead, as a first stage of kneading, the raw material rubber component (Sample C18, C19), the fillers (silica 1, silica 2 and carbon black), the silane coupling agent, the SRAE oil, zinc oxide and stearic acid under conditions of a filling ratio of 65% and a rotor rotation speed of 30 to 50 rpm. Here, the temperature of the closed mixer was controlled to obtain each rubber composition (compound) at a discharging temperature of 155 to 160°C.

Next, after cooling the compound obtained as described above to room temperature, as a second stage of the kneading, the anti-aging agent was added thereto, and the resultant was kneaded again to improve dispersibility of the silica. Also in this case, the discharging temperature for the compound was adjusted to 155 to 160°C by the temperature control of the mixer. After cooling, as a third stage of the kneading, sulfur and the vulcanization accelerators 1 and 2 were added, and the resultant was kneaded by an open roll set to 70°C to obtain a rubber composition. Thereafter, the resultant rubber composition was molded and vulcanized at 160°C for 20 minutes by a vulcanizing press. The rubber composition prior to the vulcanization, and the rubber composition after the vulcanization were evaluated. Specifically, evaluations were performed as described below. Results are shown in Table 6.

[Mooney Viscosity of Compound]

Each compound obtained after the second stage of the kneading and before the third stage of the kneading was used as a sample to measure a viscosity by using a Mooney viscometer in accordance with ISO 289 after preheating the compound at 130°C for 1 minute, and after rotating a rotor for 4 minutes at 2 rpm.

A result of Application Example 32 obtained under the compounding conditions F was shown as an index obtained assuming that a result of Application Comparative Example 17 obtained under the compounding conditions F was 100. A lower index indicates better processability.

A sample having an index of 79 or less was evaluated as very good (shown as ◎◎ in the tables), a sample having an index of 80 to 89 was evaluated as good (shown as ◎ in the tables), a sample having an index of 90 to 99 was evaluated to have no practical problem (shown as ○ in the tables), a sample having an index of 100 to 105 was evaluated as rather poor (shown as △ in the tables), and a sample having an index of 105 or more was evaluated to have a practical problem (shown as × in the tables).

(Breaking Strength and Elongation at Break, and Fracture Performance)

Breaking strength and elongation at break were measured in accordance with a tensile test method according to JIS K6251. In addition, a product of measured values of breaking strength and elongation at break was defined as fracture performance.

A result of Application Example 32 obtained under the compounding conditions F was shown as an index obtained assuming that a result of Application Comparative Example 17 obtained under the compounding conditions F was 100. A lower index indicates better processability. A higher index indicates that breaking strength, elongation at break (fracture strength), and fracture performance are better.

A sample having an index of 121 or more was evaluated as very good (shown as ◎◎ in the tables), a sample having an index of 111 to 120 was evaluated as good (shown as ◎ in the tables), a sample having an index of 101 to 110 was evaluated to have no practical problem (shown as ○ in the tables), a sample having an index of 95 to 100 was evaluated as rather poor (shown as △ in the tables), and a sample having an index of 94 or less was evaluated to have a practical problem (shown as × in the tables).

(Low Fuel Consumption Performance)

A viscoelasticity testing machine "ARES" manufactured by Rheometric Scientific, Inc. was used to measure a viscoelasticity parameter in a torsion mode.

A tan δ measured at 50°C at a frequency of 10 Hz and strain of 3% was used as an index of fuel efficiency.

A result of Application Example 32 obtained under the compounding conditions F was shown as an index obtained assuming that a result of Application Comparative Example 17 obtained under the compounding conditions F was 100.

A sample having an index of 121 or more was evaluated as very good (shown as ◎◎ in the tables), a sample having an index of 111 to 120 was evaluated as good (shown as ◎ in the tables), a sample having an index of 101 to 110 was evaluated to have no practical problem (shown as ○ in the tables), a sample having an index of 95 to 100 was evaluated as rather poor (shown as △ in the tables), and a sample having an index of 94 or less may be deteriorated in fuel efficiency as

compared with a standard product, and may be lowered in grade of labelling system (shown as × in the tables). Results are shown in Tables 5-1 to 5-3, and Table 6.

[Table 5-1]

| | | | Application Comparative Example 11 | Application Comparative Example 12 | Application Comparative Example 13 | Application Example 19 | Application Example 20 | Application Example 21 | Application Example 22 | Application Example 23 | Application Example 24 |
|---|---|---|---|---|---|---|---|---|---|---|---|
| (Hydrogenated) Conjugated Diene-based Polymer Composition | | Type | C1 | C2 | C3 | C4 | C5 | C6 | C7 | C8 | C9 |
| Compounding Conditions | | - | E | E | E | E | E | E | E | E | E |
| Physical Properties of Composition | Mooney Viscosity of Compound | Index | 100 | 85 | 83 | 80 | 83 | 86 | 86 | 88 | 90 |
| | | | △ | ◎ | ◎ | ◎ | ◎ | ◎ | ◎ | ◎ | ○ |
| | Breaking Strength | Index | 100 | 87 | 90 | 110 | 115 | 120 | 110 | 115 | 120 |
| | | | △ | × | × | ○ | ◎ | ◎ | ○ | ◎ | ◎ |
| | Elongation at Break | Index | 100 | 92 | 93 | 105 | 110 | 115 | 110 | 115 | 120 |
| | | | △ | × | × | ○ | ○ | ◎ | ○ | ◎ | ◎ |
| | Fracture Performance | Index | 100 | 80 | 84 | 116 | 127 | 138 | 121 | 132 | 144 |
| | | | △ | × | × | ◎ | ◎◎ | ◎◎ | ◎◎ | ◎◎ | ◎◎ |
| | Low Fuel Consumption Performance | Index | 100 | 85 | 101 | 116 | 97 | 89 | 108 | 102 | 91 |
| | | | △ | × | ○ | ◎ | △ | × | ○ | ○ | × |

[Table 5-2]

| | | | Application Comparative Example 14 | Application Example 25 | Application Example 26 | Application Example 27 |
|---|---|---|---|---|---|---|
| (Hydrogenated) Conjugated Diene-based Polymer Composition | | Type | C10 | C11 | C12 | C13 |
| Compounding Conditions | | - | E | E | E | E |
| Physical Properties of Composition | Mooney Viscosity of Compound | Index | 100 | 81 | 84 | 87 |
| | | | △ | ◎ | ◎ | ◎ |
| | Breaking Strength | Index | 100 | 105 | 110 | 115 |
| | | | △ | ○ | ○ | ◎ |
| | Elongation at Break | Index | 100 | 100 | 105 | 110 |
| | | | △ | △ | ○ | ○ |
| | Fracture Performance | Index | 100 | 105 | 116 | 127 |
| | | | △ | ○ | ◎ | ◎◎ |
| | Low Fuel Consumption Performance | Index | 100 | 112 | 103 | 88 |
| | | | △ | ◎ | ○ | × |

[Table 5-3]

| | | | Application Comparative Example 15 | Application Example 28 | Application Example 29 | Application Example 30 |
|---|---|---|---|---|---|---|
| (Hydrogenated) Conjugated Diene-based Polymer Composition | | Type | C14 | C15 | C16 | C17 |
| Compounding Conditions | | - | E | E | E | E |
| Physical Properties of Composition | Mooney Viscosity of Compound | Index | 100 | 85 | 88 | 91 |
| | | | △ | ◎ | ◎ | ○ |
| | Breaking Strength | Index | 100 | 100 | 105 | 110 |
| | | | △ | △ | ○ | ○ |
| | Elongation at Break | Index | 100 | 100 | 100 | 105 |
| | | | △ | △ | △ | ○ |
| | Fracture Performance | Index | 100 | 100 | 105 | 116 |
| | | | △ | △ | ○ | ◎ |
| | Low Fuel Consumption Performance | Index | 100 | 110 | 101 | 88 |
| | | | △ | ○ | ○ | × |

[Table 6]

| | | | Application Comparative Example 16 | Application Comparative Example 17 | Application Example 31 | Application Example 32 | Application Comparative Example 19 | Application Example 34 | Application Example 35 |
|---|---|---|---|---|---|---|---|---|---|
| (Hydrogenated) Conjugated Diene-based Polymer Composition | | Type | C18 | C18 | C19 | C19 | C20 | C21 | C22 |
| Compounding Conditions | | - | E | F | E | F | E | E | E |
| Physical Properties of Composition | Mooney Viscosity of Compound | Index | 87 | 100 | 85 | 98 | 100 | 104 | 93 |
| | | | ◎ | △ | ◎ | ○ | △ | △ | ○ |
| | Breaking Strength | Index | 85 | 100 | 110 | 130 | 100 | 104 | 114 |
| | | | × | △ | ○ | ◎◎ | △ | ○ | ○ |
| | Elongation at Break | Index | 105 | 100 | 105 | 100 | 100 | 102 | 108 |
| | | | ○ | △ | ○ | △ | △ | △ | ○ |
| | Fracture Performance | Index | 89 | 100 | 116 | 130 | 100 | 106 | 123 |
| | | | × | △ | ◎ | ◎◎ | △ | ○ | ◎◎ |
| | Low Fuel Consumpti on Performan ce | Index | 94 | 100 | 92 | 103 | 100 | 107 | 116 |
| | | | × | △ | × | ○ | △ | ○ | ◎ |

[Application Examples 36 to 54 and Application Comparative Examples 20 to 24]

By employing raw material rubber components and compounding conditions G-1 to G-13 shown in Table 7-1 and Table 7-2, rubber compositions containing the respective raw material rubber components were obtained by a kneading method similar to that employed under the compounding conditions C.

Besides, a Mooney viscosity of a compound, breaking strength, elongation at break, fracture performance and low fuel consumption performance were measured by methods similar to the evaluation methods for the rubber compositions performed before and after vulcanization.

A result of each of Application Examples 36 to 46 was shown as an index obtained assuming that a result of Application Comparative Example 20 was 100. A result of Application Example 47 was shown as an index obtained assuming that a result of Application Comparative Example 21 was 100. A result of Application Example 48 was shown as an index obtained assuming that a result of Application Comparative Example 22 was 100. A result of each of Application Examples 49 to 52 was shown as an index obtained assuming that a result of Application Comparative Example 23 was 100. A result of each of Application Examples 53 and 54 was shown as an index obtained assuming that a result of Application Comparative Example 24 was 100.

Evaluation results are shown in Table 8-1 and Table 8-2.

[Table 7-1]

| | | | Application Comparative Example 20 | Application Example 36 | Application Example 37 | Application Example 38 | Application Example 39 | Application Example 40 | Application Example 41 | Application Example 42 | Application Example 43 | Application Example 44 | Application Example 45 | Application Example 46 |
|---|---|---|---|---|---|---|---|---|---|---|---|---|---|---|
| Compounding Conditions | | | G-1 | G-1 | G-2 | G-3 | G-4 | G-5 | G-6 | G-7 | G-8 | G-9 | G-10 | G-11 |
| (Hydrogenated) Conjugated Diene-based Polymer | | | B11 | B12 | B12 | B12 | B12 | B12 | B12 | B12 | B12 | B12 | B12 | B12 |
| Compounding Composition | (Hydrogenated) Conjugated Diene-based Polymer | parts by mass | 100 | 100 | 100 | 100 | 100 | 100 | 100 | 100 | 100 | 100 | 100 | 100 |
| | Silica 3 | parts by mass | 70 | 70 | | | 70 | 70 | 70 | 70 | 70 | 70 | 70 | 70 |
| | Silica 4 | parts by mass | | | 70 | | | | | | | | | |
| | Silica 5 | parts by mass | | | | 70 | | | | | | | | |
| | Carbon Black 2 | parts by mass | 5 | 5 | 5 | 5 | | | | | | | | |
| | Carbon Black 3 | parts by mass | | | | | 5 | | | | | | | |
| | SRAE Oil | parts by mass | | | | | | | | | | | | |
| | Softener 1 | parts by mass | 35 | 35 | 35 | 35 | 35 | | | | | | 35 | 35 |
| | Softener 2 | parts by mass | | | | | | 35 | | | | | | |

(continued)

| | | | Application Comparative Example 20 | Application Example 36 | Application Example 37 | Application Example 38 | Application Example 39 | Application Example 40 | Application Example 41 | Application Example 42 | Application Example 43 | Application Example 44 | Application Example 45 | Application Example 46 |
|---|---|---|---|---|---|---|---|---|---|---|---|---|---|---|
| | Softener 3 | parts by mass | | | | | | | 35 | | | | | |
| | Softener 4 | parts by mass | | | | | | | | 35 | | | | |
| | Softener 5 | parts by mass | | | | | | | | | 35 | | | |
| | Softener 6 | parts by mass | | | | | | | | | | 35 | | |
| | Silane Coupling Agent 2 | parts by mass | 5.6 | 5.6 | 5.6 | 5.6 | 5.6 | 5.6 | 5.6 | 5.6 | 5.6 | 5.6 | | |
| | Silane Coupling Agent 3 | parts by mass | | | | | | | | | | | 5.6 | |
| | Silane Coupling Agent 4 | parts by mass | | | | | | | | | | | | 5.6 |
| | Zinc Oxide | parts by mass | 2.5 | 2.5 | 2.5 | 2.5 | 2.5 | 2.5 | 2.5 | 2.5 | 2.5 | 2.5 | 2.5 | 2.5 |
| | Stearic Acid | parts by mass | 2 | 2 | 2 | 2 | 2 | 2 | 2 | 2 | 2 | 2 | 2 | 2 |
| | Wax | parts by mass | 1 | 1 | 1 | 1 | 1 | 1 | 1 | 1 | 1 | 1 | 1 | 1 |

(continued)

| | | | Application Comparative Example 20 | Application Example 36 | Application Example 37 | Application Example 38 | Application Example 39 | Application Example 40 | Application Example 41 | Application Example 42 | Application Example 43 | Application Example 44 | Application Example 45 | Application Example 46 |
|---|---|---|---|---|---|---|---|---|---|---|---|---|---|---|
| | Anti-aging Agent | parts by mass | 1.5 | 1.5 | 1.5 | 1.5 | 1.5 | 1.5 | 1.5 | 1.5 | 1.5 | 1.5 | 1.5 | 1.5 |
| | Sulfur | parts by mass | 1.5 | 1.5 | 1.5 | 1.5 | 1.5 | 1.5 | 1.5 | 1.5 | 1.5 | 1.5 | 1.5 | 1.5 |
| | Vulcanization Accelerator 1 | parts by mass | 2 | 2 | 2 | 2 | 2 | 2 | 2 | 2 | 2 | 2 | 2 | 2 |
| | Vulcanization Accelerator 2 | parts by mass | 1 | 1 | 1 | 1 | 1 | 1 | 1 | 1 | 1 | 1 | 1 | 1 |

- Silica 3: VN3 manufactured by Evonik Degussa (N2SA: 175 $m^2/g$)
- Silica 4: 115GR manufactured by Solvay Japan, Ltd. (N2SA: 115 $m^2/g$)
- Silica 5: 9000GR manufactured by Evonik Degussa (N2SA: 235 $m^2/g$)
- Carbon black 2: Dia Black N339 manufactured by Mitsubishi Chemical Corporation (N2SA: 96 $m^2/g$, DBP absorption: 124 mL/100 g)
- Carbon black 3: Show Black N330 manufactured by Cabot Japan K.K. (N2SA: 75 $m^2/g$)
- SRAE oil (trade name "Process NC140" manufactured by JX Nippon Oil & Energy Corporation)
- Softener 1: Diana Process AH-24 (aroma oil) manufactured by Idemitsu Kosan Co., Ltd.
- Softener 2: SYLVARES SA85 manufactured by Arizona Chemical Company ($\alpha$ methylstyrene-based resin (copolymer of $\alpha$-methylstyrene and styrene), softening point: 85°C)
- Softener 3: RICON 100 manufactured by Sartomer (liquid SBR, styrene content: 20% by mass, vinyl content: 70% by mass, weight average molecular weight: 4,500)
- Softener 4: NOVARES C100 manufactured by Rutgers Chemicals (coumarone-indene resin, softening point: 95 to 105°C)
- Softener 5: Dercolyte L120 manufactured by DRT (polylimonene resin, softening point: 120°C)
- Softener 6: Sylvatraxx 4150 manufactured by KRATON (polyterpene resin, softening point: 150°)
- Silane coupling agent 2: Si266 manufactured by Evonik Degussa
- Silane coupling agent 3: Si69 manufactured by Evonik Degussa
- Silane coupling agent 4: Si363 manufactured by Evonik Degussa
- Anti-aging agent: N-(1,3-dimethylbutyl)-N'-phenyl-p-phenylenediamine
- Wax: Ozoace 0355 manufactured by Nippon Seiro Co., Ltd.
- Vulcanization accelerator 1: N-cyclohexyl-2-benzothiazylsulfinamide
- Vulcanization accelerator 2: diphenylguanidine

[Table 7-2]

| | | | Application Comparative Example 21 | Application Example 47 | Application Comparative Example 22 | Application Example 48 | Application Comparative Example 23 | Application Example 49 | Application Example 50 | Application Example 51 | Application Example 52 | Application Comparative Example 24 | Application Example 53 | Application Example 54 |
|---|---|---|---|---|---|---|---|---|---|---|---|---|---|---|
| Compounding Conditions | | | G-12 | G-12 | G-12 | G-12 | G-13 | G-13 | G-13 | G-13 | G-13 | G-13 | G-13 | G-13 |
| (Hydrogenated) Conjugated Diene-based Polymer (Composition) | | | B1 | B4 | B11 | B13 | C1 | C4 | C6 | C7 | C9 | C18 | C21 | C22 |
| Compounding Composition | (Hydrogenated) Conjugated Diene-based Polymer (Composition) | parts by mass | 100 | 100 | 100 | 100 | 100 | 100 | 100 | 100 | 100 | 100 | 100 | 100 |
| | Silica 3 | parts by mass | 70 | 70 | 70 | 70 | 70 | 70 | 70 | 70 | 70 | 70 | 70 | 70 |
| | Silica 4 | parts by mass | | | | | | | | | | | | |
| | Silica 5 | parts by mass | | | | | | | | | | | | |
| | Carbon Black 2 | parts by mass | 5 | 5 | 5 | 5 | 5 | 5 | 5 | 5 | 5 | 5 | 5 | 5 |
| | Carbon Black 3 | parts by mass | | | | | | | | | | | | |
| | SRAE Oil | parts by mass | | | | | 25 | 25 | 25 | 25 | 25 | 25 | 25 | 25 |
| | Softener 1 | parts by mass | | | | | | | | | | | | |
| | Softener 2 | parts by mass | | | | | | | | | | | | |

(continued)

| | | | Application Comparative Example 21 | Application Example 47 | Application Comparative Example 22 | Application Example 48 | Application Comparative Example 23 | Application Example 49 | Application Example 50 | Application Example 51 | Application Example 52 | Application Comparative Example 24 | Application Example 53 | Application Example 54 |
|---|---|---|---|---|---|---|---|---|---|---|---|---|---|---|
| | Softener 3 | parts by mass | | | | | | | | | | | | |
| | Softener 4 | parts by mass | | | | | | | | | | | | |
| | Softener 5 | parts by mass | 35 | 35 | 35 | 35 | 20 | 20 | 20 | 20 | 20 | 20 | 20 | 20 |
| | Softener 6 | parts by mass | | | | | | | | | | | | |
| | Silane Coupling Agent 2 | parts by mass | 5.6 | 5.6 | 5.6 | 5.6 | 5.6 | 5.6 | 5.6 | 5.6 | 5.6 | 5.6 | 5.6 | 5.6 |
| | Silane Coupling Agent 3 | parts by mass | | | | | | | | | | | | |
| | Silane Coupling Agent 4 | parts by mass | | | | | | | | | | | | |
| | Zinc Oxide | parts by mass | 2.5 | 2.5 | 2.5 | 2.5 | 2.5 | 2.5 | 2.5 | 2.5 | 2.5 | 2.5 | 2.5 | 2.5 |
| | Stearic Acid | parts by mass | 2 | 2 | 2 | 2 | 2 | 2 | 2 | 2 | 2 | 2 | 2 | 2 |
| | Wax | parts by mass | 1 | 1 | 1 | 1 | 1 | 1 | 1 | 1 | 1 | 1 | 1 | 1 |

(continued)

| | | | Application Comparative Example 21 | Application Example 47 | Application Comparative Example 22 | Application Example 48 | Application Comparative Example 23 | Application Example 49 | Application Example 50 | Application Example 51 | Application Example 52 | Application Comparative Example 24 | Application Example 53 | Application Example 54 |
|---|---|---|---|---|---|---|---|---|---|---|---|---|---|---|
| | Anti-aging Agent | parts by mass | 1.5 | 1.5 | 1.5 | 1.5 | 1.5 | 1.5 | 1.5 | 1.5 | 1.5 | 1.5 | 1.5 | 1.5 |
| | Sulfur | parts by mass | 1.5 | 1.5 | 1.5 | 1.5 | 1.5 | 1.5 | 1.5 | 1.5 | 1.5 | 1.5 | 1.5 | 1.5 |
| | Vulcanization Accelerator 1 | parts by mass | 2 | 2 | 2 | 2 | 2 | 2 | 2 | 2 | 2 | 2 | 2 | 2 |
| | Vulcanization Accelerator 2 | parts by mass | 1 | 1 | 1 | 1 | 1 | 1 | 1 | 1 | 1 | 1 | 1 | 1 |

[Table 8-1]

| | | | Application Comparative Example 20 | Application Example 36 | Application Example 37 | Application Example 38 | Application Example 39 | Application Example 40 | Application Example 41 | Application Example 42 | Application Example 43 | Application Example 44 | Application Example 45 | Application Example 46 |
|---|---|---|---|---|---|---|---|---|---|---|---|---|---|---|
| Physical Properties of Composition | Mooney Viscosity of Compound | Index | 100 | 97 | 94 | 102 | 95 | 102 | 104 | 100 | 104 | 100 | 103 | 103 |
| | | | △ | ○ | ○ | △ | ○ | △ | △ | △ | △ | △ | △ | △ |
| | Breaking Strength | Index | 100 | 108 | 101 | 102 | 108 | 117 | 114 | 108 | 115 | 122 | 108 | 121 |
| | | | △ | ○ | ○ | ○ | ○ | ◎ | ◎ | ○ | ◎ | ◎◎ | ○ | ◎◎ |
| | Elongation at Break | Index | 100 | 107 | 109 | 115 | 109 | 112 | 110 | 112 | 120 | 104 | 118 | 109 |
| | | | △ | ○ | ○ | ◎ | ○ | ○ | ○ | ◎ | ◎ | ○ | ◎ | ○ |
| | Fracture Performance | Index | 100 | 116 | 110 | 117 | 118 | 131 | 125 | 121 | 138 | 127 | 127 | 132 |
| | | | △ | ◎ | ○ | ◎ | ◎ | ◎◎ | ◎◎ | ◎◎ | ◎◎ | ◎◎ | ◎◎ | ◎◎ |

[Table 8-2]

| | | | Application Comparative Example 21 | Application Example 47 | Application Comparative Example 22 | Application Example 48 | Application Comparative Example 23 | Application Example 49 | Application Example 50 | Application Example 51 | Application Example 52 | Application Comparative Example 24 | Application Example 53 | Application Example 54 |
|---|---|---|---|---|---|---|---|---|---|---|---|---|---|---|
| Physical Properties of Composition | Mooney Viscosity of Compound | Index | 100 | 102 | 100 | 94 | 100 | 74 | 84 | 98 | 104 | 100 | 104 | 92 |
| | | | △ | △ | △ | ○ | △ | ◎◎ | ◎ | ○ | △ | △ | △ | ○ |
| | Breaking Strength | Index | 100 | 104 | 100 | 116 | 100 | 112 | 129 | 104 | 106 | 100 | 103 | 116 |
| | | | △ | ○ | △ | ◎ | △ | ◎ | ◎◎ | ○ | ○ | △ | ○ | ◎ |
| | Elongation at Break | Index | 100 | 105 | 100 | 115 | 100 | 108 | 121 | 103 | 107 | 100 | 101 | 110 |
| | | | △ | ○ | △ | ◎ | △ | ○ | ◎◎ | ○ | ○ | △ | ○ | ○ |
| | Fracture Performance | Index | 100 | 109 | 100 | 133 | 100 | 121 | 156 | 107 | 113 | 100 | 104 | 128 |
| | | | △ | ○ | △ | ◎◎ | △ | ◎◎ | ◎◎ | ○ | ◎ | △ | ○ | ◎◎ |

As shown in Tables 1-1 to 1-5, Tables 2-1 to 2-5, Table 3, Tables 4-1 to 4-4, Tables 5-1 to 5-3, Table 6, Tables 7-1 to 7-2, and Tables 8-1 to 8-2, it was also confirmed that, in the hydrogenated conjugated diene-based polymers or the hydrogenated conjugated diene-based polymer compositions of Examples 1 to 30 and Examples 31 to 33, cold flow is suppressed, the Mooney viscosity of compound obtained when used for obtaining a vulcanizate therefrom is low, and good processability is exhibited as compared with those of Comparative Examples 1 to 15 and Comparative Example 16.

In addition, as shown in Tables 2-1 to 2-5, Table 3, Tables 5-1 to 5-3, Table 6, Tables 7-1 to 7-2, and Tables 8-1 to 8-2, it was confirmed that the rubber compositions of Application Examples 1 to 32 and Application Examples 33 to 54 are excellent in breaking strength, elongation at break, and fracture performance when in the form of a vulcanizate as compared with those of Application Comparative Examples 1 to 17 and Application Comparative Examples 19 to 24. In particular, it was confirmed, based on the results of Application Examples 1, 5, 6, 9, 10, 12, 15, 16, and 33, that balance between strength and low fuel consumption performance is very excellent when a hydrogenation rate is in a range of 39 to 80%.

Industrial Applicability

A hydrogenated conjugated diene-based polymer of the present invention is industrially applicable as a material or the like of tire treads, interiors/exteriors of vehicles, anti-vibration rubbers, belts, shoes, foam bodies, and various industrial products.

## Claims

1. A hydrogenated conjugated diene-based polymer, having a branch number (Bn) measured by viscosity detector-equipped GPC-light scattering measurement of 2.5 or more, and a hydrogenation rate of a structural unit derived from a conjugated diene compound of 30% or more and less than 99%.

2. The hydrogenated conjugated diene-based polymer according to claim 1, having a weight average molecular weight measured by GPC of 210,000 or more and less than 3,000,000.

3. The hydrogenated conjugated diene-based polymer according to claim 1 or 2, wherein assuming that composition ratios (% by mol) of a structural unit represented by the following formula (1), a structural unit represented by the following formula (2), a structural unit represented by the following formula (3), and a structural unit represented by the following formula (4) are a, b, c, and d, respectively, the following expression (S) is satisfied:

(1) 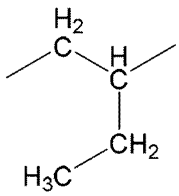

(2) 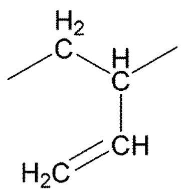

(3) 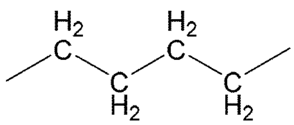

(4) 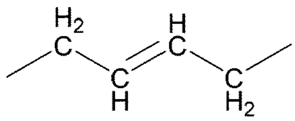

$$20 \leq (a + b)/(a + b + c + d) \times 100 \leq 65$$ Expression (S) :

4. The hydrogenated conjugated diene-based polymer according to any one of claims 1 to 3, wherein assuming that composition ratios (% by mol) of a structural unit represented by the following formula (1) and a structural unit represented by the following formula (2) are a and b, respectively, the following expression (T) is satisfied:

(1) 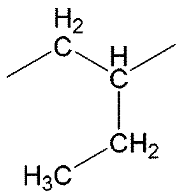

(2) 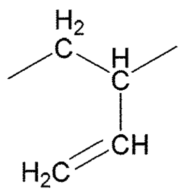

Expression (T): $90 \leq (a)/(a + b) \times 100 \leq 100$

5. The hydrogenated conjugated diene-based polymer according to any one of claims 1 to 4, comprising 3% by mass or more and less than 60% by mass of an aromatic vinyl monomer.

6. The hydrogenated conjugated diene-based polymer according to any one of claims 1 to 5, wherein the modification ratio is 60% by mass or more.

7. The hydrogenated conjugated diene-based polymer according to any one of claims 1 to 6, wherein the branch number (Bn) measured by viscosity detector-equipped GPC-light scattering measurement is 8.0 or more.

8. The hydrogenated conjugated diene-based polymer according to any one of claims 1 to 7, comprising a star polymer structure having 3 branches or more,

comprising, in a branched chain of at least one star structure, a portion derived from a vinyl-based monomer containing an alkoxysilyl group or a halosilyl group, and
further comprising a main chain branch structure in the portion derived from a vinyl-based monomer containing an alkoxysilyl group or a halosilyl group.

9. The hydrogenated conjugated diene-based polymer according to claim 8,

wherein the portion derived from a vinyl-based monomer containing an alkoxysilyl group or a halosilyl group is a monomer unit based on a compound represented by the following formula (5) or (6),
the hydrogenated conjugated diene-based polymer comprises a branch point of a polymer chain formed by the monomer unit based on the compound represented by the following formula (5) or (6), and
at least one end of the hydrogenated conjugated diene-based polymer is coupled with a coupling agent.

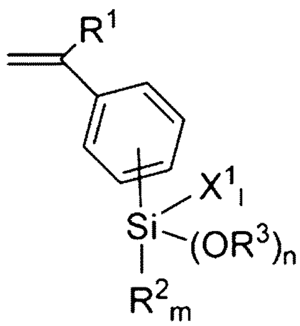

(5)

wherein $R^1$ represents a hydrogen atom, an alkyl group having 1 to 20 carbon atoms, or an aryl group having 6 to 20 carbon atoms, and may have a branch structure in a part thereof;
$R^2$ and $R^3$ each independently represent an alkyl group having 1 to 20 carbon atoms, or an aryl group having 6 to 20 carbon atoms, and may have a branch structure in a part thereof;
each of $R^1$ to $R^3$, if present in a plural number, is respectively independent;
$X^1$ represents a halogen atom, and if present in a plural number, each $X^1$ is respectively independent;
m represents an integer of 0 to 2, n represents an integer of 0 to 3, l represents an integer of 0 to 3, and (m + n + 1) is 3:

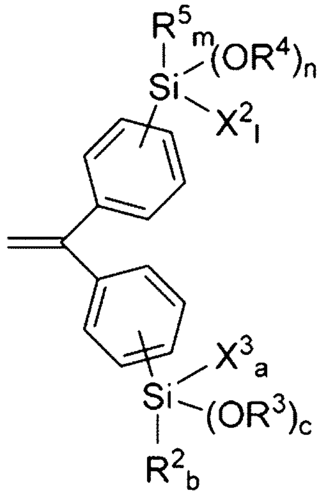

(6)

wherein $R^2$ to $R^5$ each independently represent an alkyl group having 1 to 20 carbon atoms, or an aryl group having 6 to 20 carbon atoms, and may have a branch structure in a part thereof;
each of $R^2$ to $R^5$, if present in a plural number, is respectively independent;
$X^2$ and $X^3$ each independently represent a halogen atom, and each of $X^2$ and $X^3$, if present in a plural number, is respectively independent;
m represents an integer of 0 to 2, n represents an integer of 0 to 3, l represents an integer of 0 to 3, and (m + n+ l) is 3; and
a represents an integer of 0 to 2, b represents an integer of 0 to 3, c represents an integer of 0 to 3, and (a + b + c) is 3.

**10.** The hydrogenated conjugated diene-based polymer according to any one of claims 1 to 9, wherein a ratio of a component having a molecular weight of 300,000 or less (component LM) is 20% or more and 80% or less.

**11.** The hydrogenated conjugated diene-based polymer according to any one of claims 1 to 10, wherein the hydrogenation rate is 50% or more and 75% or less.

**12.** A method for producing a hydrogenated conjugated diene-based polymer comprising the following steps (A) and (E), and at least one of the following steps (B) and (D),
a hydrogenated conjugated diene-based polymer obtained in the step (E) having a branch number (Bn) measured by viscosity detector-equipped GPC-light scattering measurement of 2.5 or more, and a hydrogenation rate of a structural unit derived from a conjugated diene compound of 30% or more and less than 99%, the method comprising:

a step (A) of polymerizing only a conjugated diene compound, or a conjugated diene compound and an aromatic vinyl compound to obtain conjugated diene-based polymer;
a step (B) of reacting an end of the conjugated diene-based polymer with a branching agent to obtain a conjugated diene-based polymer solution containing a branched conjugated diene-based polymer having an active end;
a step (D) of reacting the end of the conjugated diene-based polymer with a coupling agent; and
a step (E) of hydrogenating the conjugated diene-based polymer to obtain a hydrogenated conjugated diene-based polymer.

**13.** The method for producing a hydrogenated conjugated diene-based polymer according to claim 12, comprising the step (D).

**14.** A hydrogenated conjugated diene-based polymer composition, comprising 100 parts by mass of the hydrogenated conjugated diene-based polymer according to any one of claims 1 to 11, and 1 to 60 parts by mass of a rubber softener.

**15.** A rubber composition comprising a rubber component, and 5.0 parts by mass or more and 150 parts by mass or less of a filler based on 100 parts by mass of the rubber component,
wherein the rubber component contains, based on 100 parts by mass of a total amount of the rubber component, 10 parts by mass or more of the hydrogenated conjugated diene-based polymer according to any one of claims 1 to 11, or the hydrogenated conjugated diene-based polymer composition according to claim 14.

## Patentansprüche

1. Hydriertes Polymer auf Basis von konjugiertem Dien, welches eine Verzweigungszahl (Bn), gemessen durch eine mit einem Viskositätsdetektor ausgestattete GPC-Lichtstreuungsmessung, von 2,5 oder mehr und einen Hydrierungsgrad einer Struktureinheit, die von einer konjugierten Dienverbindung abgeleitet ist, von 30 % oder mehr und weniger als 99 % aufweist.

2. Hydriertes Polymer auf Basis von konjugiertem Dien nach Anspruch 1, welches ein mittels GPC gemessenes gewichtsmittleres Molekulargewicht von 210000 oder mehr und weniger als 3000000 hat.

3. Hydriertes Polymer auf Basis von konjugiertem Dien nach Anspruch 1 oder 2, wobei unter der Annahme, dass die Zusammensetzungsverhältnisse (Mol-%) einer Struktureinheit der folgenden Formel (1), einer Struktureinheit der folgenden Formel (2), einer Struktureinheit der folgenden Formel (3) und einer Struktureinheit der folgenden Formel (4) jeweils a, b, c und d sind, der folgende Ausdruck (S) erfüllt ist:

(1) 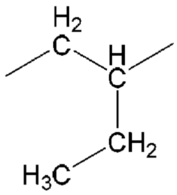

(2) 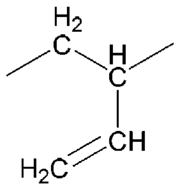

(3) 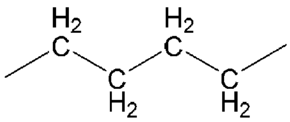

(4) 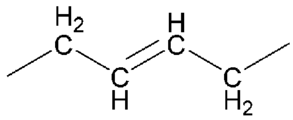

Ausdruck (S): $20 \leq (a + b)/(a + b + c + d) \times 100 \leq 65$.

4. Hydriertes Polymer auf Basis von konjugiertem Dien nach einem der Ansprüche 1 bis 3, wobei unter der Annahme, dass die Zusammensetzungsverhältnisse (Mol-%) einer Struktureinheit der folgenden Formel (1) und einer Struktureinheit der folgenden Formel (2) jeweils a und b sind, der folgende Ausdruck (T) erfüllt ist:

(1) 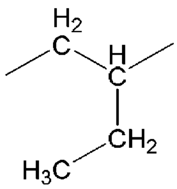

(2) 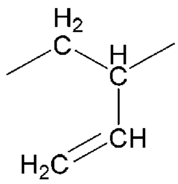

Ausdruck (T): $90 \leq (a)/(a + b) \times 100 \leq 100$

5. Hydriertes Polymer auf Basis von konjugiertem Dien nach einem der Ansprüche 1 bis 4, welches 3 Massen-% oder mehr und weniger als 60 Massen-% eines aromatischen Vinylmonomers enthält.

6. Hydriertes Polymer auf Basis von konjugiertem Dien nach einem der Ansprüche 1 bis 5, wobei der Modifikationsgrad 60 Massen-% oder mehr ist.

7. Hydriertes Polymer auf Basis von konjugiertem Dien nach einem der Ansprüche 1 bis 6, wobei die Zweigzahl (Bn), gemessen durch eine mit einem Viskositätsdetektor ausgestattete GPC-Lichtstreuungsmessung, 8,0 oder mehr beträgt.

8. Hydriertes Polymer auf Basis von konjugiertem Dien nach einem der Ansprüche 1 bis 7, das eine sternförmige Polymerstruktur mit 3 oder mehr Zweigen aufweist,

umfassend, in einer verzweigten/abgezweigten Kette mindestens einer Sternstruktur, einen Abschnitt, der von einem Monomer auf Vinylbasis, das eine Alkoxysilylgruppe oder eine Halogensilylgruppe enthält, abgeleitet ist, und

weiterhin umfassend eine Hauptkettenzweigstruktur in dem von einem Monomer auf Vinylbasis, das eine Alkoxysilylgruppe oder eine Halogensilylgruppe enthält, abgeleiteten Abschnitt.

**9.** Hydriertes Polymer auf Basis von konjugiertem Dien nach Anspruch 8,

wobei der von einem Monomer auf Vinylbasis, das eine Alkoxysilylgruppe oder eine Halogensilylgruppe enthält, abgeleitete Abschnitt eine Monomereinheit ist, die auf einer Verbindung der folgenden Formel (5) oder (6) basiert, das hydrierte Polymer auf Basis von konjugiertem Dien einen Verzweigungspunkt einer Polymerkette, die durch die Monomereinheit auf Basis der folgenden Formel (5) oder (6) dargestellten Verbindung gebildet wird, enthält, und

mindestens ein Ende des hydrierten Polymers auf Basis von konjugiertem Dien mit einem Kupplungsmittel gekuppelt ist,

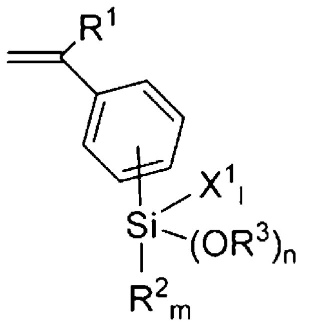

(5)

worin $R^1$ ein Wasserstoffatom, eine Alkylgruppe mit 1 bis 20 Kohlenstoffatomen oder eine Arylgruppe mit 6 bis 20 Kohlenstoffatomen darstellt und in einem Teil davon eine Zweigstruktur aufweisen kann;

$R^2$ und $R^3$ jeweils unabhängig eine Alkylgruppe mit 1 bis 20 Kohlenstoffatomen oder eine Arylgruppe mit 6 bis 20 Kohlenstoffatomen darstellen und in einem Teil davon eine Zweigstruktur aufweisen können;

jedes von $R^1$ bis $R^3$, wenn mehrfach vorhanden, jeweils unabhängig ist;

$X^1$ ein Halogenatom darstellt und, wenn mehrfach vorhanden, jedes $X^1$ jeweils unabhängig ist;

m eine ganze Zahl von 0 bis 2 darstellt, n eine ganze Zahl von 0 bis 3 darstellt, I eine ganze Zahl von 0 bis 3 darstellt, und (m + n + 1) 3 ist:

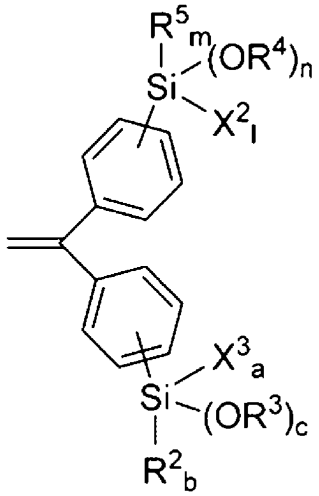

(6)

worin $R^2$ bis $R^5$ jeweils unabhängig eine Alkylgruppe mit 1 bis 20 Kohlenstoffatomen oder eine Arylgruppe mit 6 bis 20 Kohlenstoffatomen darstellen und in einem Teil davon eine Zweigstruktur aufweisen können;

jedes von $R^2$ bis $R^5$, wenn mehrfach vorhanden, jeweils unabhängig ist;

$X^2$ und $X^3$ jeweils unabhängig ein Halogenatom darstellen und jedes von $X^2$ und $X^3$, wenn mehrfach vorhanden, jeweils unabhängig ist;

m eine ganze Zahl von 0 bis 2 darstellt, n eine ganze Zahl von 0 bis 3 darstellt, I eine ganze Zahl von 0 bis 3 darstellt, und (m + n+ I) 3 ist; und
a eine ganze Zahl von 0 bis 2 darstellt, b eine ganze Zahl von 0 bis 3 darstellt, c eine ganze Zahl von 0 bis 3 darstellt, und (a + b + c) 3 ist.

**10.** Hydriertes Polymer auf Basis von konjugiertem Dien nach einem der Ansprüche 1 bis 9, wobei der Anteil einer Komponente mit einem Molekulargewicht von 300000 oder weniger (Komponente LM) 20 % oder mehr und 80 % oder weniger beträgt.

**11.** Hydriertes Polymer auf Basis von konjugiertem Dien nach einem der Ansprüche 1 bis 10, wobei der Hydrierungsgrad 50 % oder mehr und 75 % oder weniger ist.

**12.** Verfahren zur Herstellung eines hydrierten Polymers auf Basis von konjugiertem Dien, welches die folgenden Schritte (A) und (E) und mindestens einen der folgenden Schritte (B) und (D) beinhaltet,
wobei ein hydriertes Polymer auf Basis von konjugiertem Dien, das in Schritt (E) erhalten wird, eine Zweigzahl (Bn), gemessen durch eine mit einem Viskositätsdetektor ausgestattete GPC-Lichtstreuungsmessung, von 2,5 oder mehr und einen Hydrierungsgrad einer Struktureinheit, die von einer konjugierten Dienverbindung abgeleitet ist, von 30 % oder mehr und weniger als 99 % aufweist, wobei das Verfahren beinhaltet:

einen Schritt (A), bei dem nur eine konjugierte Dienverbindung oder eine konjugierte Dienverbindung und eine aromatischen Vinylverbindung polymerisiert werden, um ein Polymer auf Basis von konjugiertem Dien zu erhalten;
einen Schritt (B) des Umsetzens eines Endes des Polymers auf Basis von konjugiertem Dien mit einem Verzweigungsmittel, um eine Lösung von Polymer auf Basis von konjugiertem Dien zu erhalten, die ein verzweigtes Polymer auf Basis von konjugiertem Dien mit einem aktiven Ende enthält;
einen Schritt (D), bei dem das Ende des Polymers auf Basis von konjugiertem Dien mit einem Kupplungsmittel umgesetzt wird; und
einen Schritt (E), bei dem das Polymers auf Basis von konjugiertem Dien hydriert wird, um ein hydriertes Polymer auf Basis von konjugiertem Dien zu erhalten.

**13.** Verfahren zur Herstellung eines hydrierten Polymers auf Basis von konjugiertem Dien nach Anspruch 12, welches den Schritt (D) beinhaltet.

**14.** Zusammensetzung von hydriertem Polymer auf Basis von konjugiertem Dien, umfassend 100 Massenteile des hydrierten Polymers auf Basis von konjugiertem Dien nach einem der Ansprüche 1 bis 11 und 1 bis 60 Massenteile eines Kautschukweichmachers.

**15.** Kautschukzusammensetzung, umfassend eine Kautschukkomponente und 5,0 Massenteile oder mehr und 150 Massenteile oder weniger eines Füllstoffs, bezogen auf 100 Massenteile der Kautschukkomponente,
wobei die Kautschukkomponente, bezogen auf 100 Massenteile der Gesamtmenge der Kautschukkomponente, 10 Massenteile oder mehr des hydrierten Polymers auf Basis von konjugiertem Dien nach einem der Ansprüche 1 bis 11 oder der Zusammensetzung von hydriertem Polymer auf Basis von konjugiertem Dien nach Anspruch 14 enthält.

## Revendications

**1.** Polymère à base de diène conjugué hydrogéné, présentant un degré de ramification (Bn) mesuré par mesure CPG équipée d'un viscosimètre-diffusion de la lumière de 2,5 ou plus, et un taux d'hydrogénation d'un motif structural dérivé d'un composé de diène conjugué de 30 % ou plus et de moins de 99 %.

**2.** Polymère à base de diène conjugué hydrogéné selon la revendication 1, présentant un poids moléculaire moyen en poids mesuré par GPC de 210 000 ou plus et de moins de 3 000 000.

**3.** Polymère à base de diène conjugué hydrogéné selon la revendication 1 ou 2, dans lequel en supposant que les rapports compositionnels (% en moles) d'un motif structural représenté par la formule (1) suivante, d'un motif structural représenté par la formule (2) suivante, d'un motif structural représenté par la formule (3) suivante, et d'un motif structural représenté par la formule (4) suivante sont a, b, c et d, respectivement, l'expression (S) suivante est satisfaite :

(1) 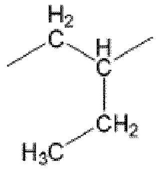 (2) 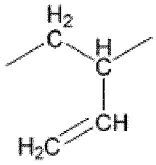

(3) 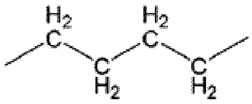 (4) 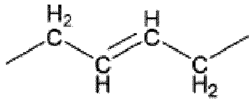

$$\text{Expression (S)}: 20 \leq (a + b)/(a + b + c + d) \times 100 \leq 65$$

**4.** Polymère à base de diène conjugué hydrogéné selon l'une quelconque des revendications 1 à 3, dans lequel en supposant que les rapports compositionnels (% en moles) d'un motif structural représenté par la formule (1) suivante et d'un motif structural représenté par la formule (2) suivante sont a et b, respectivement, l'expression (T) suivante est satisfaite :

(1) 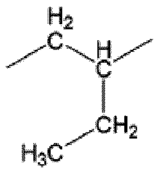 (2) 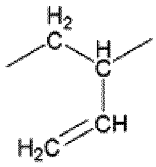

$$\text{Expression (T)}: 90 \leq (a)/(a + b) \times 100 \leq 100$$

**5.** Polymère à base de diène conjugué hydrogéné selon l'une quelconque des revendications 1 à 4, comprenant 3 % en masse ou plus et moins de 60 % en masse d'un monomère vinylique aromatique.

**6.** Polymère à base de diène conjugué hydrogéné selon l'une quelconque des revendications 1 à 5, dans lequel le rapport de modification est de 60 % en masse ou plus.

**7.** Polymère à base de diène conjugué hydrogéné selon l'une quelconque des revendications 1 à 6, dans lequel le degré de ramification (Bn) mesuré par mesure CPG équipée d'un viscosimètre-diffusion de la lumière est de 8,0 ou plus.

**8.** Polymère à base de diène conjugué hydrogéné selon l'une quelconque des revendications 1 à 7, comprenant une structure polymère étoilée présentant 3 ramifications ou plus,

comprenant, dans une chaîne ramifiée d'au moins une structure étoilée, une partie dérivée d'un monomère à base de vinyle contenant un groupe alcoxysilyle ou un groupe halogénosilyle, et
comprenant en outre une structure ramifiée à chaîne principale dans la partie dérivée d'un monomère à base de vinyle contenant un groupe alcoxysilyle ou un groupe halogénosilyle.

**9.** Polymère à base de diène conjugué hydrogéné selon la revendication 8,

dans lequel la partie dérivée d'un monomère à base de vinyle contenant un groupe alcoxysilyle ou un groupe halogénosilyle est un motif monomère basé sur un composé représenté par la formule (5) ou (6) suivante,
le polymère à base de diène conjugué hydrogéné comprend un point de ramification d'une chaîne polymère formée par le motif monomère sur la base du composé représenté par la formule (5) ou (6) suivante, et
au moins une extrémité du polymère à base de diène conjugué hydrogéné est couplée à un agent de couplage.

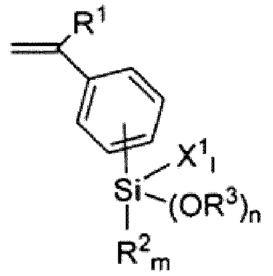

(5)

dans lequel $R^1$ représente un atome d'hydrogène, un groupe alkyle présentant 1 à 20 atomes de carbone, ou un groupe aryle présentant 6 à 20 atomes de carbone, et peut présenter une structure ramifiée dans une partie de celui-ci ;

$R^2$ et $R^3$ représentent chacun indépendamment un groupe alkyle présentant 1 à 20 atomes de carbone, ou un groupe aryle présentant 6 à 20 atomes de carbone, et peuvent présenter une structure ramifiée dans une partie de ceux-ci ;

chacun de $R^1$ à $R^3$, le cas échéant en un nombre pluriel, est respectivement indépendant ;

$X^1$ représente un atome d'halogène, et le cas échéant en un nombre pluriel, chaque $X^1$ est respectivement indépendant ;

m représente un nombre entier de 0 à 2, n représente un nombre entier de 0 à 3, l représente un nombre entier de 0 à 3, et (m + n + 1) vaut 3 :

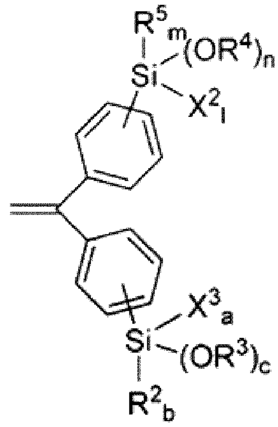

(6)

dans lequel $R^2$ à $R^5$ représentent chacun indépendamment un groupe alkyle présentant 1 à 20 atomes de carbone, ou un groupe aryle présentant 6 à 20 atomes de carbone, et peuvent présenter une structure ramifiée dans une partie de ceux-ci ;

chacun de $R^2$ à $R^5$, le cas échéant en un nombre pluriel, est respectivement indépendant ;

$X^2$ et $X^3$ représentent chacun indépendamment un atome d'halogène, et chacun de $X^2$ et $X^3$, le cas échéant en un nombre pluriel, est respectivement indépendant ;

m représente un nombre entier de 0 à 2, n représente un nombre entier de 0 à 3, l représente un nombre entier de 0 à 3, et (m + n + 1) vaut 3 ; et

a représente un nombre entier de 0 à 2, b représente un nombre entier de 0 à 3, c représente un nombre entier de 0 à 3, et (a + b + c) vaut 3.

**10.** Polymère à base de diène conjugué hydrogéné selon l'une quelconque des revendications 1 à 9, dans lequel un rapport d'un composant présentant un poids moléculaire de 300 000 ou moins (composant LM) est de 20 % ou plus et de 80 % ou moins.

**11.** Polymère à base de diène conjugué hydrogéné selon l'une quelconque des revendications 1 à 10, dans lequel le taux d'hydrogénation est de 50 % ou plus et de 75 % ou moins.

**12.** Procédé de production d'un polymère à base de diène conjugué hydrogéné comprenant les étapes (A) et (E) suivantes, et au moins l'une des étapes (B) et (D) suivantes,

un polymère à base de diène conjugué hydrogéné obtenu dans l'étape (E) présentant un degré de ramification (Bn)

mesuré par mesure CPG équipée d'un viscosimètre-diffusion de la lumière de 2,5 ou plus, et un taux d'hydrogénation d'un motif structural dérivé d'un composé de diène conjugué de 30 % ou plus et de moins de 99 %, le procédé comprenant :

une étape (A) de polymérisation seulement d'un composé de diène conjugué, ou d'un composé de diène conjugué et d'un composé vinylique aromatique pour obtenir un polymère à base de diène conjugué ;
une étape (B) de réaction d'une extrémité du polymère à base de diène conjugué avec un agent de ramification pour obtenir une solution de polymère à base de diène conjugué contenant un polymère à base de diène conjugué ramifié présentant une extrémité active ;
une étape (D) de réaction de l'extrémité du polymère à base de diène conjugué avec un agent de couplage ; et
une étape (E) d'hydrogénation du polymère à base de diène conjugué pour obtenir un polymère à base de diène conjugué hydrogéné.

**13.** Procédé de production d'un polymère à base de diène conjugué hydrogéné selon la revendication 12, comprenant l'étape (D).

**14.** Composition de polymère à base de diène conjugué hydrogéné, comprenant 100 parties en masse du polymère à base de diène conjugué hydrogéné selon l'une quelconque des revendications 1 à 11, et 1 à 60 parties en masse d'un plastifiant de caoutchouc.

**15.** Composition de caoutchouc comprenant un composant de caoutchouc, et 5,0 parties en masse ou plus et 150 parties en masse ou moins d'une charge sur la base de 100 parties en masse du composant de caoutchouc,
dans laquelle le composant de caoutchouc contient, sur la base de 100 parties en masse d'une quantité totale du composant de caoutchouc, 10 parties en masse ou plus du polymère à base de diène conjugué hydrogéné selon l'une quelconque des revendications 1 à 11, ou de la composition de polymère à base de diène conjugué hydrogéné selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005290355 A
- JP 11189616 A
- JP 2003171418 A
- EP 3502144 A1
- WO 2018034194 A1
- EP 3502145 A1
- JP 2011089086 A
- JP 59140211 A

### Non-patent literature cited in the description

- **R. R. HAMPTON**. *Analytical Chemistry*, 1949, vol. 21, 923
- **I. M. KOLTHOFF et al.** *J. Polym. Sci.*, 1946, vol. 1, 429
- **TANAKA et al.** *Polymer*, 1981, vol. 22, 1721
- *Kautschuk Gummi Kunststoffe*, 1999, vol. 52 (12), 799